# EUROPÄISCHE PATENTSCHRIFT

(11) **EP 3 750 231 B1**
(45) Veröffentlichungstag und Bekanntmachung des Hinweises auf die Patenterteilung: **07.08.2024**
(21) Anmeldenummer: 19714310.0
(22) Anmeldetag: 20.02.2019
(51) Int. Cl.: H02K 15/00

(54) **VORRICHTUNG UND VERFAHREN ZUM UMFORMEN VON DRAHTENDEN IN UMFANGSRICHTUNG**
DEVICE AND METHOD FOR SHAPING WIRE ENDS IN A CIRCUMFERENTIAL DIRECTION
DISPOSITIF ET PROCÉDÉ POUR MODIFIER LA FORME DE PIÈCES DANS LA DIRECTION PÉRIPHÉRIQUE

(30) Priorität: 21.02.2018 DE 102018103929
(43) Veröffentlichungstag der Anmeldung: 16.12.2020
(73) Patentinhaber: Grob-Werke GmbH & Co. KG, 87719 Mindelheim (DE)
(72) Erfinder: BINDER, Johannes, 87719 Mindelheim (DE); RAUSCHER, Ralf, 87748 Fellheim (DE)
(74) Vertreter: KASTEL Patentanwälte PartG mbB
(86) Internationale Anmeldenummer: PCT/DE2019/100162
(87) Internationale Veröffentlichungsnummer: WO 2019/161846

(56) Entgegenhaltungen:
- EP-A2- 1 324 461
- US-A1- 2009 302 705

## Beschreibung

Die Erfindung betrifft eine Drahtendenumformvorrichtung zur Verwendung bei einer Herstellung eines mit Spulen versehenen Bauteils einer elektrischen Maschine, zum Umformen von aus einem ringförmigen Gehäuse des Bauteils vorstehenden Drahtenden. Weiter betrifft die Erfindung eine Bauteilherstellvorrichtung zum Herstellen eines mit Spulen versehenen Bauteils einer elektrischen Maschine, umfassend eine derartige Drahtendenumformvorrichtung. Schließlich betrifft die Erfindung ein mit einer derartigen Drahtendenumformvorrichtung bzw. Bauteilherstellvorrichtung durchführbares Drahtendenumformverfahren zum Umformen von aus einem ringförmigen Gehäuse vorstehenden Drahtenden im Zuge einer Herstellung eines mit Spulen versehenen Bauteils einer elektrischen Maschine.

Unter elektrischen Maschinen werden insbesondere Maschinen zum Umwandeln elektrischer Energie in Bewegungsenergie und Maschinen zum Umwandeln von Bewegungsenergie in elektrische Energie verstanden. Insbesondere sind darunter Elektromotoren und Generatoren zu verstehen.

Bei der Herstellung von Maschinenelementen derartiger elektrischer Maschinen, wie beispielsweise Statoren oder Rotoren, ist es oft erforderlich, Enden von aus Drähten gebildeten Leitern miteinander zu verbinden oder sonstwie gemeinsam zu verarbeiten, wie z.B. gemeinsam zu schneiden oder zu formen.

Zum Beispiel gibt es Elektromotoren, bei denen Spulenwicklungen, insbesondere des Stators, aus unterschiedlichen Drahtstücken gebildet werden, deren Enden dann miteinander verbunden werden. Es sind bereits Vorrichtungen und Verfahren zum Verbinden von Drahtenden von Hairpins zum Bilden von Statorwicklungen von elektrischen Maschinen vorgeschlagen worden, bei denen die Drahtenden miteinander verschweißt werden. Hierbei sind Vorrichtungen und Verfahren zum Positionieren und Verspannen der Drahtenden vor dem Verschweißen vorgesehen.

Um die Drahtenden korrekt verschweißen zu können, ist es vorteilhaft, vorher die aus den einzelnen Nuten des Gehäuses des Bauteils, zum Beispiel nach dem Einfügen von Hairpins oder dergleichen, vorstehenden Drahtenden zunächst umzuformen, insbesondere zu weiten und zu verschränken, z.B. um so miteinander zu verbindende Drahtendenpaare zu bilden.

Eine Drahtendenumformvorrichtung zum Verformen von aus einem Gehäuse eines Bauteils einer elektrischen Maschine vorstehenden Drahtenden in Umfangsrichtung ist beispielsweise aus der US 6 519 993 B2 sowie der der US2009/0302705 A1 bekannt.

Die Erfindung hat sich zur Aufgabe gestellt, Vorrichtungen und Verfahren zur Verfügung zu stellen, mit denen das Drahtumformen zuverlässiger als bisher bekannt erfolgen kann.

Zum Lösen dieser Aufgabe schafft die Erfindung eine Drahtendenumformvorrichtung nach Anspruch 1. Ein mit der Drahtendenumformvorrichtung durchführbares Drahtendenumformverfahren sowie ein entsprechendes Computerprogrammprodukt sind Gegenstand der Nebenansprüche.

Vorteilhafte Ausgestaltungen sind Gegenstand der Unteransprüche.

Die Erfindung schafft gemäß einem ersten Aspekt davon eine Drahtendenumformvorrichtung nach Anspruch 1.

Bei Ausgestaltungen der Erfindung sind die unterschiedlichen Bewegungsprofile reine Drehbewegungsprofile. Die Bewegungsprofile beinhalten insbesondere reine Drehbewegungen, wobei als Bewegungsparameter eines oder mehrere der Parameter Drehrichtungen, Drehgeschwindigkeiten, Drehbeschleunigungen (im positiven oder negativen Bereich), Startpunkte, Zeiträume von Ruhe oder Bewegung, Endpunkte abhängig von der jeweiligen Biegesituation über der Zeit oder der axialen Relativstrecke unterschiedlich eingestellt sein können.

Es ist bevorzugt, dass die erste Aufnahme- und Dreheinheit zum Aufnehmen und Verdrehen von länger hervorstehenden ersten Drahtenden und die zweite Aufnahme- und Dreheinheit zum Aufnehmen und Verdrehen von kürzer hervorstehenden zweiten Drahtenden ausgebildet ist und dass das erste Bewegungsprofil einen früheren Start der Drehbewegung als das zweite Bewegungsprofil beinhaltet.

Es ist bevorzugt, dass die Biegevorrichtung eine dritte Aufnahme- und Dreheinrichtung mit einer dritten Aufnahme- und Dreheinheit zum Aufnehmen von dritten relativ zu den ersten und zweiten Drahtenden radial versetzten dritten Drahtenden und zum Verdrehen der dritten Drahtenden zwecks Verbiegen in Umfangsrichtung und ein drittes Antriebselement zum Antreiben der dritten Aufnahme- und Dreheinheit aufweist, wobei die Steuereinheit ausgebildet ist, das dritte Antriebselement mit einem gegenüber dem ersten und zweiten Bewegungsprofil unterschiedlichen dritten Bewegungsprofil in Abhängigkeit von der Relativbewegung zwischen der Biegevorrichtung und dem Gehäuse anzutreiben.

Es ist bevorzugt, dass die Biegevorrichtung eine vierte Aufnahme- und Dreheinrichtung mit einer vierten Aufnahme- und Dreheinheit zum Aufnehmen von vierten relativ zu den ersten bis dritten Drahtenden radial versetzten vierten Drahtenden und zum Verdrehen der vierten Drahtenden zwecks Verbiegen in Umfangsrichtung und ein viertes Antriebselement zum Antreiben der vierten Aufnahme- und Dreheinheit aufweist, wobei die Steuereinheit ausgebildet ist, das vierte Antriebselement mit einem gegenüber dem ersten bis dritten Bewegungsprofil unterschiedlichen vierten Bewegungsprofil in Abhängigkeit von der Relativbewegung zwischen der Biegevorrichtung und dem Gehäuse anzutreiben.

Selbstverständlich kann auch noch eine größere Anzahl von Aufnahme- und Dreheinrichtungen vorgesehen sein mit jeweils einer nach einem eigenen Bewegungsprofil drehbaren Aufnahme- und Dreheinheit. Vorzugsweise entspricht die Anzahl der Aufnahme- und Dreheinrichtungen der Anzahl der pro Nut des Gehäuses vorstehenden Drahtenden.

Es ist bevorzugt, dass die Steuereinheit ausgebildet ist, die Relativbewegungsvorrichtung zum Durchführen der axialen Relativbewegung mit gleichmäßiger Geschwindigkeit anzusteuern und die Antriebselemente derart anzusteuern, dass wenigstens eines, mehrere oder alle der Bewegungsprofile eine Drehbewegung mit sich verändernder Drehgeschwindigkeit bewirken.

Es ist bevorzugt, dass die Steuereinheit ausgebildet ist, die Relativbewegungsvorrichtung zum Durchführen der axialen Relativbewegung mit gleichmäßiger Geschwindigkeit anzusteuern und die Antriebselemente derart anzusteuern, dass wenigstens eines, mehrere oder alle der Bewegungsprofile eine Drehbewegung mit sich allmählich oder gleichmäßig ändernder Drehgeschwindigkeit bewirken.

Es ist bevorzugt, dass die Steuereinheit ausgebildet ist, die Relativbewegungsvorrichtung zum Durchführen der axialen Relativbewegung mit gleichmäßiger Geschwindigkeit anzusteuern und die Antriebselemente derart anzusteuern, dass wenigstens eines, mehrere oder alle der Bewegungsprofile eine Drehbewegung mit sich stetig und/oder in zunehmenden oder abnehmenden Maße vergrößernder oder verkleinernder Drehgeschwindigkeit bewirken.

Es ist bevorzugt, dass die Steuereinheit ausgebildet ist, die Relativbewegungsvorrichtung zum Durchführen der axialen Relativbewegung mit gleichmäßiger Geschwindigkeit anzusteuern und die Antriebselemente derart anzusteuern, dass wenigstens eines, mehrere oder alle der Bewegungsprofile eine Drehbewegung mit an unterschiedliche Längen der jeweils aufzunehmenden Drahtenden angepassten Bewegungsparametern bewirken.

Es ist bevorzugt, dass die Aufnahme- und Dreheinheiten jeweils durch eine Schränkkrone gebildet werden oder eine solche aufweisen.

Es ist bevorzugt, dass sich an den Aufnahme- und Dreheinheiten ausgebildete Biegekanten alle im Wesentlichen in einer gleichen sich in Radial- und Umfangsrichtung erstreckenden Ebene befinden.

Es ist bevorzugt, dass die Drahtendenumformvorrichtung eine zwischen dem Gehäuse und der Biegevorrichtung anordenbare Klemmvorrichtung zum Festhalten der Drahtenden an dem Gehäuse während des Verbiegens durch die Biegevorrichtung umfasst.

Es ist bevorzugt, dass die Klemmvorrichtung eine an dem Gehäuse oder ortsfest fixierbare erste Klemmeinrichtung und eine zweite Klemmeinrichtung aufweist, die relativ zu der ersten Klemmeinrichtung bewegbar ist, um Drahtenden zwischen der ersten Klemmeinrichtung und der zweiten Klemmeinrichtung zu verklemmen.

Es ist bevorzugt, dass die Klemmvorrichtung an einer relativ zu der Biegevorrichtung relativ drehbaren und/oder axial bewegbaren Gehäusehalterung angeordnet ist.

Es ist bevorzugt, dass die Klemmvorrichtung abgerundete und/oder gefaste Biegeformen oder abgerundete und/oder gefaste Biegekanten zum Anliegen und Formen der Drahtenden beim Verbiegen aufweist.

Es ist bevorzugt, dass die Klemmvorrichtung eine an dem Gehäuse oder ortsfest fixierbare erste Klemmeinrichtung und eine zweite Klemmeinrichtung aufweist, die relativ zu der ersten Klemmeinrichtung bewegbar ist, um Drahtenden zwischen der ersten Klemmeinrichtung und der zweiten Klemmeinrichtung zu verklemmen.

Es ist bevorzugt, dass die erste Klemmeinrichtung scheibenförmig und/oder ringförmig ausgebildet ist.

Es ist bevorzugt, dass die erste Klemmeinrichtung zum Abstützen an zwischen Nuten des Gehäuses angeordneten Innenwandbereichen des Gehäuses ausgebildet ist. In diesen Nuten können die Drahtenden aufweisende Drahtsegmente angeordnet werden.

Es ist bevorzugt, dass die erste Klemmeinrichtung mehrere zum Fixieren an Innenwandbereichen des Gehäuses, die zwischen Nuten des Gehäuses angeordnet sind, in denen die Drahtenden aufweisende Drahtsegmente anordenbar sind, radial bewegbare Segmente aufweist.

Es ist bevorzugt, dass die erste Klemmeinrichtung radial bewegbare Segmente und ein axial bewegbares Antriebselement zum gemeinsamen Antreiben der Radialbewegung der Segmente über eine konische Steuerfläche aufweist.

Es ist bevorzugt, dass die erste Klemmeinrichtung einen ersten Klemmbereich zum Anliegen an radial inneren Seiten von radial innen angeordneten Drahtenden der aus den Nuten des Gehäuses herausragenden Drahtenden aufweist.

Es ist bevorzugt, dass die Klemmvorrichtung eine Anzahl von radial bewegbaren Klemmfingern zum Festklemmen der Drahtenden aufweist.

Es ist bevorzugt, dass die Klemmfinger an der zweiten Klemmeinrichtung ausgebildet sind.

Es ist bevorzugt, dass die Klemmfinger an der zweiten Klemmeinrichtung ausgebildet sind und dazu ausgebildet sind, die Drahtenden an der ersten Klemmeinrichtung zu verklemmen.

Es ist bevorzugt, dass die Klemmfinger an der zweiten Klemmeinrichtung ausgebildet sind und jeweils ein Eingreifende zum Eingreifen in eine entsprechende komplementäre Aussparung an der ersten Klemmeinrichtung aufweisen. Vorzugsweise ist das Eingreifende mit derartigem Spiel in der Aussparung aufgenommen, dass ein leichtes Einführen und Ausführen der Klemmfinger in Radialrichtung ermöglicht ist. Vorzugsweise sind die jeweiligen Eingreifenden im in die Aussparung eingefahrenem Zustand an der Aussparung abstützbar, um die Klemmfinger gegen eine Verlagerung in Axialrichtung und/oder Umfangsrichtung abzustützen.

Es ist bevorzugt, dass die Klemmvorrichtung abgerundete Biegeformen zur Formgebung an den Drahtenden während des Verbiegens aufweisen. Vorzugsweise weist die Klemmvorrichtung eine Gruppe von ersten abgerundeten Biegeformen zur Formgebung während eines Verbiegens von Drahtenden in einer radialen Richtung und eine Gruppe von zweiten abgerundeten Biegeformen zur Formgebung während eines Verbiegens der Drahtenden in Umfangsrichtung auf.

Vorzugsweise sind die Biegeformen als abgerundete Biegekanten ausgebildet.

Es ist bevorzugt, dass an jedem der Klemmfinger wenigstens eine der Biegeformen ausgebildet ist. Vorzugsweise sind an jedem Klemmfinger wenigstens eine erste Biegeform zur Formgebung während eines Verbiegens der Drahtenden in der radialen Richtung und wenigstens eine zweite Biegeform zur Formgebung während des Verbiegens in Umfangsrichtung vorgesehen. Vorzugsweise sind die erste und die zweite Biegeform an über Eck aneinander anliegenden Kanten, insbesondere Kanten einer Stufe oder Aufnahmenut an dem Klemmfinger für die Drahtenden, ausgebildet.

Es ist bevorzugt, dass die Klemmfinger in einer Anzahl ausgebildet sind, die der Anzahl der Gruppen von miteinander zu verklemmenden Drahtenden entspricht.

Es ist bevorzugt, dass die Klemmfinger in einer Anzahl ausgebildet sind, die der Anzahl von Nuten des Gehäuses des herzustellenden Bauteils entspricht.

Es ist bevorzugt, dass die Klemmfinger jeweils zum gemeinsamen Klemmen aller gemeinsam aus der zugeordneten Nut des Gehäuses herausragenden Drahtenden ausgebildet sind.

Es ist bevorzugt, dass die Klemmfinger an einem Haltering gemeinsam oder synchron angetrieben radial verschiebbar geführt sind.

Es ist bevorzugt, dass die Klemmfinger jeweils einen an einer Stufe ausgebildeten zweiten Klemmbereich zum Anliegen an einer radial äußeren Seite des radial äußeren Drahtendes der aus der zugeordneten Nut des Gehäuses herausragenden Drahtenden aufweist.

Es ist bevorzugt, dass die Klemmfinger jeweils an dem freien Ende eine konisch zulaufende Spitze aufweisen.

Es ist bevorzugt, dass die Klemmfinger an ihren freien Enden eine Stufe derart aufweisen, dass zwischen benachbarten in Klemmstellung befindlichen Klemmfingern eine Aufnahmenut für zwei, drei, vier, fünf, sechs oder mehr gemeinsam aus der zugeordneten Nut des Gehäuses herausragenden Drahtenden gebildet wird.

Es ist bevorzugt, dass die Aufnahmenut an einer im Wesentlichen in Radialrichtung verlaufenden Seite und an einer im Wesentlichen in Umfangsrichtung verlaufenden Seite von dem einen Klemmfinger und an einer anderen im Wesentlichen in Radialrichtung verlaufenden Seite von dem anderen Klemmfinger begrenzt ist und an einer anderen im Wesentlichen in Umfangsrichtung verlaufenden Seite offen ist.

Es ist bevorzugt, dass die Biegevorrichtung wenigstens eine Radialabstützeinrichtung zum radialen Abstützen von Drahtenden während des Umformens aufweist.

Es ist bevorzugt, dass die Biegevorrichtung eine innere Radialabstützeinrichtung zum radialen Abstützen von Drahtenden auf einer radial inneren Seite aufweist.

Es ist bevorzugt, dass die Biegevorrichtung eine äußere Radialabstützeinrichtung zum radialen Abstützen von Drahtenden auf einer radial äußeren Seite aufweist.

Es ist bevorzugt, dass die wenigstens eine Radialabstützeinrichtung als Hülse ausgebildet ist.

Es ist bevorzugt, dass die wenigstens eine Radialabstützeinrichtung oder wenigstens eine oder mehrere von mehreren Radialabstützeinrichtungen axial beweglich ist.

Es ist bevorzugt, dass die wenigstens eine Radialabstützeinrichtung einen nachgiebigen Abstützbereich aufweist.

Es ist bevorzugt, dass die wenigstens eine Radialabstützeinrichtung derart beweglich ist, dass die Bewegung bei Erreichen eines Anschlags stoppt.

Es ist bevorzugt, dass die Steuerung derart ausgebildet ist, dass sie die wenigstens eine Radialabstützeinrichtung derart ansteuert, dass die wenigstens eine Radialabstützeinrichtung axial vor dem Umformen der Drahtenden aus einer Rückzugposition in eine Abstützposition ausfährt und nach dem Umformen der Drahtenden aus der Abstützposition in die Rückzugposition axial zurückfährt.

Gemäß einem weiteren Aspekt schafft die Erfindung eine Bauteilherstellvorrichtung zum Herstellen eines mit Spulen versehenen Bauteils einer elektrischen Maschine, umfassend eine Drahtendenumformvorrichtung nach einer der voranstehenden Ausgestaltungen.

Gemäß einem weiteren Aspekt schafft die Erfindung ein im Zuge der Herstellung eines mit Spulen versehenen Bauteils einer elektrischen Maschine durchführbares und/oder durchzuführendes Drahtendenumformverfahren zum Umformen von aus einem ringförmigen Gehäuse des Bauteils vorstehenden Drahtenden, umfassend die Schritte nach Anspruch 9.

Es ist bevorzugt, dass die axiale Relativbewegung in Schritt d) mit gleichmäßiger Geschwindigkeit und das Drehen in Schritt e) jeweils mit sich verändernder Drehgeschwindigkeit erfolgt.

Es ist bevorzugt, dass in Schritt a) die Biegevorrichtung mit einer dritten Aufnahme- und Dreheinrichtung mit einer dritten Aufnahme- und Dreheinheit zum Aufnehmen von dritten relativ zu den ersten und zweiten Drahtenden radial versetzten dritten Drahtenden und zum Verdrehen der dritten Drahtenden zwecks Verbiegen in Umfangsrichtung bereitgestellt wird, wobei die dritte Aufnahme- und Dreheinheit relativ zu der ersten und zweiten Aufnahme- und Dreheinheit um die Drehachse drehbar aber axial stationär ist oder gehalten wird und in Schritt e) nach dem Einführen von Endbereichen der dritten Drahtenden derart gedreht wird, dass eine Relativbewegung der Endbereiche in der dritten Aufnahme- und Dreheinheit vermieden wird.

Es ist bevorzugt, dass in Schritt a) die Biegevorrichtung mit einer vierten Aufnahme- und Dreheinrichtung mit einer vierten Aufnahme- und Dreheinheit zum Aufnehmen von vierten relativ zu den ersten bis dritten Drahtenden radial versetzten vierten Drahtenden und zum Verdrehen der vierten Drahtenden zwecks Verbiegen in Umfangsrichtung bereitgestellt wird, wobei die vierte Aufnahme- und Dreheinheit relativ zu der ersten bis dritten Aufnahme- und Dreheinheit um die Drehachse drehbar aber axial stationär ist oder gehalten wird und in Schritt e) nach dem Einführen von Endbereichen der vierten Drahtenden derart gedreht wird, dass eine Relativbewegung der Endbereiche in der vierten Aufnahme- und Dreheinheit vermieden wird.

Die ersten und zweiten Drahtenden und gegebenenfalls die dritten und/oder vierten Drahtenden können mit gleicher Länge vorstehen, und die Bewegungsprofile können entsprechend in Abhängigkeit von der gleichen Länge jeweils entsprechend der unterschiedlich durchzuführenden Biegewinkel unterschiedlich ausgestaltet sein. Bei einer anderen Verfahrensweise ist bevorzugt, dass die Drahtenden mit unterschiedlicher Länge vorstehen, insbesondere derart, dass weiter radial außen liegenden Drahtenden zu Beginn eine größere axial vorstehende Länge als weiter radial innen liegende Drahtenden aufweisen. In einen solchen Fall sind die Bewegungsprofile in Abhängigkeit von dem unterschiedlich durchzuführenden Biegewinkel und der unterschiedlichen vorstehenden Länge unterschiedlich ausgestaltet.

Es ist bevorzugt, dass die Drehbewegungen der einzelnen Aufnahme- und Dreheinheiten entsprechend bei einer unterschiedlichen Länge der jeweils zu verbiegenden Drahtenden zu entsprechend unterschiedlichen Zeitpunkten gestartet werden.

Es ist bevorzugt, dass die Drehbewegungen aller Aufnahme- und Dreheinheiten und die Relativbewegung zwischen Gehäuse und Biegevorrichtung zur gleichen Zeit beendet werden.

Eine bevorzugte Ausgestaltung des Drahtendenumformverfahren umfasst den Schritt:
e1) Festklemmen der Drahtenden mittels einer zwischen dem Gehäuse und der Biegevorrichtung angeordneten Klemmvorrichtung während des Umbiegens.

Bevorzugt umfasst Schritt e1) den Schritt:
Fixieren einer ersten Klemmeinrichtung an dem Gehäuse oder ortsfest und Bewegen einer zweiten Klemmeinrichtung relativ zu der ersten Klemmeinrichtung, um die Drahtenden zwischen der ersten und der zweiten Klemmeinrichtung zu verklemmen.

Bevorzugt umfasst Schritt e1) den Schritt:
gemeinsames Verklemmen aller aus einer Nut eines Gehäuses hervorragenden Drahtenden.

Bevorzugt umfasst Schritt e1) den Schritt:
Abstützen einer ersten von mehreren relativ zueinander bewegbaren Klemmeinrichtungen an Innenwandbereichen des Gehäuses, die zwischen Nuten des Gehäuses angeordnet sind.

Bevorzugt umfasst Schritt e1) den Schritt:
radiales Bewegen mehrerer Segmente einer ersten von mehreren relativ zueinander bewegbaren Klemmeinrichtungen zum Fixieren der ersten Klemmeinrichtung an dem Gehäuse und/oder zum Lösen von dem Gehäuse.

Bevorzugt umfasst Schritt e1) den Schritt:
Antreiben einer radialen Bewegung mehrerer Segmente einer ersten von mehreren relativ zueinander bewegbaren Klemmeinrichtungen zum Fixieren der ersten Klemmeinrichtung an dem Gehäuse und/oder zum Lösen von dem Gehäuse mittels eines axial bewegbaren Antriebselements und gemeinsames Übertragen der Axialbewegung auf die Segmente mittels einer Steuerfläche oder einer konischen Fläche.

Bevorzugt umfasst Schritt e1) den Schritt:
Anliegen eines an einer ersten von mehreren radial relativ zueinander bewegbaren Klemmeinrichtungen ausgebildeten ersten Klemmbereichs an radial inneren Seiten von radial innen angeordneten Drahtenden der aus den Nuten des Gehäuses herausragenden Drahtenden.

Bevorzugt umfasst Schritt e1) den Schritt:
radiales Bewegen von entsprechend der Anzahl von Gruppen von miteinander zu verklemmenden Drahtenden und/oder von Nuten in dem Gehäuse vorgesehenen Anzahl von Klemmfingern zum Verklemmen der Drahtenden oder zum Lösen der Klemmung.

Bevorzugt umfasst Schritt e1) den Schritt:
Verklemmen je einer Gruppe der Drahtenden zwischen einer ersten Klemmeinrichtung und jeweils einem radial bewegbaren Klemmfinger einer zweiten Klemmeinrichtung.

Bevorzugt umfasst Schritt e1) den Schritt:
Abstützen von sich in Klemmstellung bewegenden Klemmfingern gegen eine Verlagerung in eine Umfangsrichtung oder in eine axiale Richtung.

Bevorzugt umfasst Schritt e1) den Schritt:
Abstützen von sich in Klemmstellung bewegenden Klemmfingern gegen eine Verlagerung in eine Umfangsrichtung oder in eine axiale Richtung über formschlüssigen Eingriff jedes Klemmfingers in eine oder an einer komplementäre(n) Erfassungseinheit.

Bevorzugt umfasst Schritt e1) den Schritt:
Abstützen von sich in Klemmstellung bewegenden Klemmfingern gegen eine Verlagerung in eine Umfangsrichtung oder in eine axiale Richtung über formschlüssigen Eingriff einer Spitze eines jedes Klemmfingers einer zweiten Klemmeinrichtung in eine entsprechende Spitzenaufnahmenut an einer ersten Klemmeinrichtung.

Bevorzugt umfasst Schritt e1) den Schritt:
Umformen der Drahtenden unter Anlage an an der Klemmvorrichtung angeordneten Biegeformen oder Biegekanten.

Bevorzugt umfasst Schritt e1) den Schritt:
gemeinsames und/oder synchrones Antreiben der radialen Bewegung von Klemmfingern zum Verklemmen der Drahtenden.

Bevorzugt umfasst Schritt e1) den Schritt:
gemeinsames Führen der radialen Bewegung von Klemmfingern an einem Haltering.

Bevorzugt umfasst Schritt e1) den Schritt:
Aufnehmen der zu verklemmenden gemeinsam aus einer Nut des Gehäuses austretenden zwei, drei, vier, fünf, sechs oder mehr Drahtenden in einer Aufnahmenut, die durch benachbarte Klemmfinger an deren freien Enden gebildet wird, wobei die Aufnahmenut an einer im Wesentlichen in Radialrichtung verlaufenden Seite und an einer im Wesentlichen in Umfangsrichtung verlaufenden Seite von dem einen Klemmfinger und an einer anderen im Wesentlichen in Radialrichtung verlaufenden Seite von dem anderen Klemmfinger begrenzt ist und an einer anderen im Wesentlichen in Umfangsrichtung verlaufenden Seite offen ist.

Bevorzugt umfasst Schritt e) den Schritt:
e2)radiales Abstützen wenigstens einiger der Drahtenden auf einer radial inneren Seite und/oder auf einer radial äußeren Seite während des Verbiegens.

Bevorzugt umfasst Schritt e2) die Schritte:
Axiales Ausfahren wenigstens einer Radialabstützeinrichtung vor dem Verbiegen aus einer Rückzugposition in eine Abstützposition und axiales Einfahren der wenigstens einen Radialabstützeinrichtung nach dem Verbiegen aus der Abstützposition in eine Rückzugposition.

Ein bevorzugtes Einsatzgebiet für die voranstehend beschriebenen erfindungsgemäßen Vorrichtungen, Verfahren und Verwendungen ist die Herstellung von mit Spulen versehenen Bauteilen einer elektrischen Maschine und mehr insbesondere die Herstellung von Statoren von elektrischen Maschinen und mehr insbesondere die Herstellung von Statoren von Elektromotoren, die als Fahrmotoren für Elektrokraftfahrzeuge, insbesondere im Leistungsbereich von 10kW bis 400 kW. Die Vorrichtungen, das Verfahren und Verwendung der vorliegenden Erfindung sowie deren vorteilhafte Ausgestaltungen sind insbesondere auf dem Gebiet der Herstellung von Elektromotoren oder sonstigen elektrischen Maschinen, wie beispielsweise Generatoren, die für hohe Leistungen, zuverlässigen Betrieb und hohe Effizienz ausgelegt sind, geeignet und einsetzbar. Insbesondere sollen Elektromotoren hergestellt werden, die als Fahrmotoren von Elektrofahrzeugen oder Hybridfahrzeugen einsetzbar sind und beispielsweise eine Nennleistung zwischen 20 kW und 400 kW aufweisen. Es ist zum Aufbau von Statoren derartiger leistungsfähiger elektrischer Maschinen vorteilhaft, eine möglichst hohe Spulendichte bereitzustellen. Insbesondere werden hierzu sogenannte Hairpins in Nuten eines Statorgehäuses eingefügt, welche Nuten zuvor mit einer Nutisolierung, insbesondere Nutisolationspapier, ausgekleidet worden sind. Anschließend werden die freien Drahtenden in radialer Richtung umgeformt - geweitet/"Weiten" - und in Umfangsrichtung umgeformt - "Schränken"-, um Paare miteinander zu verbindender, insbesondere zu verschweißender Drahtenden, zu formen, so dass dann geschlossene Spulenwicklungen erzeugbar sind. Vorzugsweise werden hierzu Drähte verwendet, die im Querschnitt nicht rund, sondern rechteckig ausgebildet sind. Die hier vorgeschlagenen Vorrichtungen und Verfahren sowie Verwendungen haben den Vorteil, dass die Umbiegung exakter und kontrollierter erfolgen kann.

Insbesondere betrifft die Erfindung eine Vorrichtung zum in Umfangsrichtung gerichteten Umformen von Stableitern in elektrischen Maschinen.

Bei einer bevorzugten Herstellung von Statoren werden zunächst die Leiter hergestellt. Anschließend werden sie in ein Blechpaket gefügt. Bei Verwendung von Hairpins zum Herstellen der Spulen stehen dann an einem Ende des als Blechpaket ausgebildeten Statorgehäuses Drahtenden hervor. Dabei können in jeder Nut des Gehäuses zwei, drei, vier oder auch mehr Drahtenden auch dicht nebeneinanderliegend vorstehen. Zur weiteren Verarbeitung ist es vorteilhaft, diese Leiterenden aufzuweiten, wozu sie vorzugsweises zunächst in radialer Richtung umgeformt werden. Dieser Prozess soll automatisiert erfolgen.

Für die darauffolgenden (automatisierten) Prozesse (insbesondere Schränken und Verbinden der Drahtenden zu Spulenwicklungen) ist es vorteilhaft, die Leiterenden so umzuformen, dass die Position innerhalb eines vordefinierten Toleranzfeldes liegt. Erfahrungsgemäß lassen sich die Leiterenden besonders gut dann reproduktiv umformen, wenn sie an ihrem freien Ende und am "Fuß" (Oberkante Blechpaket) gespannt werden. Durch das radiale Umformen der Leiterenden verkürzt sich die axiale Länge. Zur Vermeidung von Beschädigungen der Leiterenden ist es vorteilhaft, den Längenausgleich durch eine translatorische Bewegung des Stators/ Umformwerkzeugs zu kompensieren.

Auf Gehäuse mit den entsprechend wie zuvor beschrieben geweiteten Drahtenden lassen sich bevorzugte Vorrichtungen und Verfahren gemäß der hier vorliegenden Erfindung besonders vorteilhaft anwenden. Bevorzugte Ausgestaltungen der Erfindung werden dann vorzugsweise zum Umformen der Drahtenden in Umfangsrichtung eingesetzt, vorzugsweise derart, dass sich Paare von miteinander zu verbindenden Drahtenden bilden lassen, um so Spulenwicklungen zu schließen.

In Kombination mit der Klemmvorrichtung gemäß einer der oben erwähnten Ausgestaltungen ermöglicht eine bevorzugte Ausgestaltung der Drahtendenumformvorrichtung die reproduzierbare Umformung von Leiterenden, insbesondere durch die individuelle Bearbeitung jedes Leiterendes.

Die Erfindung betrifft insbesondere Verfahren und Vorrichtungen zum Biegen von Endabschnitten von Stableitern, insbesondere von Stabwicklungen von elektrischen Maschinen.

Um die elektrische Verschaltung von Statoren zu ermöglichen, werden bei einer vorteilhaften Ausgestaltung in einem Prozessschritt die Endabschnitte von Stableitern verdrillt. Für diesen Prozessschritt werden die einzelnen Pins zunächst hergestellt und in ein Blechpaket gefügt. Bei einem geringen Abstand zwischen den Endabschnitten der Stableiter nach dem Fügeprozess werden diese vorzugsweise in einem nächsten Schritt geweitet, um ein präzises Verdrillen (Schränken) zu ermöglichen. Vorzugsweise werden die Endabschnitte der Stableiter zum Weiten in radialer Richtung umgeformt, um einen Abstand zwischen den einzelnen Leitern zu erzeugen (Weitprozess).

Bei Statoren sind in einer Nut mehrere Leiter angeordnet. Vorzugsweise werden alle Leiter, welche nach dem Weitprozess auf einem Radius liegen, mit einem Werkzeug (insbesondere an einer Aufnahme- und Dreheinheit angeordnet) bearbeitet. Bei dieser Bearbeitung werden alle Leiterenden vorzugsweise zunächst in Taschen des Werkzeugs eingeführt und anschließend verdrillt (Rotation des Werkzeugs um Mittelachse). Diese Verdrillung bewirkt ein Verkürzen der Stableiter in axialer Richtung. Um zu verhindern, dass zwischen den Stableitern und dem Werkzeug (z.B. Schränkkrone) eine Relativbewegung entsteht und die Stableiter oder ihre Isolation beschädigt werden, wird vorzugsweise der Stator oder das Werkzeug (z.B. die Schränkkrone) in axialer Richtung nachgefahren. Diese Bewegung folgt einem komplexen Geschwindigkeitsprofil, da die Stableiter dreidimensional verformt werden.

Vorzugsweise werden radial benachbarte Stableiter in entgegengesetzter Richtung verdrillt, so dass mindestens zwei Werkzeuge (z.B. Schränkkronen) zum Einsatz kommen.

Nach dem Schränkprozess ist es vorteilhaft, wenn alle Leiterenden in axialer Richtung die gleiche Länge aufweisen (gemessen ab der Oberkante des Blechpakets). Aufgrund der unterschiedlichen, vom Radius abhängigen Verformung der Leiter beim Schränkprozess ist es bevorzugt, dass die Hairpins vor dem Prozess eine unterschiedliche Länge aufweisen. Bei einem Gehäuse eines Stators vor dem Weiten stehen vorzugsweise demnach Leiterenden mit unterschiedlicher Länge vor, abhängig vom Radius - mit größerem Radius steigt auch die Länge in axialer Richtung. Bei einem geweiteten Stator (die Leiterenden sind radial umgeformt) sind die radialen Abstände zwischen den Drahtenden vergrößert, und die Drahtenden liegen in vorbestimmten Toleranzbereichen, so dass das Einführen in die Taschen bei einem automatisierten Schränkprozess erleichtert wird. Ein Gehäuse mit in radialer Richtung geweiteten Drahtenden bildet daher den bevorzugten Ausgangszustand für den Schränkprozess.

Vorrichtungen und Verfahren gemäß besonders bevorzugten Ausgestaltungen der Erfindung bieten insbesondere die Vorteile, dass eine Relativbewegung zwischen den einzelnen Stableitern und dem Schränkwerkzeug bei relativ einfachem maschinellen Aufbau verhindert werden kann, um eine Beschädigung der Leiter zu verhindern. Dafür ist es bevorzugt, dass jede Aufnahme- und Dreheinheit (insbesondere mit Schränkkrone) einem rotatorischen und translatorischen Geschwindigkeitsprofil folgt.

Würden nun alle Werkezuge (z.B. Schränkkronen) für die mit unterschiedlicher Radialposition vorstehenden Drahtenden mit der gleichen Geschwindigkeit (und gleichem Startzeitpunkt) rotieren, wäre ein unterschiedlicher Axialhub notwendig, was zu einem entsprechend hohen maschinellen Aufbau zur Ermöglichung des unterschiedlichen Axialhubs der unterschiedlichen Werkzeuge führen würde.

Bei bevorzugten Vorrichtungen und Verfahren gemäß der Erfindung werden unterschiedliche Aufnahme- und Dreheinheiten mit unterschiedlichen Geschwindigkeitsprofilen so bewegt, dass lediglich das gesamte Gehäuse (z.B. eines Stators) axial bewegt werden muss - dies wird mit der individuellen Winkelgeschwindigkeit einer jeden Aufnahme- und Dreheinheit (z.B. mit Schränkkrone) ermöglicht.

Vorzugsweise wird, um eine Relativbewegung zu vermeiden und die Anzahl der Antriebe gering zu halten, der Schränkprozess neu definiert: Die Schränkkronen oder dergleichen Werkzeuge werden nur rotatorisch bewegt, um die Verdrillung zu ermöglichen. Die Werkzeuge (z.B. Schränkkronen) können ineinander geschoben werden, so dass die Biegekante bei allen Werkzeugen auf der gleichen (axialen) Höhe liegt.

Vorzugsweise wird das Gehäuse (z.B. eines Stators) mit konstanter Geschwindigkeit in axialer Richtung bis zur Endposition (nach dem Schränkprozess) bewegt. Um die oben genannten Nachteile zu vermeiden, werden die Werkzeuge (z.B. Schränkkronen) mit einem individuellen Geschwindigkeitsprofil rotatorisch bewegt. Die Leiter, welche auf einem größeren Radius liegen, würden bei gleichem Schränkwinkel (Verdrillungswinkel) durch ihre Umformung einen größeren Axialhub als Leiter auf einem geringeren Radius benötigen. Um dies anzupassen, wird vorzugsweise nicht der Axialhub für die unterschiedlichen Drahtenden, sondern der Schränkwinkel/Verdrillungswinkel angepasst.

Gegenüber dem Stand der Technik ermöglichen vorteilhafte Ausgestaltungen der Erfindung das individuelle Verfahren der einzelnen Werkzeuge (z.B. Schränkkronen) mit einer geringen Anzahl an Antrieben.

Bei einem bevorzugten Verlauf der relativen Axialbewegung zwischen dem Gehäuse und der Biegevorrichtung bewegt sich ab einem Zeitpunkt t0 das Gehäuse mit konstanter Geschwindigkeit axial in die Richtung auf die Biegevorrichtung (z.B. mit den Schränkkronen) zu. Vorzugsweise beginnt zu einem definierten Zeitpunkt t1 die äußerste Aufnahme- und Dreheinheit (z.B. mit Schränkkrone) K1 zu drehen.

Die äußerste Aufnahme- und Dreheinheit K1 rotiert weiter vorzugsweise mit zunehmender Geschwindigkeit, um den durch die Verformung entstehenden (axialen) Längenausgleich zu kompensieren und eine Relativbewegung zu vermeiden. Sobald das Gehäuse einen definierten axialen Abstand erreicht hat, beginnt weiter vorzugsweise die am nächsten weiter innen liegende Aufnahme- und Dreheinheit (z. B. mit einer zweiten Schränkkrone) K2 mit der Verdrillung der Leiter. Diese zweite Aufnahme- und Dreheinheit rotiert vorzugsweise entgegengesetzt zu der ersten Aufnahme- und Dreheinheit K1.

Vorzugsweise beginnt die zweite Aufnahme- und Dreheinheit mit einer höheren Ausgangsgeschwindigkeit als die erste Aufnahme- und Dreheinheit zu rotieren.

Vorzugsweise ist auch die Geschwindigkeit der zweiten Aufnahme- und Dreheinheit K2 zunehmend.

In einem bevorzugten Fall, dass die zweite Aufnahme- und Dreheinheit kürzere Drahtenden als die erste Aufnahme- und Dreheinheit verdrillt, ist weiter bevorzugt, dass die Geschwindigkeit der zweiten Aufnahme- und Dreheinheit K2 höher als die der ersten Aufnahme- und Dreheinheit K1 ist. So ist es möglich, dass auch bei einem späteren Startzeitpunkt zum Ende des Schränkprozesses (tS) der gleiche Verdrillungswinkel durchlaufen wird. Die weiteren Aufnahme- und Dreheinheiten mit den weiteren Kronen K3 und K4 verhalten sich vorzugsweise äquivalent zu der Weise, wie dies anhand der Bewegung der ersten und zweiten Aufnahme- und Dreheinheit beschrieben worden ist.

Bei einem bevorzugten Aufbau der beispielsweise als Schränkvorrichtung ausgebildeten Biegevorrichtung wird jede der Schränkkronen über eine NC-Achse (z.B. Elektrohubzylinder) angetrieben. Beispielsweise werden sechs Schränkkronen verwendet.

Besonders bevorzugte Ausgestaltungen der Erfindung sehen eine radiale Abstützung von Drahtenden während des Umformens in Umfangrichtung vor. Vorteilhafte Merkmale und Vorteile derartiger Ausgestaltungen werden im Folgenden erläutert.

Bevorzugte Ausgestaltungen der Erfindung betreffen eine Ergänzung der zuvor erläuterten Ausführungen einer Schränkvorrichtung. Vorzugsweise als axial verfahrbare Hülsen auf der Innen- und Außenseite ausgebildete Radialabstützeinrichtungen dienen zur Führung der Hairpins im Schränkprozess.

Beim Schränken ergibt sich die Tendenz, dass sich die Drahtenden ohne Vorsehen einer inneren Radialabstützvorrichtung - innere Hülse - in radialer Richtung gesehen aufgrund der durch das Schränken in den nicht geführten freien Drahtenden bewirkten Zugspannung entlang des kürzesten Weges zwischen Stator und Schränkkrone verformen, d.h. von der durch das vorangegangene Weiten erzeugten gebogenen Form in eine weitgehend gerade Form übergehen.

Um dies zumindest teilweise zu verhindern, wird bei bevorzugten Ausgestaltungen die unerwünschte Verformung der Drahtenden in radialer Richtung beim Schränken durch die innere Hülse begrenzt.

Darüber hinaus neigt der äußere Draht beim Schränken zum Ausbeulen dort, wo das Drahtende in die Aussparung des Schränkwerkzeugs eintritt. Dieses wird durch eine äußere Radialabstützeinrichtung - insbesondere äußere Hülse - verhindert.

Das radiale Abstützen verbessert das Schränkergebnis dahingehend, dass das Risiko des Auftretens von Drahtbeschädigungen im Schränkprozess weiter minimiert wird und die Vorgaben bezüglich der Bauraumbegrenzungen noch besser eingehalten werden können.

Im Folgenden wird eine besonders vorteilhafte Vorgehensweise des Umformens der Drahtenden in Umfangsrichtung (Schränken) beschrieben:
- Vor dem Schränkprozess werden die Pinenden in die Schränkwerkzeuge eingeführt.
- Ausfahren einer inneren und äußeren Führungshülse (Beispiele für eine innere und äußere Radialabstützeinrichtung) in die obere Endlage, d.h. aus der Schränkvorrichtung heraus in Richtung Stator. Um eine Kollision der inneren Hülse mit dem Stator bzw. den Kragenstützfingern der Klemmvorrichtung zu vermeiden, ist diese besonders bevorzugt nachgiebig gestaltet. Hierzu ist sie gemäß einer bevorzugten Ausgestaltung derart ausgebildet, dass sie, wenn sie anschlägt, sich nicht mehr weiter bewegt.
- Schränkprozess.
- Verfahren der Klemmvorrichtung mitsamt dem Stator so weit nach oben, so dass die Pinenden (gerade) noch in den Taschen der Schränkwerkzeugen positioniert sind (die Schränkvorrichtung ist vorzugsweise nicht axial verschieblich, sondern nur der Stator und die Klemmvorrichtung).
- Einfahren der inneren und äußeren Führungshülse in die untere Endlage, d.h. wieder in die Schränkvorrichtung herein.
- (kammartige) Positionierfinger einer Positioniervorrichtung werden zwischen die Drähte bewegt, um die Drahtenden zu fixieren, nachdem sie aus dem Schränkwerkzeug herausgezogen werden, um sie im derart fixierten Zustand in Aussparungen einer Schweißschablone einbringen zu können.

Da die Positionierfinger der Positioniervorrichtung direkt oberhalb der Schränkkronen, d.h. in der Nähe der Drahtenden radial zugestellt werden, ist es vorteilhaft, die Führungshülsen nach dem Schränken und vor dem radialen Zustellen der Positionierfinger axial zu verfahren, d.h. einzufahren.

Bei einem Prozess, welcher die Positionierfinger nicht benötigt, ist eine axiale Bewegung (Einfahren) der Führungshülsen nicht unbedingt notwendig.

Es ist jedoch bevorzugt, die innere Hülse verfahrbar bzw. zumindest nachgiebig zu gestalten, um Lücken zwischen der Hülse und dem Stator bzw. der Klemmvorrichtung zu vermeiden. Für die äußere Hülse gilt dies nicht, da ihr Wirkbereich in unmittelbarer Nähe des Schränkwerkzeugs liegt und deshalb eine Lücke zum Stator hin vorhanden sein kann bzw. aufgrund der Verschiebung des Stators beim Schränken auch vorteilhaft ist. Die innere Hülse wird mit einem vorbestimmten Druck, z.B. von 3-4 bar, gegen den Anschlag, der bei Ausgestaltungen der Erfindung z.B. durch das Innere der Klemmvorrichtung gebildet wird, gefahren.

Wird während des Schränkens der Abstand zwischen Schränkvorrichtung und Stator bzw. Klemmvorrichtung verringert, bewegt sich die innere Hülse bevorzugt entsprechend mit. Die äußere Hülse hat hingegen bevorzugt eine Lücke zum Stator bzw. Klemmwerkzeug hin und braucht deshalb nicht während des Schränkvorgangs beweglich gestaltet sein.

Durch eine verfahrbare bzw. nachgiebige innere Hülse ergeben sich folgende Vorteile:
Trotz des sich während des Schränkvorgangs axial ändernden Abstandes von Schränkkronen und Blechpaket/Klemmvorrichtung können die Hairpins zu jeder Zeit optimal geführt werden. Dies wird vorzugsweise erreicht, indem die innere Hülse ausgefahren und während dem Schränkprozess mit Druckminderung axial von der Klemmvorrichtung nach unten gedrückt wird, d.h. nachgiebig beweglich ist, und nicht starr.

Zum Automatisieren eines Teilprozesses im Zuge der Herstellung eines mit Spulen zu versehenden Bauteils einer elektrischen Maschine schaffen bevorzugte Ausgestaltungen der Erfindung somit eine Drahtendenumformvorrichtung zur Verwendung bei einer Herstellung eines mit Spulen versehenen Bauteils einer elektrischen Maschine, zum Umformen von aus einem ringförmigen Gehäuse des Bauteils vorstehenden Drahtenden, umfassend eine Biegevorrichtung zum Verbiegen von Drahtenden in einer Umfangsrichtung, eine Relativbewegungsvorrichtung zum relativen Bewegen des Gehäuses und der Biegevorrichtung in einer axialen Richtung und eine Steuereinheit. Dabei werden die Drahtenden aufnehmende Aufnahme- und Dreheinheiten der Biegevorrichtung axial zueinander stationär gehalten, wobei Unterschiede in einem Längenausgleich und/oder in einem Verdrehwinkel der Drahtenden über unterschiedliche Bewegungsprofile der Drehbewegungen der Aufnahme- und Dreheinheiten gehandhabt werden. Außerdem werden eine Bauteilherstellvorrichtung und ein Drahtendenumformverfahren beschrieben.

Die Erfindung schafft auch ein Computerprogrammprodukt, mit Programmanweisungen, die, wenn sie in einen Computer der Steuereinheit der Drahtendenumformvorrichtung geladen werden, die Drahtendenumformvorrichtung zum Durchführen eines der Verfahren gemäß den beigefügten Ansprüchen ansteuern.

Die Vorrichtung gemäß eines oder mehrerer der beigefügten Vorrichtungsansprüchen ist zum Durchführen eines Verfahren gemäß eines oder mehrerer der beigefügten Verfahrensansprüchen ausgebildet. Das Verfahren gemäß eines oder mehrerer der beigefügten Verfahrensansprüche ist durch eine Vorrichtung gemäß eines oder mehrerer der beigefügten Vorrichtungsansprüche durchführbar.

Die Lehre wird im Folgenden anhand der beigefügten Zeichnungen näher erläutert. Darin zeigt:
Fig. 1 eine schematische Blockdarstellung eines Beispiels für eine Bauteilherstellvorrichtung zum Herstellen eines mit Spulen versehenen Bauteils einer elektrischen Maschine;
Fig. 2 eine schematische Darstellung eines Gehäuses des mit Spulen versehenen Bauteils vor einem Drahtumformverfahren;
Fig. 3 einen Schnitt durch das Gehäuse wie in Fig. 2 nach einem Umformen von Drahtenden in radialer Richtung und vor einem Umformen der Drahtenden in Umfangsrichtung;
Fig. 4 eine Draufsicht auf einen Teilbereich des Gehäuses von oben in Fig. 2 gesehen, wobei eine Nut des Gehäuses mit darin untergebrachten Drahtsegmenten, an denen Drahtenden ausgebildet sind, dargestellt ist;
Fig. 5 eine Darstellung vergleichbar mit Fig. 5, wobei eine Klemmvorrichtung an den Drahtenden zum Verklemmen derselben angreift;
Fig. 6 eine schematische Übersichtsdarstellung eines Ausführungsbeispiels einer Drahtendenumformvorrichtung, die eine Radial-Drahtendenumformvorrichtung zum Umformen der Drahtenden in radialer Richtung mit einer Radial-Biegevorrichtung und mit der Klemmvorrichtung sowie eine Umfangs-Drahtendenumformvorrichtung zum Umformen der Drahtenden in Umfangsrichtung mit einer Umfangs-Biegevorrichtung und der Klemmvorrichtung aufweist;
Fig. 7 eine perspektivische Darstellung eines ersten Ausführungsbeispiels der Klemmvorrichtung;
Fig. 8 eine vergrößerte Draufsicht auf ein Detail der Klemmvorrichtung von Fig. 7;
Fig. 9 eine Draufsicht auf ein zweites Ausführungsbeispiel der Klemmvorrichtung;
Fig. 10 eine perspektivische Ansicht des zweiten Ausführungsbeispiels der Klemmvorrichtung;
Fig. 11 einen Schnitt durch die Klemmvorrichtung gemäß dem zweiten Ausführungsbeispiel entlang der Linie A-A von Fig. 9;
Fig. 12 eine perspektivische Ansicht eines Ausführungsbeispiels für die Radial-Biegevorrichtung;
Fig. 13 eine Draufsicht auf das Ausführungsbeispiel der Radial-Biegevorrichtung;
Fig. 14 eine perspektivische Darstellung eines Ausführungsbeispiels einer Greifereinheit mit einer der Radial-Biegevorrichtung von Fig. 12 und 13;
Fig. 15 eine perspektivische Darstellung eines Ausführungsbeispiels der Umfangs-Biegevorrichtung;
Fig. 16 eine Draufsicht auf die Umfangs-Biegevorrichtung von Fig. 15;
Fig. 17 ein Diagramm, bei der die Relativgeschwindigkeit zwischen einem Gehäuse und der Umfangs-Biegevorrichtung über die Zeit schematisch aufgetragen ist;
Fig. 18 ein Diagramm, zur gleichen Zeit wie Fig. 17 aufgenommen, wobei schematisch Drehgeschwindigkeiten einer ersten bis vierten Aufnahme- und Dreheinheit der Umfangs-Biegevorrichtung vereinfacht dargestellt sind;
Fig. 19 eine perspektivische Darstellung einer vierten Aufnahme- und Dreheinheit der Umfangs-Biegevorrichtung, wobei ein Ringelement zum Bilden von Drahtendenaufnahmen zu Erläuterungszwecken weggelassen worden ist;
Fig. 20 eine Seitenansicht einer ersten Aufnahme- und Dreheinheit;
Fig. 21 einen Schnitt durch die erste Aufnahme- und Dreheinheit entlang der Linie B-B von Fig. 20;
Fig. 22 eine perspektivische Ansicht der ersten Aufnahme- und Dreheinheit;
Fig. 23 eine Explosionsdarstellung in Seitenansicht der ersten Aufnahme- und Dreheinheit, wobei ein Hauptelement und ein Ringelement entfernt voneinander dargestellt sind;
Fig. 24 eine perspektivische Explosionsdarstellung der ersten Aufnahme- und Dreheinheit;
Fig. 25 eine perspektivische Darstellung einer ineinander geschachtelten Kombination aus der ersten Aufnahme- und Dreheinheit, einer zweiten Aufnahme- und Dreheinheit, einer dritten Aufnahme- und Dreheinheit und der vierten Aufnahme- und Dreheinheit;
Fig. 26 einer Seitenansicht der Kombination von Fig. 25
Fig. 27 einen Schnitt durch die Kombination entlang der Linie A-A von Fig. 26;
Fig. 28 einen Schnitt durch eine Kombination einer ersten bis sechsten Aufnahme- und Dreheinrichtung der Umfangs-Biegevorrichtung der Figuren 15 und 16, wobei jede Aufnahme- und Dreheinrichtung eine Aufnahme- und Dreheinheit und ein sich in Umfangsrichtung erstreckendes Antriebselement aufweist, in einer Betriebsstellung, wobei ein Schnitt entlang der Linie B-B von Fig. 29 dargestellt ist;
Fig. 29 eine Draufsicht auf die Kombination der Fig. 28;
Fig. 30 die Kombination vergleichbar der Figuren 28 und 29, wobei eine erste Aufnahme- und Dreheinheit entfernt ist, gezeigt im Schnitt entlang der Linie C-C von Fig. 31;
Fig. 31 eine Draufsicht auf die Kombination mit der bereits entfernten ersten Aufnahme- und Dreheinheit von Fig. 30;
Fig. 32 die Kombination der Figuren 30 und 31 mit entfernter erster Aufnahme- und Dreheinheit, jedoch in einer Montage- und Demontagestellung zum Montieren oder Demontieren der zweiten Aufnahme- und Dreheinheit, gezeigt im Schnitt entlang der Linie D-D von Fig. 33;
Fig. 33 eine Draufsicht auf die Kombination der Fig. 32 in der Montage- und Demontagestellung;
Fig. 34a und 34b schematische Prinzipdarstellungen zur Erläuterung der Funktion einer bei einer weiteren Ausführungsform der Umfangs-Biegevorrichtung vorgesehenen Radialstützeinrichtung;
Fig. 35 eine Schnittansicht durch die weitere Ausführungsform der Umfangs-Biegevorrichtung mit einer ersten und einer zweiten Radialstützeinrichtung in einer Rückzugsposition; und
Fig. 36 eine Ansicht wie in Fig. 36 mit der ersten und der zweiten Radialabstützeinrichtung in einer Abstützposition.

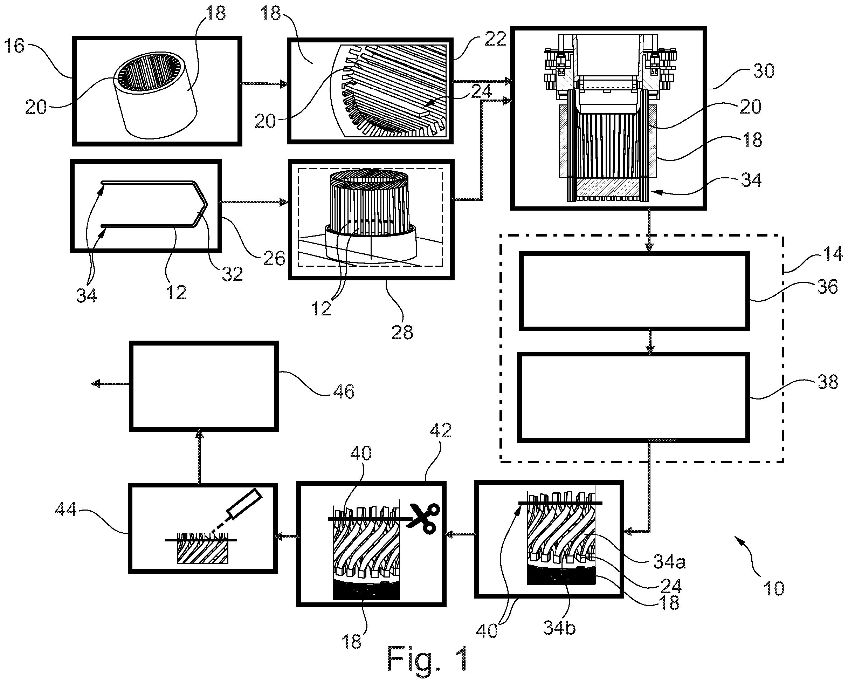

In Fig. 1 ist ein Ausführungsbeispiel für eine Bauteilherstellvorrichtung 10 zum Herstellen eines mit Spulen versehenen Bauteils einer elektrischen Maschine als Blockdarstellung dargestellt, wodurch auch Herstellschritte eines entsprechenden Bauteilherstellverfahren zum Herstellen des Bauteils veranschaulicht werden.

Die Bauteilherstellvorrichtung 10 ist insbesondere zum Herstellen eines Stators einer elektrischen Maschine geeignet. Der Stator soll insbesondere als Stator eines Fahrmotors eines Elektrofahrzeuges, vorzugsweise im Leistungsbereich von 20 kW bis 400 kW eingesetzt werden. Hierzu soll der Stator eine möglichst große Anzahl von Spulen erhalten, wobei die Spulen aus sogenannten Hairpins 12 erzeugt werden.

Bei der dargestellten Ausführungsform weist die Bauteilherstellvorrichtung 10 eine Drahtendenumformvorrichtung 14 sowie vorzugsweise eine oder mehrere oder alle der im Folgenden näher bezeichneten zusätzlichen Stationen auf.

Vorzugsweise weist die Bauteilherstellvorrichtung 10 eine Gehäuseherstellvorrichtung 16 zum Herstellen eines Gehäuses 18 des beispielsweise als Stator ausgebildeten Bauteils auf. Die Gehäuseherstellvorrichtung 16 ist z. B. in grundsätzlich bekannter Art und Weise ausgebildet, um das Gehäuse 18 als Blechpaket aus einzelnen Blechlagen herzustellen, wobei das Gehäuse 18 ringförmig ausgebildet ist und an einem Innenwandbereich mit einer Reihe von verteilt an der Innenwandung ausgebildeten Gehäusenuten 20 versehen ist, die zur Aufnahme von Drahtsegmenten dienen.

Vorzugsweise weist die Bauteilherstellvorrichtung 10 eine Vorrichtung 22 zum Herstellen von Nutisolierungen auf, mittels der die einzelnen Gehäusenuten 20 mit einer Nutisolierung 24, vorzugsweise aus Isolationspapier versehen werden.

Die Bauteilherstellvorrichtung 10 weist weiter eine Hairpinherstellvorrichtung 26 zum Herstellen der Hairpins 12 auf. Die Hairpinherstellvorrichtung 26 kann z. B. (nicht dargestellte) Schneideinrichtungen zum Abschneiden von Drahtstücken einer Drahtspule sowie nicht näher dargestellte Biegeeinrichtungen zum Biegen einer Dachbiegung und/oder Knickbiegung und/oder 3-dimensionalen Biegung der Hairpins 12 aufweisen.

Vorzugsweise weist die Bauteilherstellvorrichtung 10 eine Vorpositionierungsvorrichtung 28 zum Vorpositionieren der Hairpins 12 sowie eine Hairpineinsteckvorrichtung 30 zum Einstecken der so vorpositionierten Hairpins 12 in die Gehäusenuten 20 des Gehäuses 18 auf.

Wie bei der Hairpinherstellvorrichtung 26 angedeutet, haben die Hairpins 12 einen gebogenen Wicklungskopf 32 sowie zwei freie Drahtenden 34, wobei sie bis auf den äußersten Endbereich an jedem Drahtende 34 mit einer Isolierung, beispielsweise einem Kunststoffüberzug, versehen sind. Nach dem Hairpin einstecken mittels der Hairpineinsteckvorrichtung 30 stehen die Drahtenden 34 an einem Ende des Gehäuses 18 aus den Gehäusenuten 20 vor.

Die Drahtendenumformvorrichtung 14 dient zum Durchführen eines Weitprozesses, wo die einzelnen Drahtenden 34 in radialer Richtung aufgeweitet werden und zum Durchführen eines Schränkprozesses, wobei die so aufgeweiteten Drahtenden 34 in Umfangsrichtung umgeformt werden, um so jeweils Paare von miteinander zu verbindenden Drahtenden 34 zu bilden.

Hierzu weist die Drahtendenumformvorrichtung 14 eine Radial-Drahtendenumformvorrichtung 36 und eine Umfangs-Drahtendenumformvorrichtung 38 auf.

Die Bauteilherstellvorrichtung 10 kann weiter eine Vorspann- und/oder Fixiervorrichtung 40 zum Vorspannen und/oder Fixieren der einzelnen Paare von Drahtenden 34 aufweisen.

Die Bauteilherstellvorrichtung 10 kann weiter eine Drahtendenschneidvorrichtung 42 zum Schneiden der mit der Vorspann- und/oder Fixiervorrichtung 40 verspannten und fixierten Drahtenden umfassen.

Ein Ausführungsbeispiel der Bauteilherstellvorrichtung 10 weist weiter eine Drahtendenschweißvorrichtung 44 zum Verschweißen der zum Bilden der Spulen miteinander zu verbindenden Drahtenden 34 auf.

Weiter kann die Bauteilherstellvorrichtung 10 Vorrichtungen 46 zum elektrischen Kontaktieren der durch die Hairpins 12 so gebildeten Spulen und/oder zum Testen und/oder Vergießen des so gebildeten Stators umfassen.

Im Folgenden werden Ausführungsbeispiele der Drahtendenumformvorrichtung 14 der Bauteilherstellvorrichtung 10 näher erläutert.

Bei der Bauteilherstellvorrichtung 10 gemäß dem in Fig. 1 dargestellten Ausführungsbeispiel wird zu der Herstellung eines Stators als Beispiel für das Bauteil zunächst ein Gehäuse 18 mit Gehäusenuten 20 und darin untergebrachte Nutisolierungen 24 bereitgestellt; gleichzeitig werden Leiter in Form von Hairpins 12 hergestellt. Die Leiter in Form von Hairpins 12 werden anschließend in das Blechpaket des Gehäuses 18 eingefügt.

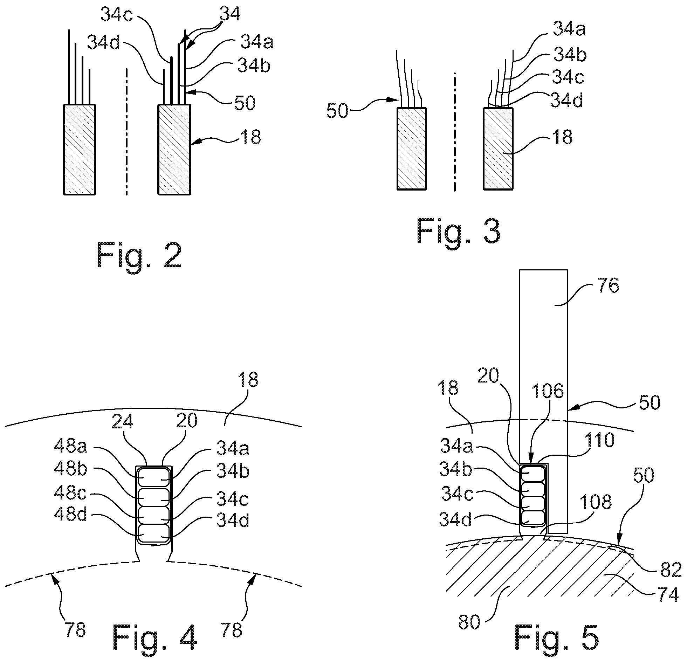

Anschließend erfolgt ein Drahtendenumformverfahren mittels der Drahtendenumformvorrichtung 14. Der Ausgangszustand für das Drahtendenumformverfahren ist in Fig. 2 dargestellt. In der Schnittdarstellung in der Fig. 2 ist ein Zwischenprodukt zum Herstellen des Stators in vereinfachter Darstellung, insbesondere ohne Darstellung des Wickelkopfs, gezeigt. In einem ersten Teilprozess des Drahtendenumformverfahrens werden die Leiterenden - Drahtenden 34 - radial so umgeformt, wie sie in der Fig. 3 dargestellt sind. Dieser Teilprozess wird auch "Weiten" genannt. Hierzu weist die Drahtendenumformvorrichtung 14 die Radial-Drahtendenumformvorrichtung 36 auf.

Fig. 4 zeigt hierzu die Draufsicht von oben in Fig. 2 gesehen auf eine der Gehäusenuten 20. Bei dem dargestellten Ausführungsbeispiel sind insgesamt vier Drahtsegmente 48a-48d mit entsprechenden aus der Gehäusenut 20 vorstehenden vier Drahtenden 34a-34d dargestellt. Das Drahtendenumformverfahren sowie die hierzu vorgesehenen Drahtendenumformvorrichtungen 14, 36, 38 sind entsprechend auf diesen Beispielsfall mit vier Drahtenden 34a-34d pro Gehäusenut 20 ausgebildet. Bei anderen, nicht näher dargestellten Ausführungsformen sind beispielsweise 2, 3, 6, 8 oder mehr oder weniger Drahtenden 34 pro Nut vorgesehen, wobei die Anzahl der entsprechenden Handhabungselemente, wie sie im Folgenden noch näher dargestellt werden, entsprechend angepasst sind.

Für die auf den Weit-Prozess nachfolgenden automatisierten Prozesse sollten die Drahtenden 34a-34d so umgeformt werden, dass deren Position innerhalb eines vordefinierten Toleranzfeldes liegt. Damit die Drahtenden 34a-34d reproduktiv umgeformt werden können, werden sie an ihrem freien Ende und am Fuß - der oberen Kante des Gehäuses 18 - gespannt.

Hierzu ist eine Klemmvorrichtung 50 vorgesehen, von denen Ausführungsbeispiele in den Fig. 5 und 7-11 dargestellt sind.

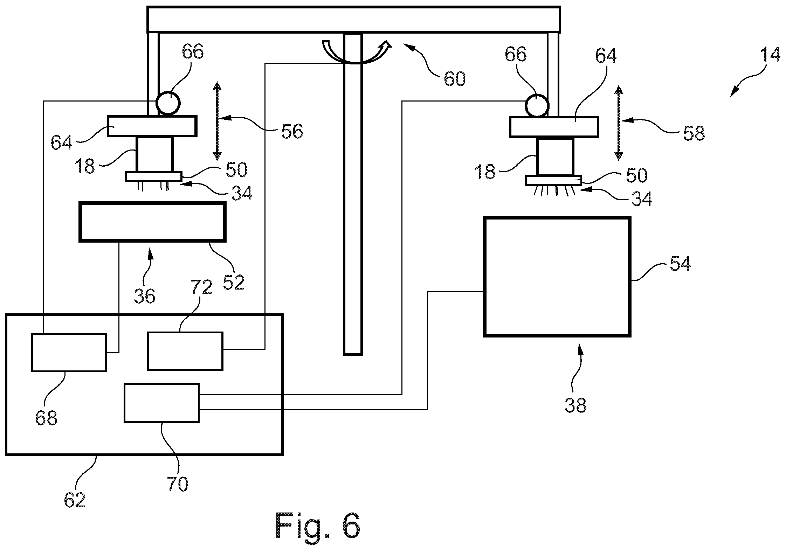

Ein Ausführungsbeispiel für die Drahtendenumformvorrichtung 14 ist schematisch in Fig. 6 dargestellt. Demnach weist ein Ausführungsbeispiel der Drahtendenumformvorrichtung 14 die Klemmvorrichtung 50 und wenigstens eine Biegevorrichtung 52, 54 auf.

Die dargestellte Drahtenden-Umformvorrichtung 14 weist wenigstens zwei Stationen, eine erste Station zum radialen Umformen der Drahtenden 34a-34d und eine zweite Station zum Umformen der Drahtenden 34, 34a-34d in Umfangsrichtung auf. Diese beiden Stationen werden hier als Radial-Drahtendenumformvorrichtung 36 und Umfangs-Drahtendenumformvorrichtung 38 bezeichnet.

Die Radial-Drahtendenumformvorrichtung 36 weist eine Radial-Biegevorrichtung 52 zum Verbiegen der Drahtenden 34, 34a-34d in radialer Richtung auf.

Die Umfangs-Drahtendenumformvorrichtung 38 weist eine Umfangs-Biegevorrichtung 54 zum Umformen der vorzugsweise bereits radial aufgeweiteten Drahtenden 34, 34a-34d in Umfangsrichtung auf. Weiter weisen beide Stationen 36, 38 jeweils die Klemmvorrichtung 50 auf.

Vorzugsweise weisen die Drahtendenumformvorrichtungen 14, 36, 38 jeweils eine Relativbewegungsvorrichtung 56, 58 auf, um das Gehäuse 18 relativ zu der jeweiligen Biegevorrichtung 52, 54 in einer axialen Richtung zu bewegen. Als "axiale Richtung" wird hierzu eine Bewegung in Richtung längs zu der Mittelachse des ringförmigen Gehäuses 18 verstanden. Auch die Radialrichtung und die Umfangsrichtung sind jeweils bezüglich dieser Mittelachse des Gehäuses 18 definiert.

Eine erste Relativbewegungsvorrichtung 56 ist zusammen mit der Radial-Biegevorrichtung 52 und der Klemmvorrichtung 50 an der Radial-Drahtendenumformvorrichtung 36 ausgebildet. Eine zweite Relativbewegungsvorrichtung 58 ist zusammen mit der Umfangs-Biegevorrichtung 54 und der Klemmvorrichtung 50 an der Umfangs-Drahtendenumformvorrichtung 38 ausgebildet. Weiter weist die Drahtendenumformvorrichtung 14 eine Transportvorrichtung 60 zum Transport des Gehäuses 18 von der Radial-Drahtendenumformvorrichtung 36 zu der Umfangs-Drahtendenumformvorrichtung 38 und eine Steuerungsvorrichtung 62 zum Steuern der einzelnen Einheiten der Drahtendenumformvorrichtung 14 auf.

Die Transportvorrichtung 60 kann in irgendeiner Form ausgebildet sein. In dem dargestellten Ausführungsbeispiel weist die Transportvorrichtung 60 eine Art Karussell mit mehreren Armen auf, an denen die Relativbewegungsvorrichtungen 56, 58 ausgebildet sind. Die Transportvorrichtung 60 und die Relativbewegungsvorrichtungen 56, 58 können durch einen Roboter oder eine Portalmaschine gebildet sein.

Die Relativbewegungsvorrichtungen 56, 58 weisen jeweils eine Gehäusehalterung 64, an der das Gehäuse 18 mit nach unten hin gerichteten vorstehenden Drahtenden 34, 34a-34d gehalten ist und einen Gehäusehalterungsantrieb 66 auf, mittels dem die Gehäusehalterung 64 relativ zu der jeweiligen Biegevorrichtung 52, 54 in axialer Richtung angetrieben bewegbar ist, auf. Bei anderen Ausgestaltungen, die derzeit weniger bevorzugt sind, wird das Gehäuse 18 stationär gehalten und die Biegevorrichtung 54 oder 56 axial bewegt.

Die Steuerungsvorrichtung 62 weist eine erste Steuerung zum Steuern der Radial-Drahtendenumformvorrichtung 36 auf, welche den Gehäusehalterungsantrieb 66 der ersten Relativbewegungsvorrichtung 56 und die Radial-Biegevorrichtung 52 ansteuert. Weiter weist die Steuerungsvorrichtung 62 eine zweite Steuerung 70 auf, welche den Gehäusehalterungsantrieb 66 der zweiten Relativbewegungsvorrichtung 58 und die Umfangs-Biegevorrichtung 54 ansteuert. Bei dem dargestellten Ausführungsbeispiel weist die Steuerungsvorrichtung 62 eine dritte Steuerung 72 auf, welche die Transportvorrichtung 60 ansteuert. Die Steuerungsvorrichtung 62 kann lokal an der Drahtendenumformvorrichtung 14 vorgesehen sein oder auch Teil einer Zentralsteuerung (nicht dargestellt) der Bauteilherstellvorrichtung 10 sein. Die einzelnen Steuervorrichtungen 68, 70, 72 können in Hardware oder in Software implementiert sein.

Die Klemmvorrichtung 50 wird vorzugsweise sowohl beim radialen Umformen der Drahtenden in der Radial-Drahtendenumformvorrichtung 36 als auch beim Umformen der Drahtenden 34, 34a-34d in Umfangsrichtung in der Umfangs-Drahtendenumformvorrichtung 38 verwendet. Hierzu kann die Klemmvorrichtung 50 mittels der Transportvorrichtung 60 gemeinsam mit dem Gehäuse 18 von der Radial-Drahtendenumformvorrichtung 36 zu der Umfangs-Drahtendenumformvorrichtung 38 weiter transportiert werden. Die Klemmvorrichtung 50 kann beispielsweise auch an der Gehäusehalterung 64 angebracht oder Teil derselben sein. In einigen Ausführungsformen ist die Klemmvorrichtung 50 als gesondertes Bauteil vorgesehen.

Wie in Fig. 6 dargestellt, ist im Betrieb die Klemmvorrichtung 50 zwischen dem Gehäuse 18 und der jeweiligen Biegevorrichtung 52, 54 angeordnet.

Die Klemmvorrichtung 50 weist, wie dies in Fig. 5 angedeutet ist eine erste Klemmvorrichtung 74, die vorzugsweise als innere Klemmeinrichtung ausgebildet ist und eine zweite Klemmeinrichtung 76, die vorzugsweise als äußere Klemmeinrichtung ausgebildet ist, auf.

Die erste Klemmeinrichtung 74 ist vorzugsweise teilweise im Inneren des Gehäuses 18 angeordnet und stützt sich weiter vorzugsweise an Innenwandbereichen 78 (siehe Fig. 5) ab, die im Inneren des Gehäuses 18 zwischen den Gehäusenuten 20 ausgebildet sind.

Die zweite Klemmeinrichtung 76 ist relativ zu der ersten Klemmeinrichtung 74 bewegbar, um Drahtenden 34, 34a-34d zwischen den Klemmeinrichtungen 74, 76 zu verklemmen. Vorzugsweise werden dabei alle gemeinsam aus einer Gehäusenut 20 vorstehenden Drahtenden 34, 34a-34d zwischen den Klemmeinrichtungen 74, 76 verklemmt.

Ein erstes Ausführungsbeispiel der Klemmvorrichtung 50 wird im Folgenden anhand der Fig. 5, 7 und 8 näher erläutert.

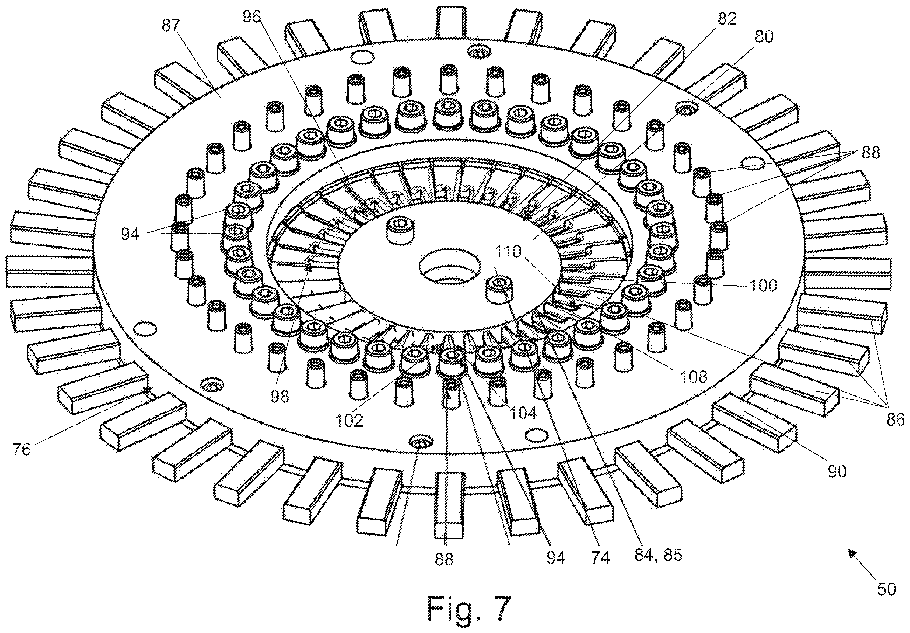

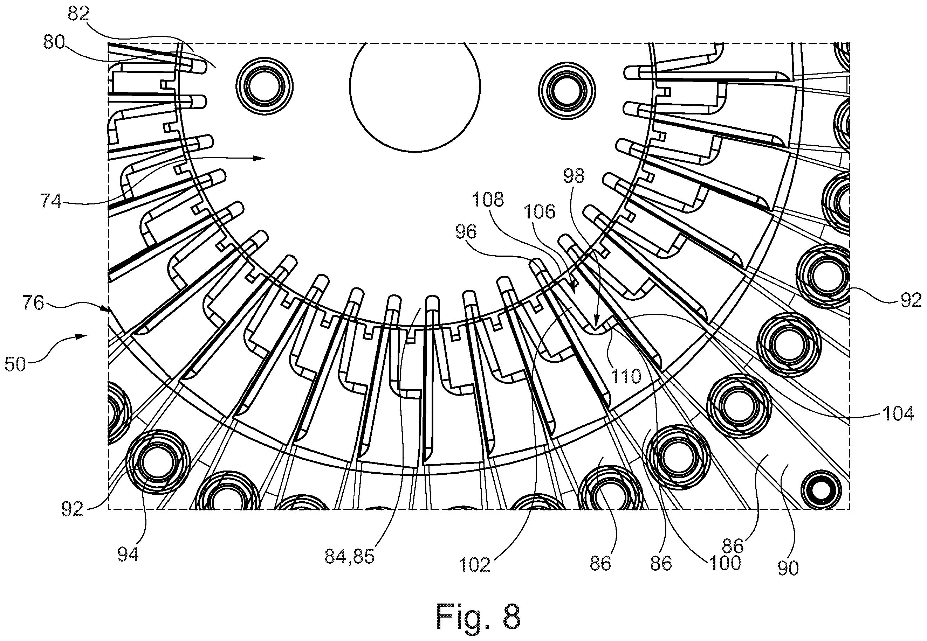

Bei dieser Ausführungsform ist die erste Klemmeinrichtung 74 scheibenförmig oder ringförmig ausgebildet. Die erste Klemmeinrichtung 74 weist einen Ringscheibenkörper 80 auf, der mit einem ersten Teilbereich in das Gehäuse eingefügt ist und sich vorzugsweise an den Innenwandbereichen 78 abstützt oder relativ zu diesen fixiert ist. Hierzu kann der Ringscheibenkörper 80 beispielsweise in dem ringförmigen Gehäuse 18 mittels eines nicht näher dargestellten Gegenspannelements an dem gegenüberliegenden Ende des Gehäuses axial verspannt sein. Beispielsweise kann das Gegenspannelement als Teil der Gehäusehalterung 64 ausgebildet sein. Ein weiterer Teilbereich des Ringscheibenkörpers 80 steht, wie dies in Fig. 5 angedeutet ist, aus dem Ende des Gehäuses 18 hervor und stützt sich mit einem Ringflansch 82 an diesem Ende des Gehäuses 18 ab. Dieser vorstehende Teilbereich des Ringscheibenkörpers 80 ist, wie dies in den Fig. 7 und 8 dargestellt ist, mit einer Reihe von über den Umfang verteilten Aussparungen 84 versehen, die als Spitzenaufnahmen 85 dienen. Die Anzahl der Aussparungen 84 entspricht der Anzahl von Gehäusenuten 20 an dem Gehäuse 18. Die Aussparungen 84 sind radial nach außen hin offen.

Die zweite Klemmeinrichtung 76 weist eine Anzahl von Kragenstützwerkzeugen in Form von Klemmfingern 86 auf. Weiter weist die zweite Klemmeinrichtung 76 in dem dargestellten Ausführungsbeispiel einen Haltering 87 auf, an dem die Klemmfinger 86 gemeinsam und synchron angetrieben und radial verschiebbar geführt aufgenommen sind.

Die Klemmfinger 86 sind jeweils stabförmig ausgebildet und sind mit einem Bereich in dem Haltering 87 aufgenommenen. Die Klemmvorrichtung kann z.B. als Handvorrichtung ohne Antrieb ausgebildet sein. Hierbei werden die Klemmfinger 86 manuell bewegt. Bei der in Fig. 7 dargestellten Ausbildung sind Zylinderstifte 88 zum Fixieren vorgesehen; auch könnte mittels Schrauben 94 eine manuelle Klemmung erfolgen. Bei anderen (nicht dargestellten Ausführungsformen kann der in dem Haltering 87 aufgenommene Bereich der Klemmfinger 86 jeweils einen Zahnstangenbereich aufweisen, der mit Zahnrädern (nicht dargestellt) kämmt, die über hervorstehende Zahnradwellen gemeinsam antreibbar sind. Bei einer anderen, ebenfalls hier nicht näher dargestellten Ausführungsform ist anstelle eines Zahnrades eine entsprechende Antriebsnocke vorgesehen.

Weiter können die Klemmfinger 86 mit hier nicht näher dargestellten Federelementen, z.B. je einer Druckfeder pro Klemmfinger 86, versehen sein, die für einen gleichmäßigen Anpressdruck der Klemmfinger 86 sorgen.

Wie am besten aus Fig. 8 ersichtlich, weist ein jeweiliges Stangenelement 90 des Klemmfingers 86, welches in dem Haltering 87 geführt ist, ein sich in Längsrichtung des Klemmfingers 86 erstreckendes Langloch 92 auf, durch welches eine Befestigungsschraube 94 geführt ist, wobei der Schaft der Befestigungsschraube 94 über den Anschlag in dem Langloch 92 die Verschiebebewegung der Klemmfinger 86 begrenzt.

An den nach innen gerichteten Enden weisen die Klemmfinger 86 ein Eingreifende in Form einer konisch zulaufenden Spitze 96 auf, die zum Eingreifen in die Aussparung 84 ausgebildet ist.

Weiter weist jeder Klemmfinger 86 an seinem freien Ende eine Stufe 98 auf, die an einer Seite durch die konisch zulaufende Spitze 96 begrenzt ist und an einer sich quer hierzu erstreckenden Seite durch das dicker ausgebildete Stangenelement 90 begrenzt ist.

Die von dem Gehäuse 18 abgewandt anzuordnende sich in Umfangsrichtung erstreckende Kante der Stufe 98, die an dem Stangenelement 90 ausgebildet ist, ist zum Bilden einer ersten Biegeform 100 abgerundet. Ebenfalls ist eine von dem Gehäuse 18 abgewandt anzuordnende sich in Radialrichtung erstreckende Kante an der Spitze 96 zum Bilden einer Biegeform 102, 104 für das Schränken ausgebildet. Dies gilt sowohl für die Kante im Bereich der Stufe 98 als auch die Kante auf der anderen Seite der Spitze 96, die so ebenfalls eine abgerundete Biegeform 104 für den Schränkprozess bildet.

Bei der in der Fig. 7 und 8 dargestellten Klemmposition sind die Spitzen 96 in die Spitzenaufnahmen 86 an dem Ringflansch 82 eingeführt; die Stufen 98 und die Spitzen 96 bilden mit den Spitzen 96 der benachbarten Klemmfinger 86 Aufnahmenuten 106 für eine Gruppe von Drahtenden 34, 34a-34d, die zusammen aus einer Gehäusenut 20 vorstehen. Diese Gruppe von Drahtenden 34a-34d wird zwischen einem ersten Klemmbereich 108 an der ersten Klemmeinrichtung 74 und einem zweiten Klemmbereich 110 an der zweiten Klemmeinrichtung 76 geklemmt, wenn die Klemmfinger 86 radial nach innen verfahren werden. Der erste Klemmbereich 108 ist an dem Ringflansch 82 jeweils zwischen den Spitzenaufnahmen 86 gebildet. Der zweite Klemmbereich 110 ist an dem von dem Stangenelement 90 begrenzten Bereich der Stufe 98 gebildet. Die Kanten, die von dem Gehäuse 18 abgewandt sind und rund um die jeweilige Aufnahmenut 106 ausgebildet sind, wirken so als Biegeform 100, 102, 104 für das Drahtumformen. Beim Drahtumformen sind die Klemmfinger 86 einerseits in dem Haltering 87 und andererseits durch die Aufnahme der Spitzen 96 in der Spitzenaufnahme 85 abgestützt.

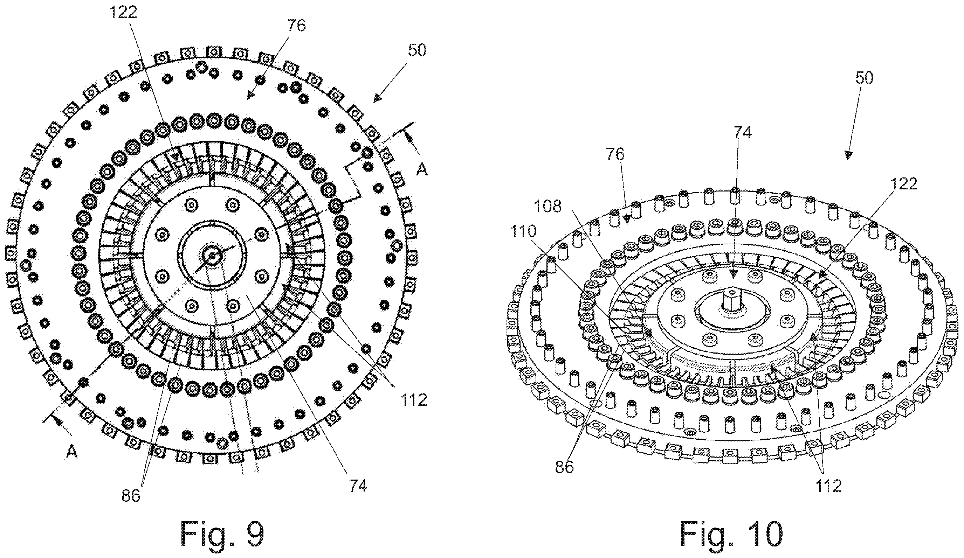

Im Folgenden wird noch anhand der Figuren 9-11 eine zweite Ausführungsform für die Klemmvorrichtung 50 näher erläutert. Diese zweite Ausführungsform entspricht bis auf die im Folgenden näher dargestellten Unterschiede der ersten Ausführungsform, so dass auf die obige Beschreibung verwiesen werden kann, wobei auch für entsprechende Elemente die gleichen Bezugszeichen verwendet worden sind.

Die zweite Ausführungsform ist insbesondere dort verwendbar, wo wenig Platz für das Einführen und Befestigen der ersten Klemmeinrichtung 74 vorhanden ist.

Hierzu ist anstelle des Ringscheibenkörpers 80 eine Anordnung von mehreren radial bewegbaren Segmenten 112 vorgesehen, die zwischen einem Grundkörper 114 und einer Ringscheibe 116 in radialer Richtung bewegbar geführt sind und über ein mittels eines Antriebsgewindes 118 axial bewegbares konusförmiges Antriebselement 120 antreibbar sind. Der in Fig. 2 dargestellte obere Rand des Gehäuses 18 mit den Drahtenden 34, 34a-d lässt sich in eine ringförmige Vertiefung 122 einführen, die zwischen den radial bewegbaren Segmenten 112 und dem Haltering 87 ausgebildet ist, wobei dann durch axiales Verschieben des konusförmigen Antriebselements 120 die radial bewegbaren Segmente 112 radial nach außen verfahren werden, um so gegen die Innenwandbereiche 78 des Gehäuses 18 gefahren zu werden, so dass die Klemmvorrichtung 50 so an diesen Innenwandbereichen 78 fixiert wird.

Bei beiden hier dargestellten Ausführungsformen der Klemmvorrichtungen 50 stehen dann die Drahtenden 34a-34d aus jeder Gehäusenut 20 über die Klemmvorrichtung 50 hervor, wie dies in Fig. 6 angedeutet ist, und können durch die jeweilige Biegevorrichtung 52, 54 umgeformt werden.

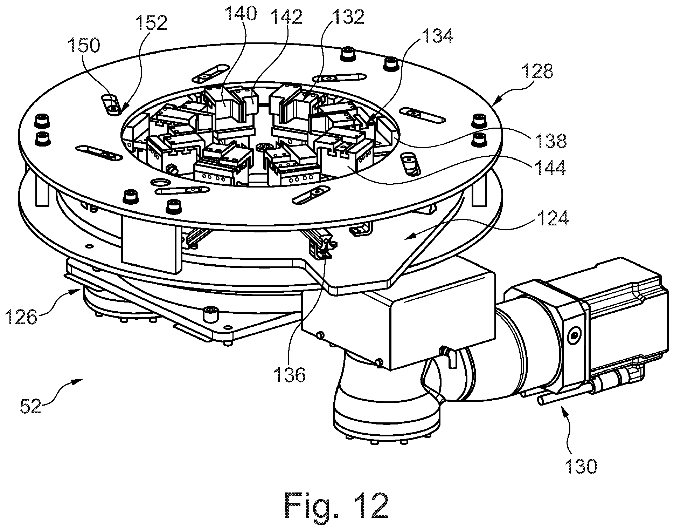

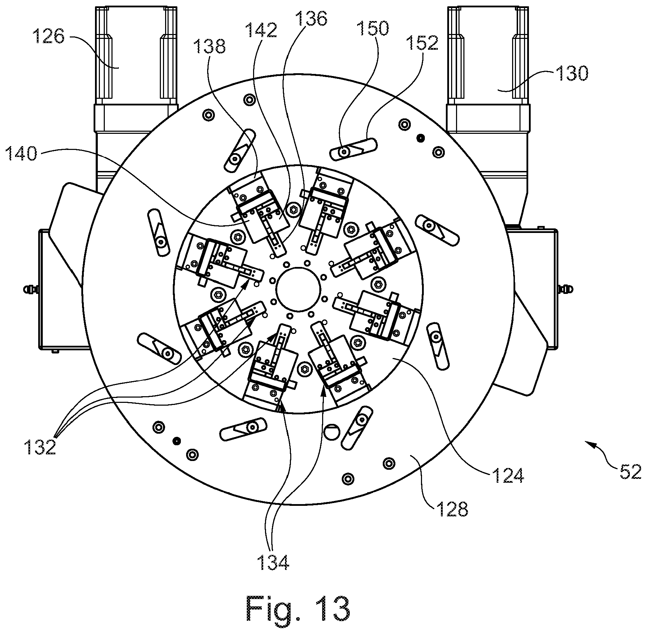

Ein Ausführungsbeispiel für die Radial-Biegevorrichtung 52 wird im Folgenden anhand der Darstellungen in den Figuren 12-14 näher erläutert.

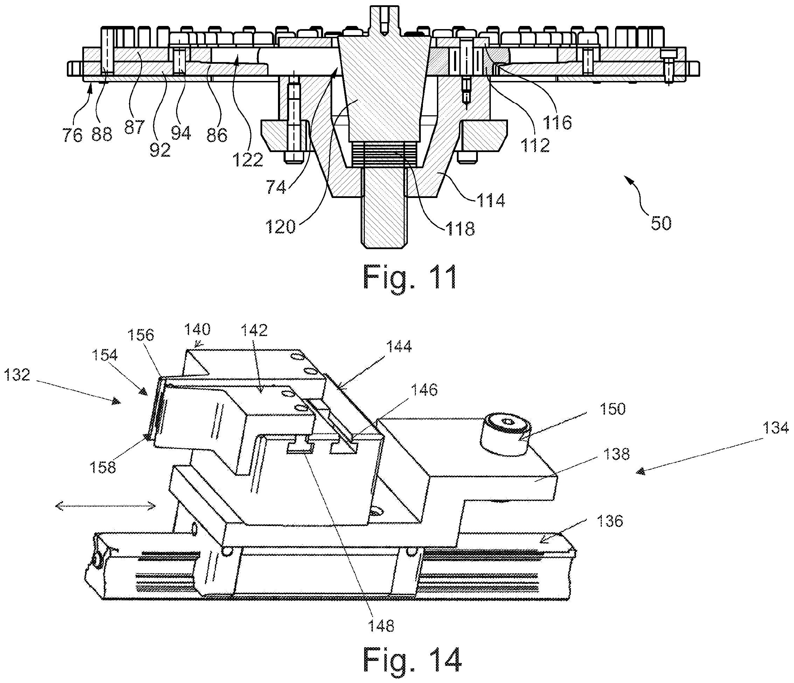

Die in den Figuren 12-14 dargestellte Ausführungsform der Radial-Biegevorrichtung 52 weist eine um eine Drehachse drehbare Grundplatte 124, eine durch die erste Steuerung 68 ansteuerbare Grundplattenantriebseinrichtung 126 zum Antreiben der Drehbewegung der Grundplatte 124, eine relativ zu der Grundplatte 124 ebenfalls um die Drehachse drehbare Antriebsplatte 128, eine Antriebsplattenantriebseinrichtung 130 zum Antreiben der Drehbewegung der Antriebsplatte 128, welche durch die erste Steuerung 68 ansteuerbar ist, sowie eine Reihe von über einen Umfang verteilt angeordnete Greifer 132 auf. Je ein Greifer 132 ist auf einer Greifereinheit 134 ausgebildet, die in Fig. 14 einzeln dargestellt ist.

Hierzu sind auf der Grundplatte 124 Verschiebeführungen beispielsweise in Form einer Verschiebeschiene 136 vorgesehen, die sich in radialer Richtung erstrecken. An der Verschiebeführung ist jeweils ein Greiferschlitten 138 verschiebbar geführt. Auf dem Greiferschlitten 138 sind eine erste Greifbacke 140 und eine zweite Greifbacke 142 relativ zueinander in tangentialer Richtung verschiebbar geführt. Beispielsweise ist auf dem Greiferschlitten 138 ein Führungsblock 144 mit einer ersten Führungsnut 146 zum Führen der Greifbacke 140 und einer zweiten Führungsnut 148 zum Führen der zweiten Greifbacke 142 ausgebildet. Weiter weist jede Greifereinheit 134 eine in den Zeichnungen nicht näher dargestellte Backenantriebseinheit auf. Die Backenantriebseinheiten aller Greifbacken können mittels einer ebenfalls nicht näher dargestellten gemeinsamen Antriebseinrichtung synchron antreibbar sein. Alternativ können die Backen aller, einer Gruppe oder einzelner Greifer 132 z. B. über Elektromotoren einzeln antreibbar sein. Die Backenantriebseinrichtung bzw. die Backenantriebseinheiten sind ebenfalls über die erste Steuerung 68 ansteuerbar.

Wie weiter aus Fig. 14 und den Fig. 12 und 13 entnehmbar, weist jeder Greiferschlitten 138 einen Kulissenstift 150 auf, der in eine entsprechende, pro Greifer 132 vorgesehene Kulisse 152 in der Antriebsplatte 128 eingreift. Bei dem dargestellten Ausführungsbeispiel ist die Kulisse 152 jeweils durch ein sich schräg zur Radialrichtung erstreckendes Langloch ausgebildet. Eine Relativdrehung zwischen Antriebsplatte 128 und Grundplatte 124 führt so über die als Langloch ausgebildete Kulisse 152 zu einer Verschiebung der Greiferschlitten 138 und somit der Greifer 132 entlang der Verschiebeschiene 136 in radialer Richtung. Hierdurch sind alle Greifer 132 gemeinsam in radialer Richtung bewegbar.

Wie am besten aus Fig. 14 ersichtlich, sind die einzelnen Greifer 132 pinzettenförmig ausgestaltet. Hierzu ist an jeder Greifbacke 140, 142 jeweils ein in radialer Richtung nach innen vorstehendes freies Ende 154 vorgesehen, wobei an der Spitze des freien Endes 154 ein auf die andere Greifbacke zu vorstehender Vorsprung 156 vorgesehen ist. Die zueinander gerichteten Flächen der Vorsprünge 156 bilden die Klemmflächen 158 zum Klemmen der jeweils zu verbiegenden Drahtenden 34a-34d. Hierzu ist die Dimension der Klemmflächen 158 derart gewählt, dass stets jeweils nur ein Drahtende 34a-34d zwischen den Vorsprüngen 156 eingeklemmt wird. Bei einigen Ausführungsformen können Klemmflächen zwischen zwei Vorsprüngen vorgesehen sein, so dass die Drahtenden an den Klemmflächen reibschlüssig und an zwischen den Vorsprüngen formschlüssig erfassbar sind.

Wie aus Fig. 6 ersichtlich, steuert die erste Steuerung 68 außerdem auch die erste Relativbewegungsvorrichtung 56 an, dies ist jeweils diejenige Relativbewegungsvorrichtung, welche durch die Transportvorrichtung 60 in eine Position nahe der Radial-Biegevorrichtung 52 bewegt worden ist.

Derjenige Teilbereich des Drahtendenumformverfahrens, welcher zum Aufweiten der Drahtenden führt (das Verbiegen der Drahtenden 34a-34d aus der in Fig. 2 dargestellten Lage in die Fig. 3 dargestellte Lage) wird im Folgenden näher erläutert.

Zunächst wird das von der Hairpineinsteckvorrichtung 30 kommende Gehäuse 18 mit den aus den Gehäusenuten 20 hervorstehenden Drahtenden 34 an der Gehäusehalterung 64 fixiert, und die Klemmvorrichtung 50 wird derart an dem Gehäuse 18 fixiert, dass die Klemmvorrichtung 50 zwischen dem Gehäuse 18 und der Radial-Biegevorrichtung 52 angeordnet ist. Genauer ist die Klemmvorrichtung 50 an dem Ende des Gehäuses 18 angeordnet, wobei die Drahtenden 34a-34d, die gemeinsam aus einer Gehäusenute 20 herausragen, jeweils gemeinsam zwischen einem der Klemmfinger 86 und der ersten Klemmeinrichtung 74 verklemmt werden. Die entsprechende Aufnahmenut 106 der Klemmvorrichtung 50 ist dabei derart ausgebildet, dass die mit ihrem Ende herausstehende Nutisolierung 24 geschützt bleibt.

Dann wird das Gehäuse 18 mittels der ersten Relativbewegungsvorrichtung 56 mit den nach unten ragenden herausragenden Drahtenden 34a-34d axial in Richtung auf die Radial-Biegevorrichtung 52 verfahren.

Anfangs sind alle Greifer 132 durch entsprechende Relativstellung zwischen Grundplatte 124 und Antriebsplatte 128 in die am weitesten nach außen gefahrene Position verfahren. Die über die Klemmvorrichtung 50 weiter nach unten stehenden Drahtenden 34, 34a-34d werden in den Raum radial innerhalb der Greifer 132 eingefahren. Die Grundplatte 124 wird so positioniert, dass jeder Greifer 132 mittig zu einer Gehäusenut 20 ausgerichtet ist. Bei der dargestellten Ausführungsform sind weniger Greifer 132 als Gehäusenuten 20 vorgesehen. Beispielsweise sind 64 Gehäusenuten vorgesehen, jedoch nur 8 Greifer. Vorzugsweise gilt für die Anzahl n_{GN} der Gehäusenuten und die Anzahl n_{Gr} der Greifer 132: n_{GN} = M x n_{Gr}, wobei M, n_{GN} und n_{Gr} natürliche Zahlen sind.

Somit werden zunächst die Drahtenden 34a-34d, die aus einer Teilgruppe der Gehäusenuten 20 hervorstehen, radial aufgeweitet.

Hierzu steuert die erste Steuerung 68 die Antriebsplattenantriebseinrichtung 130 derart an, dass die Greifer 132 mit voneinander entfernten Greiferbacken 140, 142 auf die Höhe der radial am weitesten außen angeordneten ersten Drahtenden 34a verschoben werden. Anschließend wird die Backenantriebseinrichtung angesteuert, um die Greiferbacken 140, 142 zueinander zu bewegen und so die ersten Drahtenden 34a durch die Greifer 132 zu erfassen. Mit zusammengeführten Greifbacken 140 wird dann die Antriebsplattenantriebseinrichtung 130 durch die erste Steuerung 68 derart angetrieben, dass die Greifer 132 sich um einen vorbestimmten Betrag entlang der Verschiebeschiene 136 radial nach außen bewegen, um so die ersten Drahtenden 34a radial nach außen umzubiegen. Dabei bewirkt die erste abgerundete Biegeform 100 eine reproduzierbare Verbiegung der ersten Drahtenden 34a. Gleichzeitig wird die erste Relativbewegungsvorrichtung 56 angesteuert, um die Relativposition zwischen Gehäuse 18 und Radial-Biegevorrichtung 52 entsprechend der sich beim Verbiegen einstellbaren Änderung der Erstreckung der ersten Drahtenden 34 in axialer Richtung auszugleichen.

Anschließend werden die Greifbacken 140, 142 auseinander bewegt, und die Greifer 132 werden über Ansteuerung der Antriebsplattenantriebseinrichtung 130 auf die Radialposition der zweiten Drahtsegmente 48b bewegt, während die axiale Relativposition auf einen für das zweite Drahtende spezifischen Wert zum Beginn der Biegung der zweiten Drahtenden 34b eingestellt wird. Die zweiten Drahtenden 34b werden dann entsprechend durch zueinander Bewegen der Greifbacken 140 geklemmt und/oder formschlüssig gehalten und durch Bewegung der Greifer 132 radial nach außen um einen bestimmten, kleineren Betrag als die ersten Drahtenden 34a nach außen gebogen. Auch hierbei wird wiederum die axiale Relativposition entsprechend der Änderung der axialen Erstreckung der zweiten Drahtenden 34b nachgeführt.

Dieser Vorgang wird dann für das dritte Drahtende 34c wiederholt. Bei einer Ausführungsform bleibt das vierte Drahtende 34d in der ursprünglichen Stellung. Bei einer anderen Ausführungsform wird auch das vierte Drahtende 34d um einen kleinen Betrag nach außen gebogen, um auch eine Positionierung des vierten Drahtendes in einem engen Toleranzbereich sicher zu stellen. Grundsätzlich ist aber auch eine Biegung nach innen möglich, zumindest von einigen Drahtenden, beispielsweise der innersten Drahtenden 34d.

Anschließend fahren die Greifer 132 wieder in die radial äußerste Position und anschließend wird durch die erste Steuerung 68 die Grundplattenantriebseinrichtung 126 angetrieben, um die Grundplatte 124 ein Stück zu drehen, bis die Greifer 132 auf die Mitte der nächsten benachbarten Gehäusenut 20 eingestellt sind. Hier wiederholt sich dann der Vorgang des Aufweitens wieder beginnend mit dem ersten, radial äußersten Drahtende 34a bis zum dritten Drahtende 34c oder eventuell bis zum vierten Drahtende 34d.

Bei der hier dargestellten Ausführungsform, wo die Anzahl n_{Gr} der Greifer 132 ein Achtel der Anzahl n_{GN} der Gehäusenuten 20 ist, ist der Aufweitvorgang nach einer achtmaligen Verstellung der Grundplatte 124 beendet.

Bei anderen Ausführungsformen sind nicht vier Drahtenden 34a-34d pro Gehäusenut 20 vorgesehen, sondern eine abweichende Zahl. Auch bei diesen Ausführungsformen erfolgt das Aufweiten analog zu der anhand des Beispiels mit vier Drahtenden 34a-34d pro Gehäusenut 20 erläuterten Beispiel.

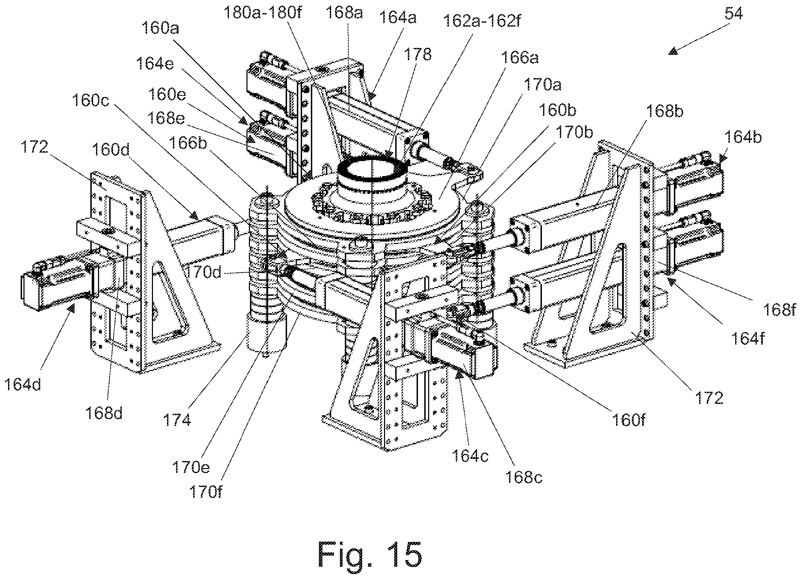

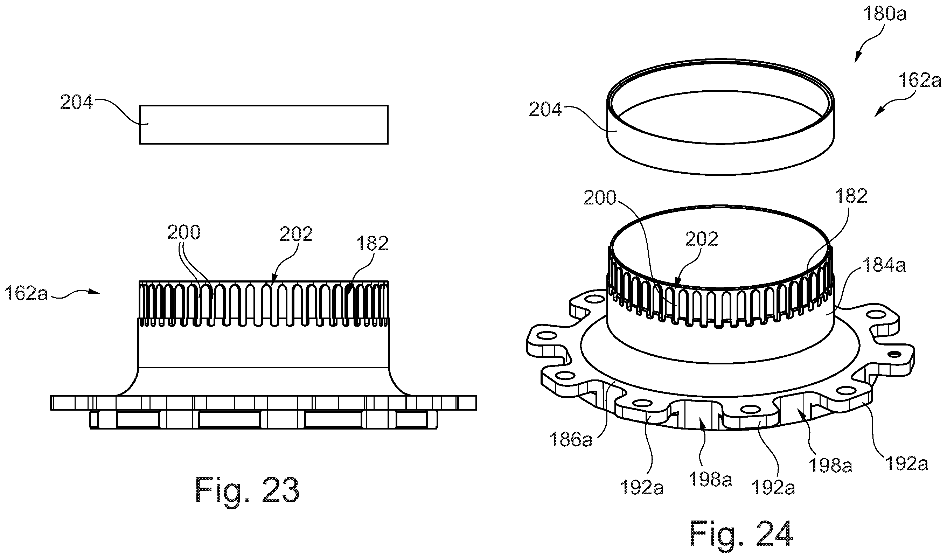

Im Folgenden werden anhand der Darstellungen in den Figuren 15-36 mögliche Ausführungsformen der Umfangs-Biegevorrichtung 54 näher erläutert.

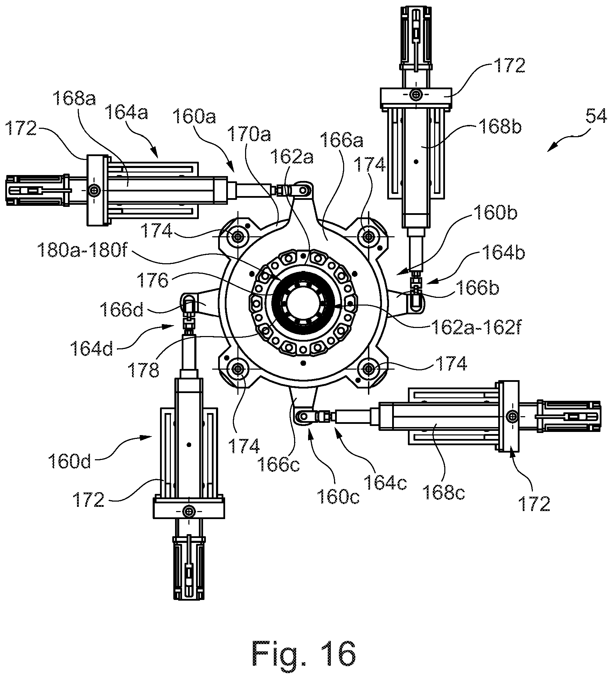

Dabei ist in den Figuren 15 und 16 eine Gesamtübersicht über eine Ausführungsform der Umfangs-Biegevorrichtung 54 dargestellt. Diese Ausführungsform weist eine erste bis sechste Aufnahme- und Dreheinrichtung 160a-160f auf. Jede Aufnahme- und Dreheinrichtung 160a-160f weist jeweils eine Aufnahme- und Dreheinheit 162a-162fzum Aufnehmen einer Gruppe von Drahtenden 34a oder 34b oder 34c oder 34d mit gleichem radialem Abstand zur Gehäusemitte und zum Verdrehen dieser Drahtenden 34a, 34b, 34c oder 34d zwecks Verbiegung in Umfangsrichtung und eine Antriebseinrichtung 164a-164f zum Antreiben einer Drehbewegung der Aufnahme- und Dreheinheit 162a-162f auf.

Jede Antriebseinrichtung 164a-164f weist ein um die gemeinsame Drehachse drehbar gelagertes ringförmiges Antriebselement 166a-166f und einen Aktor 168a-168fzum Drehantrieb des Antriebselements 166a-166fauf. In dem dargestellten Ausführungsbeispiel sind die Antriebselemente 166a-166fals Ringscheibenelemente mit einem Ausleger ausgebildet, wobei die Aktoren 168a-168f als Linearantriebe, beispielsweise als elektrische Spindelantriebe ausgebildet, gestaltet sind.

Weiter ist jedes Antriebselement 166a-166f auf einer stationär befestigten Ringtragscheibe 170a-170f drehgelagert. Die Aktoren 168a-168f sind an Maschinengestellen 172 stationär zu den Ringtragscheiben 170a-170f gelagert. Die Ringtragscheiben 170a-170f sind gemeinsam an Befestigungssäulen 174 befestigt. So sind die Antriebselemente 166a-166f sowie die daran in noch näher dargelegter Weise befestigten Aufnahme- und Dreheinheiten 162a-162f zwar um eine gemeinsame Drehachse auch relativ zueinander drehbar, werden jedoch in axialer Richtung stationär zueinander gehalten. Es ist lediglich ein Drehantrieb (erste bis sechste Antriebseinrichtung 164a-164f) jedoch kein gesonderter Axialantrieb notwendig.

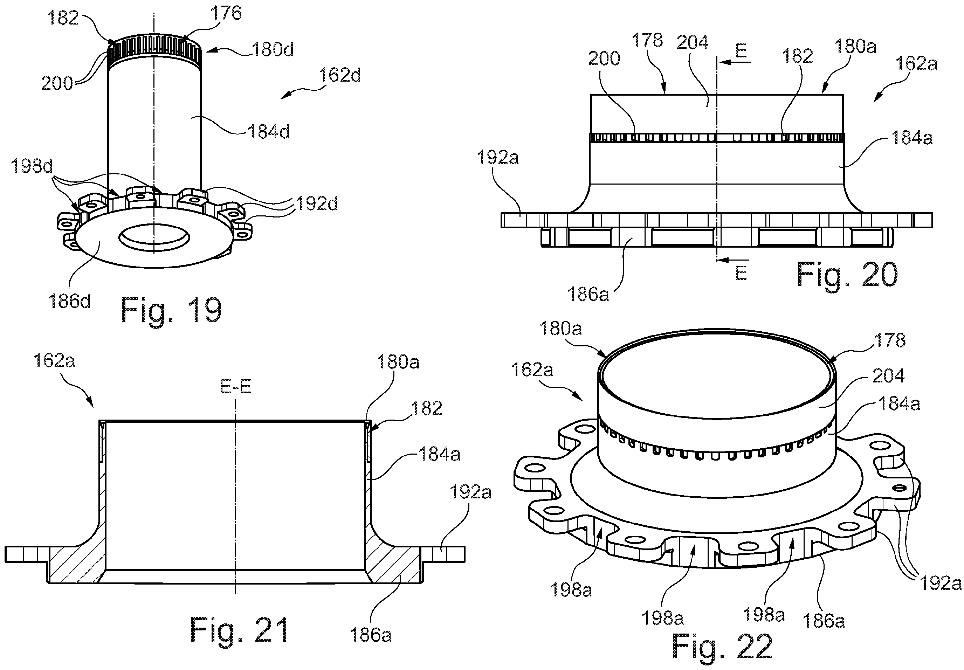

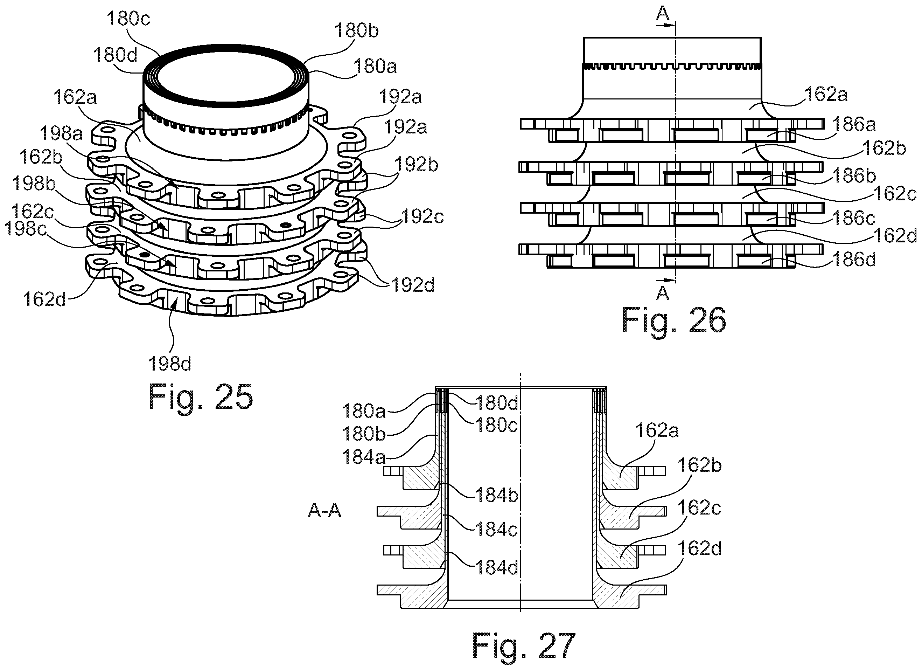

In den Figuren 20 bis 24 ist die erste Aufnahme- und Dreheinheit 162a in unterschiedlichen Darstellungen gezeigt. Fig. 19 zeigt eine perspektivische Darstellung der vierten Aufnahme- und Dreheinrichtung 162d und die Figuren 25 bis 27 zeigen eine Kombination der ineinander gestapelten ersten bis vierten Aufnahme- und Dreheinheit 162a-162d. Wie aus diesen Darstellungen ersichtlich, weist jede Aufnahme- und Dreheinheit 162a-162f eine ringförmige Anordnung von nach oben hin offenen und sich in axialer Richtung nach unten erstreckenden Aufnahmelöchern 176 zum Aufnehmen von Drahtenden auf. Die Ringanordnung von Aufnahmelöchern 176 wird an Schränkkronen 180a-180f ausgebildet, die umeinander liegend mit unterschiedlichem Durchmesser auf gleicher axialer Höhe angeordnet sind und alle nach oben hin auf der gleichen axialen Höhe enden. Dabei weist die erste Aufnahme- und Dreheinheit 162a eine Ringanordnung von Aufnahmelöchern 176 mit dem größten Durchmesser auf. Darin erfolgt nach innen gesehen die Ringanordnung der zweiten Aufnahme- und Dreheinheit 162b, dann die Ringanordnung der dritten Aufnahme- und Dreheinheit 162c usw. bis zur sechsten Aufnahme- und Dreheinheit 162f, deren Ringanordnung am weitesten innen angeordnet ist.

Somit ist die erste Aufnahme- und Dreheinheit 162a zum Aufnehmen der am weitesten radial außen angeordneten ersten Drahtenden 34a ausgebildet, wobei alle ersten Drahtenden 34a von allen Gehäusenuten 20 erfassbar und durch Drehung der ersten Aufnahme- und Dreheinheit 162a in Umfangsrichtung verbiegbar sind. Die zweite Aufnahme- und Dreheinheit 162b ist zur Aufnahme aller aus allen Gehäusenuten 20 hervorstehenden zweiten Drahtenden 34b ausgebildet. Zum Drahtenden Umformen wird die zweite Aufnahme- und Dreheinheit 162b in die entgegengesetzte Richtung wie die erste Aufnahme- und Dreheinheit 162a soweit verdreht, bis einige der ersten Drahtenden 34a aus einer der nächsten Gehäusenuten 20 auf der gleichen Umfangsposition wie einige der zweiten Drahtenden 34b zu liegen kommen, so dass Paare von miteinander zu verbindenden Drahtenden 34a, 34b nebeneinander zu liegen kommen. Die dritte Aufnahme- und Dreheinheit 162c dient zum Aufnehmen und Verbiegen der dritten Drahtenden 34c in Umfangsrichtung und die vierte Aufnahme- und Dreheinheit 162d dient zum Aufnehmen und Umbiegen der vierten Drahtenden 34d.

Die hier dargestellte Umfangs-Biegevorrichtung 54 weist noch eine fünfte und sechste Aufnahme- und Dreheinheit 162e und 162f auf, so dass auch noch fünfte und sechste Drahtenden umgebogen werden könnten. Zur Herstellung des Stators, von dem ein Vorprodukt in den Figuren 2 und 3 dargestellt ist, wo vier Drahtenden 34a-34d aus jeder Gehäusenute 20 hervorragen, reichen die erste bis vierte Aufnahme- und Dreheinrichtung 160a-160d aus, so dass die fünfte und sechste Aufnahme- und Dreheinrichtung 160e, 160f auch weggelassen werden könnten. Bei entsprechend geringerer oder größerer Anzahl von Drahtenden wäre die Anzahl von Aufnahme- und Dreheinrichtungen entsprechend anzupassen.

Das Umbiegen der Drahtenden 34a-34d in Umfangsrichtung erfolgt jeweils mit entgegengesetzter Drehrichtung für die in einer Gehäusenut 20 benachbart zueinander angeordneten Drahtenden 34a/34b, 34b/34c, 34c/34d und zwar so weit, dass mit einem benachbarten Drahtende aus einer der nächsten Gehäusenuten 20 jeweils ein Paar zur Verbindung so hergestellt werden kann, dass sich mehrere durchgängige Spulenwicklungen ergeben. Dabei müssen die jeweils äußeren Drahtenden 34a aufgrund des größeren Umfanges an der Außenseite um eine größere Strecke umgebogen werden als die jeweils ganz innen angeordneten Drahtenden 34d.

Daher werden die Hairpins 12 vorzugsweise bereits derart hergestellt und/oder in das Gehäuse 18 eingeschoben, dass die ersten Drahtenden 34a, wie dies in Fig. 2 und Fig. 3 dargestellt ist, mit einer größeren Länge vorstehen als die zweiten Drahtenden 34b, die zweiten Drahtenden 34b mit einer größeren Länge vorstehen als die dritten Drahtenden 34c und die dritten Drahtenden 34c wiederum mit einer größeren Länge vorstehen als die vierten Drahtenden 34d. Die Unterschiede in der Länge hängen jeweils von den Unterschieden der zu überbrückenden Strecke in Umfangsrichtung ab.

Beim Verbiegen der Drahtenden 34a-34d durch Drehung der entsprechenden Aufnahme- und Dreheinheit 162a-162d verkürzt sich aufgrund der Umbiegung die jeweilige axiale Erstreckung des sich immer weiter verbiegenden Drahtendes 34a-34d.

Deswegen wird beim Schränkprozess in der Umfangs-Drahtendenumformvorrichtung 38 die zweite Relativbewegungsvorrichtung 58 entsprechend nachgeführt, um den Längenausgleich auszugleichen. Die entsprechende Ansteuerung erfolgt über die zweite Steuerung 70, welche sowohl alle Antriebseinrichtungen 164a-164f und somit über die Aktoren 168a-168f die Antriebselemente 166a-166f ansteuert als auch die zweite Relativbewegungsvorrichtung 58 ansteuert.

Dabei ergeben sich für die unterschiedlich langen Drahtenden 34a-34d und die unterschiedlichen Strecken der Verbiegung in Umfangrichtung für die jeweiligen Drahtenden 34a-34d mit unterschiedlichen radialen Abstand zur Gehäusemittelachse unterschiedliche Bewegungsprofile K1, K2, K3, K4.

Anstelle nun für jede Aufnahme- und Dreheinrichtung 160a-160f für den unterschiedlichen Längenausgleich eine gesonderte Bewegung in Axialrichtung vorzusehen, wird die Drehbewegung der einzelnen Aufnahme- und Dreheinheiten 162a-162f unterschiedlich derart gesteuert, dass in Abhängigkeit von der Relativbewegung zwischen Gehäuse 18 und Umfangs-Biegevorrichtung 54 und in Abhängigkeit von der sich durch die Verbiegung der jeweiligen Drahtenden 34a-34d in Umfangsrichtung sich ergebende axiale Längenänderung die Drehbewegung jeder Aufnahme- und Dreheinheit 162a-162f individuell so angesteuert wird, dass sich in den Aufnahmelöchern 176 keine Relativbewegung zwischen dem jeweiligen Endbereich des Drahtendes 34a-34d und dem Aufnahmeloch 176 ergibt.

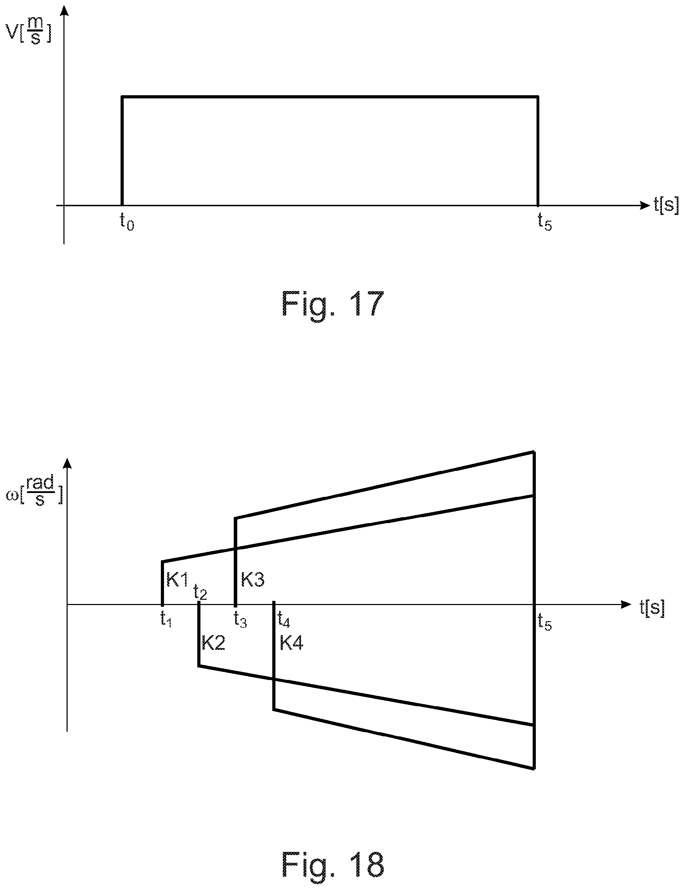

Stark vereinfachte Beispiele für entsprechende Bewegungsprofile K1-K4 sind in den Figuren 17 und 18 dargestellt. Fig. 17 zeigt hierbei das Bewegungsprofil der zweiten Relativbewegungsvorrichtung 58 und zwar genauer die Relativgeschwindigkeit v zwischen dem Gehäuse 18 und der Umfangs-Biegevorrichtung 54. Fig. 18 zeigt zur gleichen Zeit die Drehgeschwindigkeiten ω für die erste bis vierte Ausnahme- und Dreheinheit 162a-162d.

Wie aus Fig. 17 ersichtlich wird hierbei vorzugsweise das Gehäuse 18 mit einer gleichförmigen Geschwindigkeit v auf die Umfangs-Biegevorrichtung 54 zu bewegt.

Die ersten Drahtenden 34a befinden sich nach dem zuvor erläuterten Aufweitprozess auf der radialen Höhe der Ringanordnung von Aufnahmelöchern 176 der ersten Aufnahme- und Dreheinheit 162a und werden kurz vor dem Zeitpunkt t₁ mit ihren Endbereichen ein Stück in die Aufnahmelöcher 176 eingefahren. Der Zeitpunkt t₁ wird dabei so gewählt, dass ein genügend langer Endbereich der ersten Drahtenden 34a in die Aufnahmelöcher 176 der ersten Aufnahme- und Dreheinheit 162a eingefahren ist. Anschließend erfolgt, wie dies in der Kurve K₁ dargestellt ist, der Beginn einer Drehbewegung der ersten Aufnahme- und Dreheinheit 162a in der ersten Drehrichtung (positive Achse von Fig. 18). Die Drehgeschwindigkeit ω ist dabei nicht gleich, sondern verändert sich entsprechend der sich aus der gleichmäßigen Geschwindigkeit des Gehäuses 18 auf die Umfangs-Biegevorrichtung 54 zu und aus der sich durch die beim Drehen ergebenden axialen Längenänderung der ersten Drahtenden 34a ergebenden Anforderung. Die Kurve K₁ ist hierbei vereinfacht linear ansteigend angegeben. Der tatsächliche Bewegungsablauf ist etwas komplizierter, lässt sich aber leicht durch einfache Versuche oder rechnerisch ermitteln. Zielkriterium ist hierbei, dass sich die Endbereiche in axialer Richtung nicht innerhalb der Aufnahmelöcher verlagern.

Kurz vor dem Zeitpunkt t₂ fahren die Endbereiche der zweiten Drahtenden 34b in die Aufnahmelöcher 176 der zweiten Aufnahme- und Dreheinheit 162b ein, bis sie beim Zeitpunkt t₂ genügend weit darin eingefahren sind. Zu diesem Zeitpunkt t₂ beginnt die Drehung der zweiten Aufnahme- und Dreheinheit 162b in der entgegengesetzten Drehrichtung zu der Drehung der ersten Aufnahme- und Dreheinheit 162a (negativer Bereich bei Fig. 18). Die entsprechende Drehung der zweiten Aufnahme- und Dreheinheit 162b ist durch die Kurve K₂ ebenfalls vereinfacht als linear ansteigend angedeutet. Auch hier ist der eigentliche Bewegungsablauf komplizierter. Die Kurven K₃ und K₄ zeigen mit ihren Startpunkten t₃ und t₄ das jeweilige entsprechende Bewegungsprofil für die dritte Aufnahme- und Dreheinheit 162c bzw. die vierte Aufnahme- und Dreheinheit 162d. Wird hier ein Stator mit sechs Drahtenden pro Gehäusenut 20 verarbeitet, würden noch entsprechende Kurven für die fünfte und sechste Aufnahme- und Dreheinheit 162e, 162f angegeben.

Aus Fig. 17 und 18 ist ersichtlich, dass die unterschiedlichen Aufnahme- und Dreheinheiten 162a-162f mit unterschiedlichen Bewegungsprofilen angetrieben werden, um mit einfachem maschinellem Aufbau ohne gesonderte Axialantriebe den Längenausgleich beim Umformen der Drahtenden 34a-34d in Umfangsrichtung derart zu bewerkstelligen, dass möglichst keine Relativbewegung der Endbereiche der Drahtenden 34a-34d in den jeweiligen durch die Aufnahmelöcher 176 gebildeten Drahtendenaufnahme 182 erfolgt.

Bei dem zuvor erläuterten Umbiegen der Drahtenden 34a-34d in Umfangsrichtung mittels der Umfangs-Biegevorrichtung 54 ist die Klemmvorrichtung 50 weiterhin zwischen dem Gehäuse 18 und der Biegevorrichtung 54 angeordnet. Die zweite abgerundete Biegeform 102 an den Klemmfingern 86 wirkt dabei als Biegeform für die in die eine Drehrichtung umzubiegenden Drahtenden 34a, 34c und die dritte abgerundete Biegeform 104 an den Klemmfingern 86 wirkt dabei als Biegeform für die in die andere Drehrichtung umzuformenden Drahtenden 34b, 34d. Aufgrund der Klemmvorrichtung 50 wird auch beim Umformen der Drahtenden 34a-34d in Umfangsrichtung die Position der Drahtenden 34a-34d definiert beibehalten. Das Umformen erfolgt in höchst reproduzierbarer Weise. Außerdem werden die Nutisolationen 24 geschützt.

Nach der Fertigstellung des Drahtendenumformvorgangs (Schränken) wird die Klemmvorrichtung 50 wieder entfernt, wozu zunächst die Klemmfinger 84 radial nach außen bewegt werden und so aus den Zwischenräumen zwischen den Drahtenden 34a-34d herausgefahren werden; anschließend kann die Klemmvorrichtung 50 von dem Gehäuse 18 gelöst werden und in axialer Richtung von dem Gehäuse 18 entfernt werden.

Das Gehäuse 18 mit den umgeformten Drahtenden 34a-34d wird dann zur nächsten Station in der Bauteilherstellvorrichtung 10 weiter transportiert, beispielsweise zu einer Vorspann- und/oder Fixiervorrichtung 40, wo die Paare von Drahtenden zum Durchführen von Schneid- und Schweißvorgängen eingefangen und/oder miteinander verspannt werden.

Wie zuvor erläutert, werden zum Umformen der Drahtenden 34a-34d die Endbereiche derselben axial in eine Ringanordnung von Aufnahmelöchern 176 eingeschoben und dann durch Verdrehung der Ringanordnung verschränkt.

Die Aufnahmelöcher 176 sind vorzugsweise an sogenannten Schränkkronen 180a-180f ausgebildet, die entsprechend bei einer automatisierten Serienproduktion von Statoren hochbelastet sind und daher von Zeit zu Zeit gewartet und/oder ausgetauscht werden sollten.

Im Folgenden wird anhand der Darstellungen in den Figuren 19 bis 33 die besondere Ausgestaltung von bevorzugten Ausführungsbeispielen für die Umfangs-Biegevorrichtung 54 erläutert, die einen leichten Austausch bzw. eine leichte Montage und Demontage der Aufnahme- und Dreheinheiten 162a-162f ermöglichen.

Fig. 19 zeigt ein Beispiel für die vierte Aufnahme- und Dreheinheit 162d und die Figuren 20 bis 24 zeigen ein Beispiel für die erste Aufnahme- und Dreheinheit 162a. Wie aus den Figuren 19 bis 24 ersichtlich, weisen die Aufnahme- und Dreheinheiten 162a-162f die Schränkkronen 180a-180f auf, an der die Ringanordnung von Aufnahmelöchern 176 ausgebildet sind, welche als Drahtendenaufnahmen 182 wirken. Die Schränkkronen 180a-180f sind an einem Ende eines zylindermantelförmigen Bereichs 184a-184f vorgesehen, an dessen anderen Ende ein Ringscheibenflansch 186a-186f ausgebildet ist, mittels dem die Aufnahme- und Dreheinheit 162a über eine lösbare Verbindung 188a-188f mit dem jeweiligen, als Antriebsring ausgebildeten Antriebselement 166a-166f verbunden ist.

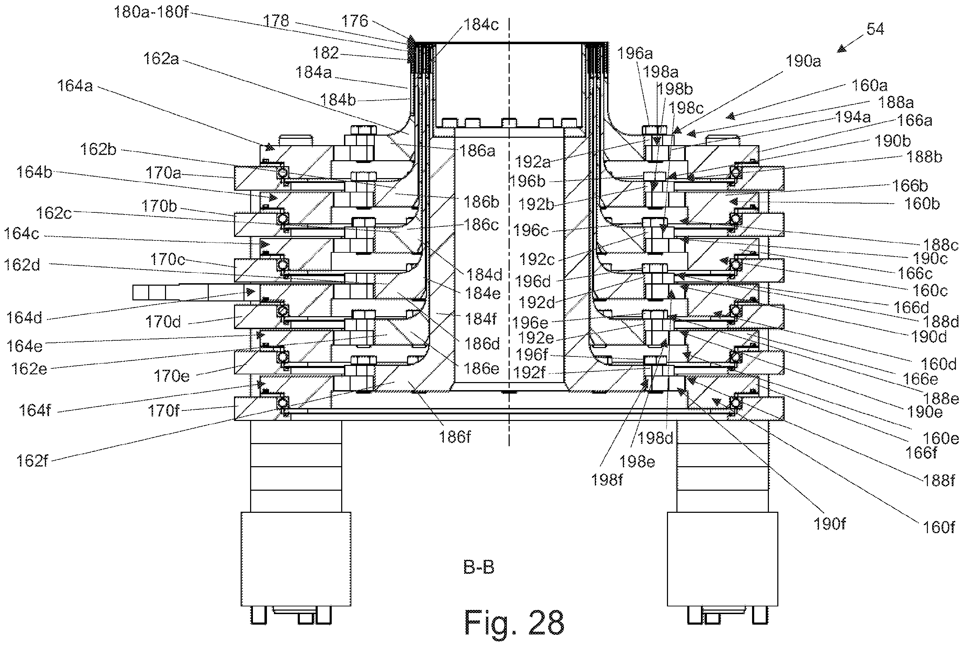

In den Figuren 25 bis 27 ist eine Kombination der ineinander geschachtelten ersten bis vierten Aufnahme- und Dreheinheit 162a-162d dargestellt, während die Figuren 28-33 eine Kombination der ersten bis sechsten Aufnahme- und Dreheinrichtung 160a-160f in unterschiedlichen Positionen zeigen.

Dabei sind das erste bis sechste Antriebselement 166a-166f übereinander angeordnet, wobei das erste Antriebselement 166a ganz oben angeordnet ist und das sechste Antriebselement 166f ganz unten angeordnet ist und die verbleibenden Antriebselemente 166b-166e dazwischen verteilt liegen. Entsprechend haben die zylindermantelförmigen Bereiche 184a-184f unterschiedliche Erstreckungen in axialer Richtung, wobei der erste zylindermantelförmige Bereich 184a derjenige Bereich mit der kürzesten axialen Erstreckung und der sechste zylindermantelförmige Bereich 184f derjenige mit der längsten axialen Erstreckung ist. Der sechste zylindermantelförmige Bereich hat den geringsten Außenumfang, der gerade so bemessen ist, dass er in den Innenumfang des fünften zylindermantelförmigen Bereichs 184e passt. Darum ist der vierte zylindermantelförmige Bereich 184d angeordnet; ganz außen ist der erste zylindermantelförmige Bereich 184a angeordnet; die verbleibenden zylindermantelförmigen Bereiche 184c sind dazwischen angeordnet.

Wie am besten aus den Figuren 28 bis 33 ersichtlich, weist jede der ersten bis sechsten lösbaren Verbindungen 188a-188f eine Reihe von über den Umfang verteilt angeordneten Verbindungsbrücken 190a-190f auf. Jede Verbindungsbrücke 190a-190f erstreckt sich radial und weist jeweils ein abtriebsseitiges Brückenelement 192a-192f an der Aufnahme- und Dreheinheit 162a-162f, ein antriebsseitiges Brückenelement 194a-194f an dem Antriebselement 166a-166f und ein Verbindungselement 196a-196f zum lösbaren Verbinden der Brückenelemente 192a-f, 194a-f auf.

Wie am besten aus den Figuren 19 bis 24 ersichtlich, sind die abtriebsseitigen Brückenelemente 192a-192f als über den Umfang des Ringflansches 186a-186f verteilte, sich radial erstreckende Vorsprünge in Form von Anschraubflanschen mit Bohrungen ausgebildet, die sich in axialer Richtung über eine Hälfte der axialen des Ringflansches 186a-186f erstrecken.

Die antriebsseitigen Elemente 194a-194f sind als an dem Innenumfang der ringförmigen Antriebselemente 196a-196f nach innen vorspringende Vorsprünge in Form von Anschraubflanschen mit Gewindebohrungen ausgebildet, deren axiale Höhe der zweiten Hälfte der axialen Erstreckung des Ringflansches 186a-186f entspricht. Die Verbindungselemente 196a-196f sind überwiegend durch Gewindeschrauben gebildet, die mit ihrem Gewindeschaft in die Gewindebohrungen der antriebsseitigen Brückenelemente 194a-194f einschraubbar sind, wobei deren Schraubköpfe an den Berandungen der Bohrungen der abtriebsseitigen Brückenelemente 192a anliegen und von oben mittels eines Werkzeugeingriffes erfassbar sind. Eines der Verbindungselemente, z. B. das im Bereich eines Auslegers, ist andersartig gestaltet, zum Beispiel durch einen Vorsprung an einem der Brückenelemente 192a-f, 194a-f und einem komplementären Rücksprung an dem anderen der Brückenelemente, um so eine vorbestimmte Relativposition sicher zu stellen.

Wie ein Vergleich der Figuren 19 bis 24 und die Darstellungen in den Figuren 25 bis 27 zeigen, bilden die über den Umfang des Ringflansches 196a-196f verteilten abtriebsseitigen Brückenelemente 192a-192f eine Zahnstruktur, deren Zahnteilung an der ersten bis sechsten Aufnahme- und Dreheinheit 162a-162f gleich ist. Zwischen den Verbindungsbrücken 190a-190f sind Durchlässe 198a-198f ausgebildet, deren lichte Weite in Umfangsrichtung größer bemessen ist als die maximale Erstreckung der Brückenelemente 192a-f, 194a-f in Umfangsrichtung. So können die Brückenelemente 192a-192f, 194a-f bei entsprechend relativ zueinander verdrehter Aufnahme- und Dreheinheit 162a-f einerseits und Antriebselement 166a-166f andererseits in axialer Richtung aneinander vorbei geführt werden.

Wie aus den Figuren 19 bis 24 ersichtlich, sind die Schränkkronen 180a-180f jeweils dadurch gebildet, dass am Ende des zylindermantelförmigen Bereichs 184a-184f sich axial erstreckende Längsnuten 200 eingefräst sind, wobei diese Längsnuten 200 an ihren freien Enden Einführschrägen 202 aufweisen. Die Anzahl der Längsnuten 200 entspricht der Anzahl n_{GN} der Gehäusenuten 20. Auf dieser Anordnung von über den Umfang verteilten Längsnuten 200 wird ein Schränkkronenring 204 geschoben, so dass die Aufnahmelöcher 176 an drei Seiten durch die Längsnuten-Ränder und an der radial äußeren Seite durch den Schränkkronenring 204 begrenzt sind.

Zum Austausch dieser Schränkkronen 180a-180f wird ein Demontage- und Montageverfahren durchgeführt, welches im Folgenden anhand der Darstellungen in den Figuren 28 bis 33 näher erläutert wird.

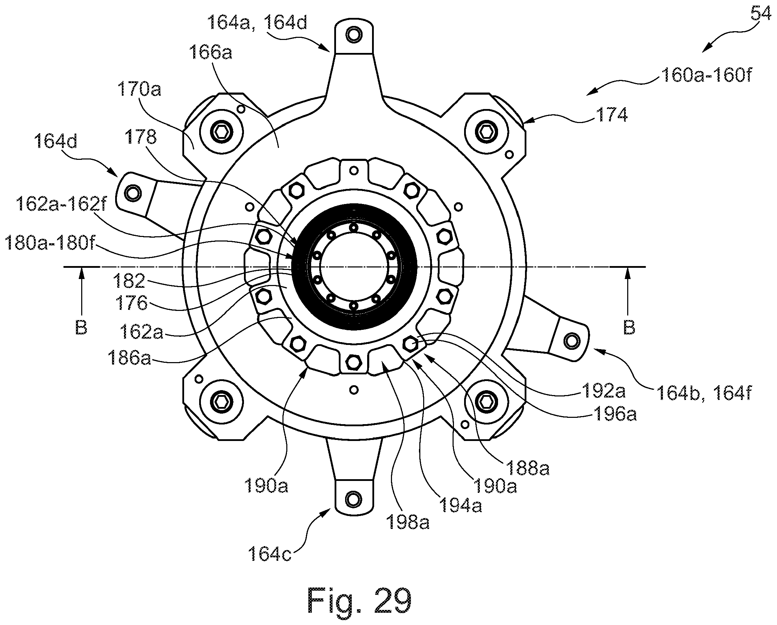

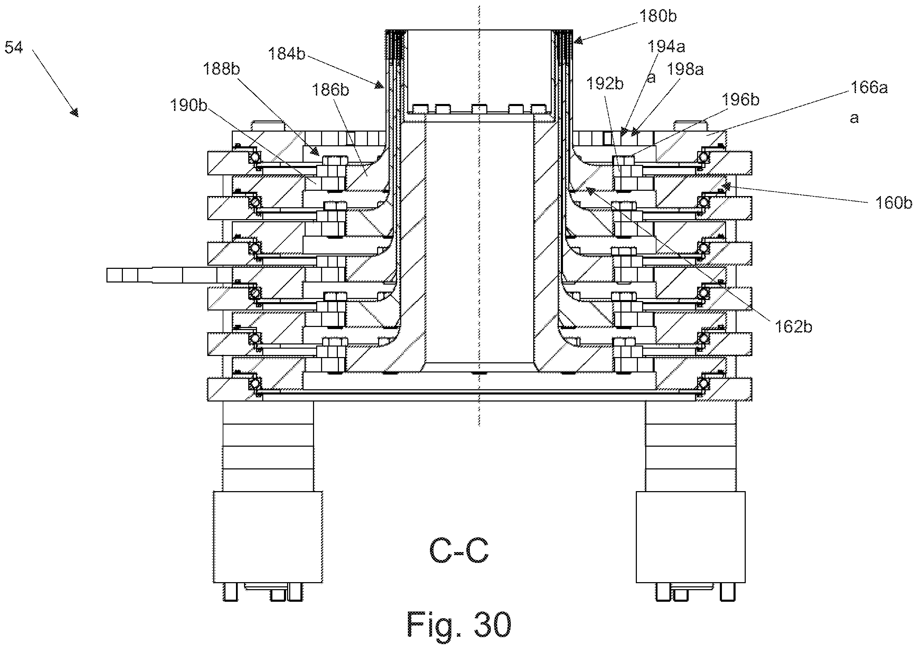

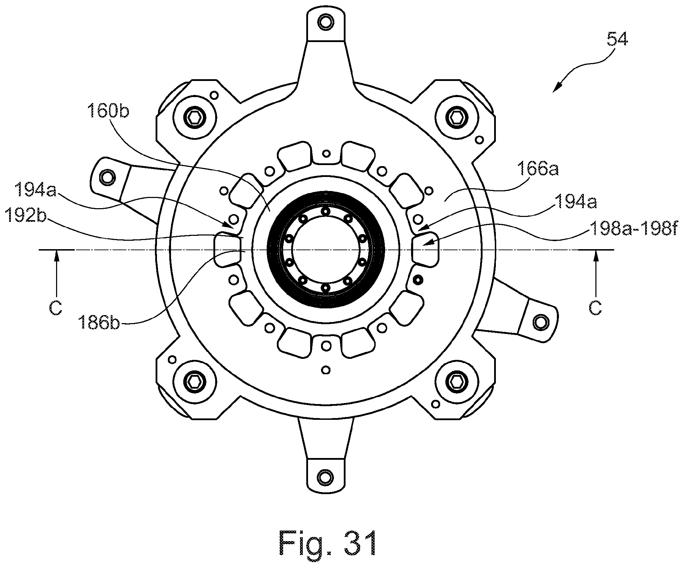

Die Figuren 28 und 29 zeigen dabei eine Ausgangstellung und Betriebsstellung der Umfangs-Biegevorrichtung 54. Hier werden zunächst die ersten Verbindungselemente 196a gelöst. Dies kann einfach durch Werkzeugangriff an den Schraubenköpfen geschehen. Anschließend kann die erste Aufnahme- und Dreheinheit 162a nach oben hin entfernt werden, was zu der in Figuren 30 und 31 dargestellten Situation führt. Wie aus Fig. 31 ersichtlich sind hierbei alle Brückenelemente 192a-192f, 194a-194f zueinander ausgerichtet.

Die zweite Steuerung 70 enthält einen Demontagemodus bzw. Montagemodus, mit der die einzelnen Antriebselemente 166a-166f einzeln zum Verfahren in eine jeweilige Demontagestellung verfahrbar sind.

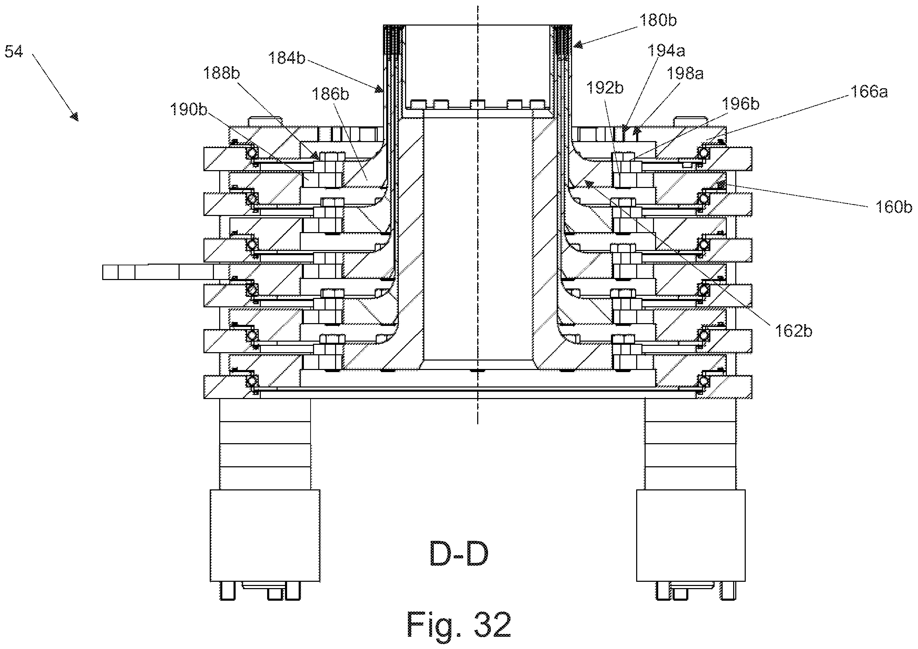

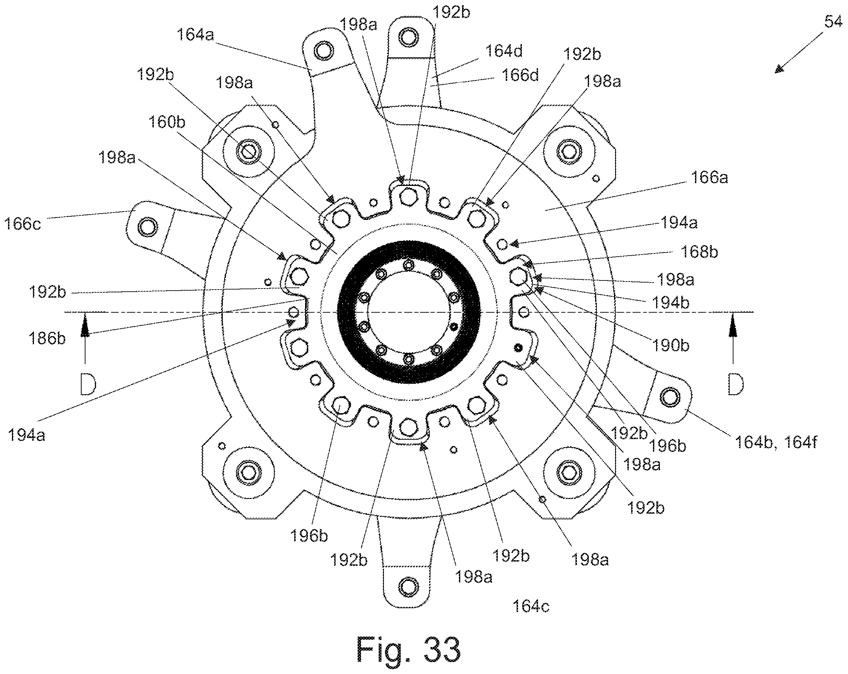

Dies ist in den Figuren 32 und 33 für das erste Antriebselement 166a dargestellt. Dieses erste Antriebselement 166a wird in der Demontagestellung so relativ zu dem zweiten Antriebselement 166b und der daran noch befestigten zweiten Aufnahme- und Dreheinheit 162b verdreht, dass die zweiten Verbindungsbrücken 190b mit den ersten Durchlässe 198a fluchten; vorzugsweise sind die Mitten der zweiten Verbindungsbrücken 190b mit den Mitten der ersten Durchlässe 198a ausgerichtet. In dieser Stellung sind die Schraubenköpfe der zweiten Verbindungselemente 196b durch die ersten Durchlässe 198a hindurch zugängig, so dass die zweiten Verbindungselemente 196b entfernbar sind.

Nach dem Entfernen der zweiten Verbindungselemente 196b kann die zweite Aufnahme- und Dreheinrichtung 160b durch Verlagerung in axialer Richtung nach oben hin entfernt werden, wobei die zweiten abtriebsseitigen Brückenelemente 192b durch die ersten Durchlässe 198a zwischen den ersten antriebsseitigen Brückenelementen 194a des ersten Antriebselements 160a geführt werden können. Anschließend wird auch das zweite Antriebselement 166b in die Demontagestellung verfahren, wobei die ersten und die zweiten antriebsseitigen Brückenelemente 194a, 194b miteinander fluchten und durch den ersten und zweiten Durchlass 198a, 198b hindurch die dritten Verbindungselemente 196c zugänglich sind. Nach Entfernen der dritten Verbindungselemente kann die dritte Aufnahme- und Dreheinheit 162c nach oben hinweg in axialer Richtung entnommen werden, wobei die dritten abtriebsseitigen Brückenelemente 192c durch die entsprechenden ersten und zweiten Durchlässe 198a, 198b zwischen den entsprechenden antriebsseitigen Brückenelementen 194a, 194b des ersten und zweiten Antriebselements 166a, 166b hindurch geführt werden. Dieser Vorgang lässt sich zur Entnahme der weiteren Aufnahme- und Dreheinrichtungen 160d-160f wiederholen.

Die Montage der neuen Aufnahme- und Dreheinrichtungen 160f-160a erfolgt dann entsprechend in umgekehrter Reihenfolge, wobei mit der sechsten Aufnahme- und Dreheinrichtung 160f begonnen wird, während das erste bis fünfte Antriebselement 166a-e in der Demontagestellung sind.

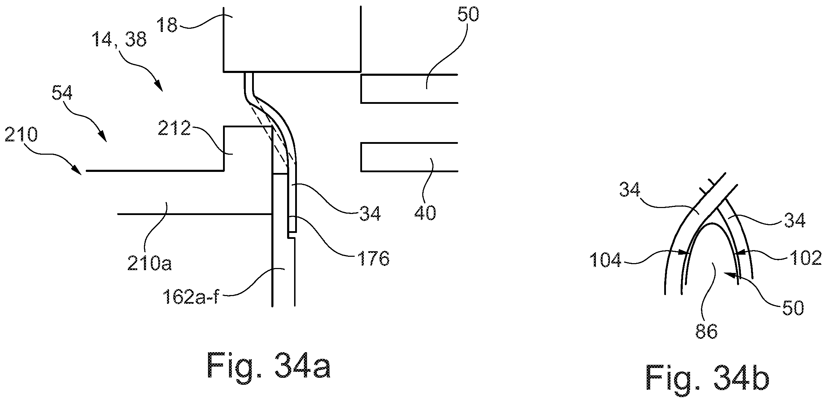

Im Folgenden wird anhand der Figuren 34a, 34b, 35 und 36 noch eine weitere Ausführungsform der Umfangs-Drahtendenumformvorrichtung 38 erläutert. Diese Ausführungsform der Umfangs-Drahtendenumformvorrichtung 38 entspricht weitgehend der oben erläuterten Ausführungsform der Umfangs-Drahtendenumformvorrichtung 38 und weist die gleichen Merkmale auf, so dass dies bezüglich auf die obige Beschreibung verwiesen wird. Zusätzlich weist diese Ausführungsform der Umfangs-Drahtendenumformvorrichtung 38 noch wenigstens eine Radial-Abstützeinrichtung 210 zum radialen Abstützen von Drahtenden 34 während der Umformung der Drahtenden 34 in Umfangsrichtung auf.

In den Figuren 34a und 34b wird die Wirkweise einer solchen Radial-Abstützeinrichtung 210 näher erläutert. Fig. 34a zeigt hierbei das Gehäuse 18 des Bauteils mit einem daraus hervorstehenden Drahtende 34, welches durch die Umfangs-Drahtendenumformvorrichtung 38 in Umfangsrichtung umzuformen ist und hierzu in eine der Aufnahme- und Dreheinheiten 162a-162f eingeführt ist, wobei das Drahtende 34, wie in Fig. 34b dargestellt, an der jeweiligen Biegeform 102, 104 des Klemmfingers 86 der Klemmvorrichtung 50 anliegt.

Erfolgt nun das hier auch als Schränken bezeichnete Umformen des Drahtendes 34 in Umfangsrichtung, dann hat das Drahtende 34 die mit gepunkteten Linien in Fig. 34a andeutete Tendenz, sich auf kürzestem Wege geradlinig zu erstrecken, so dass durch die Radial-Drahtendenumformvorrichtung 36 erfolgte Umformung in Radialrichtung (Weiten) wieder umgeformt werden würde.

Um dies zu verhindern, weist die Umfangs-Biegevorrichtung 54 wenigstens eine Radial-Abstützeinrichtung 210 auf, die das Drahtende beim Schränken radial abstützt, so dass die mit durchgezogener Linie gezeigte Form in Radialrichtung erhalten bleibt.

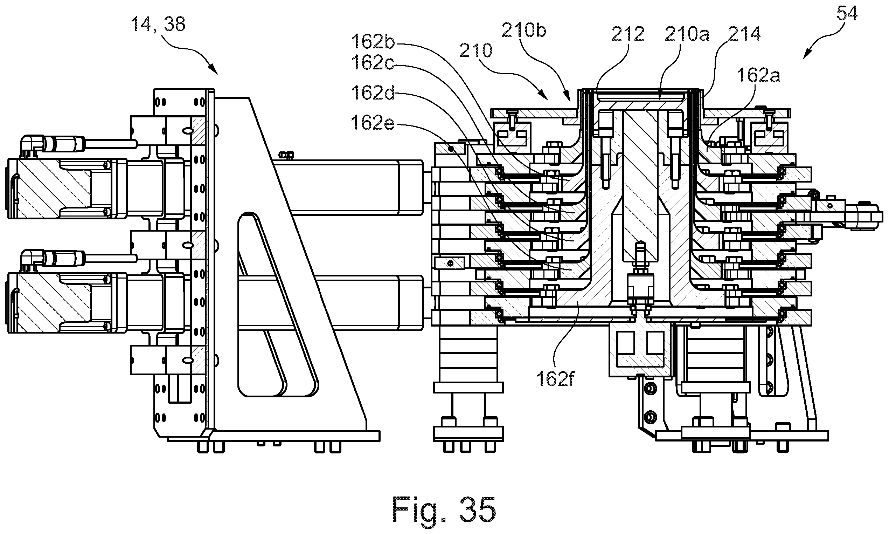

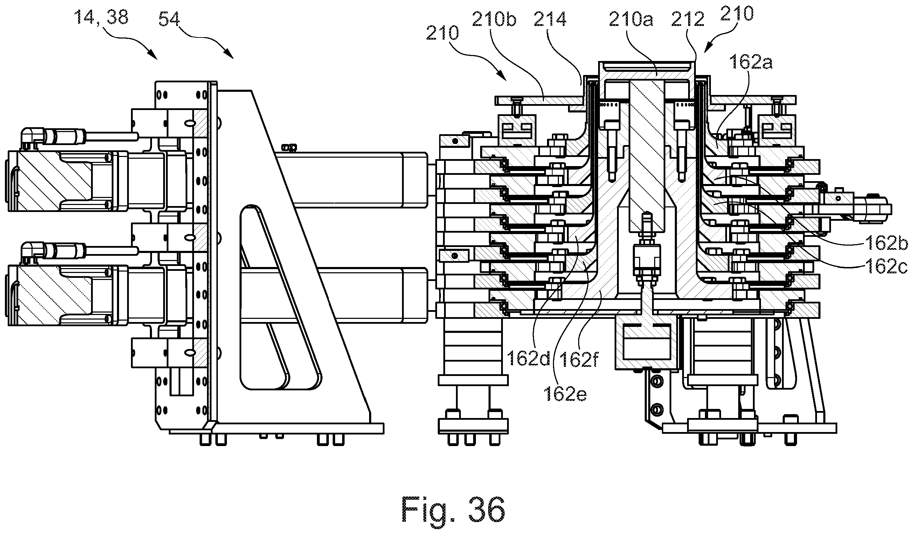

Insbesondere weist die in den Figuren 35 und 36 gezeigte Ausführungsform der Umfangs-Biegevorrichtung 54 eine als innere Hülse 212 ausgebildete innere Radial-Abstützeinrichtung 210a und eine als äußere Hülse 214 ausgebildete äußere Radial-Abstützeinrichtung 210b auf. Die Radial-Abstützeinrichtungen 210, 210a, 210b sind zwischen einer in Fig. 35 dargestellten Rückzugsposition und einer in Fig. 36 dargestellten Abstützposition axial verfahrbar.

Die Hülsen 212, 214 sind als Ringhülsen mit einem kreisförmigen Umfang und einer Symmetrieachse ausgebildet, die mit der Drehachse der Aufnahme- und Dreheinheiten 162a-162f zusammenfällt. Die Hülsen 212, 214 sind, beispielsweise hydraulisch oder pneumatisch, durch die zweite Steuerung 70 gesteuert zwischen der Rückzugsposition und der Abstützposition bewegbar. Die Bewegung aus der Rückzugsposition in die Abstützposition erfolgt mit einem vorbestimmten Maximaldruck, beispielsweise von 3 bis 4 Bar, so dass die Bewegung bei Auffahren gegen einen Anschlag oder gegen ein Hindernis bei Erreichen des maximalen Drucks stoppt. Hierdurch ist zumindest die innere Hülse 212 nachgiebig ausgestaltet.

Die als äußere Hülse 214 ausgebildete äußere Radial-Abstützeinrichtung 210b liegt in der Abstützposition radial außen an Drahtenden 34, 34a an, so dass ein Ausbauchen der Drahtenden 34, 34b nach außen verhindert wird.

Die Steuerung der Radial-Abstützeinrichtungen 210, 210a, 210b erfolgt so, dass zunächst die in Fig. 35 dargestellte Rückzugsposition eingestellt ist, wenn die Drahtenden in die Aufnahmelöcher 176 eingefahren werden. Daraufhin wird, bevor die Drehbewegung der Aufnahme- und Dreheinheiten 162a-162f beginnt, die in Fig. 36 gezeigte Abstützposition der Radial-Abstützeinrichtungen 210, 210a, 210b angefahren. Die Drehbewegung und damit das Umformen der Drahtenden 34 in Umfangsrichtung erfolgt mit den in dieser Abstützposition eingefahrenen Radial-Abstützeinrichtungen 210, 210a, 210b. Dabei wird der Steuerdruck auf die innere Hülse 212 vermindert, so dass sich die innere Hülse entsprechend der erwünschten axialen Bewegung der Drahtenden 34 während des Umformens mitbewegen kann.

Anschließend werden die Radial-Abstützeinrichtungen 210, 210a, 210b wiederum in die in Fig. 35 gezeigte Rückzugsposition verfahren, und es kann die Vorspann- und/oder Fixiervorrichtung 40 zum Vorspannen und/oder Fixieren der Drahtenden 34 angesetzt werden. Das Bauteil wird dann zusammen mit dieser Vorspann- und/oder Fixiervorrichtung 40 aus dem Eingriff mit der Umfangs-Biegevorrichtung 54 verfahren, indem die Drahtenden 34 aus den Aufnahmelöchern 176 herausgezogen werden. Das Bauteil wird dann zum nächsten Bearbeitungsschritt der Bauteilherstellvorrichtung 10 weiter transportiert.

### Bezugszeichenliste:

- 10: Bauteilherstellvorrichtung
- 12: Hairpin
- 14: Drahtendenumformvorrichtung
- 16: Gehäuseherstellvorrichtung
- 18: Gehäuse
- 20: Gehäusenut
- 22: Vorrichtung zum Herstellen von Nutisolierungen
- 24: Nutisolierung
- 26: Hairpinherstellvorrichtung
- 28: Vorpositionierungsvorrichtung
- 30: Hairpineinsteckvorrichtung
- 32: Wicklungskopf
- 34: Drahtende
- 34a: erstes Drahtende
- 34b: zweites Drahtende
- 34c: drittes Drahtende
- 34d: viertes Drahtende
- 36: Radial-Drahtendenumformvorrichtung
- 38: Umfangs-Drahtendenumformvorrichtung
- 40: Vorspann- und/oder Fixiervorrichtung
- 42: Drahtendenschneidvorrichtung
- 44: Drahtendenschweißvorrichtung
- 46: Vorrichtungen zum elektrischen Kontaktieren und/oder Testen und/oder Vergießen, ....
- 48a: erstes Drahtsegment
- 48b: zweites Drahtsegment
- 48c: drittes Drahtsegment
- 48d: viertes Drahtsegment
- 50: Klemmvorrichtung
- 52: Radial-Biegevorrichtung
- 54: Umfangs-Biegevorrichtung
- 56: erste Relativbewegungsvorrichtung
- 58: zweite Relativbewegungsvorrichtung
- 60: Transportvorrichtung
- 62: Steuerungsvorrichtung
- 64: Gehäusehalterung
- 66: Gehäusehalterungsantrieb
- 68: erste Steuerung
- 70: zweite Steuerung
- 72: dritte Steuerung
- 74: erste Klemmeinrichtung (innere Klemmeinrichtung)
- 76: zweite Klemmeinrichtung (äußere Klemmeinrichtung)
- 78: Innenwandbereich
- 80: Ringscheibenkörper
- 82: Ringflansch
- 84: Aussparung
- 85: Spitzenaufnahme
- 86: Klemmfinger
- 87: Haltering
- 88: Zahnradwelle
- 90: Stangenelement
- 92: Langloch
- 94: Befestigungsschraube
- 96: Spitze
- 98: Stufe
- 100: erste abgerundete Biegeform (Weiten)
- 102: zweite abgerundete Biegeform (Schränken)
- 104: dritte abgerundete Biegeform (Schränken)
- 106: Aufnahmenut der Klemmvorrichtung
- 108: erster Klemmbereich
- 110: zweiter Klemmbereich
- 112: radial bewegbares Segment
- 114: Grundkörper der Klemmvorrichtung
- 116: Ringscheibe
- 118: Antriebsgewinde
- 120: konusförmiges Antriebselement
- 122: ringförmige Vertiefung
- 124: Grundplatte
- 126: Grundplattenantriebseinrichtung
- 128: Antriebsplatte
- 130: Antriebsplattenantriebseinrichtung
- 132: Greifer
- 134: Greifereinheit
- 136: Verschiebeschiene
- 138: Greiferschlitten
- 140: erste Greifbacke
- 142: zweite Greifbacke
- 144: Führungsblock
- 146: erste Führungsnut
- 148: zweite Führungsnut
- 150: Kulissenstift
- 152: Kulisse
- 154: freies Ende einer Greifbacke
- 156: Vorsprung am freien Ende der Greifbacke
- 158: Klemmfläche
- 160a: erste Aufnahme- und Dreheinrichtung
- 160b: zweite Aufnahme- und Dreheinrichtung
- 160c: dritte Aufnahme- und Dreheinrichtung
- 160d: vierte Aufnahme- und Dreheinrichtung
- 160e: fünfte Aufnahme- und Dreheinrichtung
- 160f: sechste Aufnahme- und Dreheinrichtung
- 162a: erste Aufnahme- und Dreheinheit
- 162b: zweite Aufnahme- und Dreheinheit
- 162c: dritte Aufnahme- und Dreheinheit
- 162d: vierte Aufnahme- und Dreheinheit
- 162e: fünfte Aufnahme- und Dreheinheit
- 162f: sechste Aufnahme- und Dreheinheit
- 164a: erste Antriebseinrichtung
- 164b: zweite Antriebseinrichtung
- 164c: dritte Antriebseinrichtung
- 164d: vierte Antriebseinrichtung
- 164e: fünfte Antriebseinrichtung
- 164f: sechste Antriebseinrichtung
- 166a: erstes Antriebselement
- 166b: zweites Antriebselement
- 166c: drittes Antriebselement
- 166d: viertes Antriebselement
- 166e: fünftes Antriebselement
- 166f: sechstes Antriebselement
- 168a: erster Aktor
- 168b: zweiter Aktor
- 168c: dritter Aktor
- 168d: vierter Aktor
- 168e: fünfter Aktor
- 168f: sechster Aktor
- 170a: erste Ringtragscheibe
- 170b: zweite Ringtragscheibe
- 170c: dritte Ringtragscheibe
- 170d: vierte Ringtragscheibe
- 170e: fünfte Ringtragscheibe
- 170f: sechste Ringtragscheibe
- 172: Maschinengestell
- 174: Befestigungssäule
- 176: Aufnahmelöcher
- 180a: erste Schränkkrone
- 180b: zweite Schränkkrone
- 180c: dritte Schränkkrone
- 180d: vierte Schränkkrone
- 180e: fünfte Schränkkrone
- 180f: sechste Schränkkrone
- 182: Drahtendenaufnahme
- 184a: erster zylindermantelförmiger Bereich
- 184b: zweiter zylindermantelförmiger Bereich
- 184c: dritter zylindermantelförmiger Bereich
- 184d: vierter zylindermantelförmiger Bereich
- 184e: fünfter zylindermantelförmiger Bereich
- 184f: sechster zylindermantelförmiger Bereich
- 186a: erster Ringflansch
- 186b: zweiter Ringflansch
- 186c: dritter Ringflansch
- 186d: vierter Ringflansch
- 186e: fünfter Ringflansch
- 186f: sechster Ringflansch
- 188a: erste lösbare Verbindung
- 188b: zweite lösbare Verbindung
- 188c: dritte lösbare Verbindung
- 188d: vierte lösbare Verbindung
- 188e: fünfte lösbare Verbindung
- 188f: sechste lösbare Verbindung
- 190a: erste Verbindungsbrücke
- 190b: zweite Verbindungsbrücke
- 190c: dritte Verbindungsbrücke
- 190d: vierte Verbindungsbrücke
- 190e: fünfte Verbindungsbrücke
- 190f: sechste Verbindungsbrücke
- 192a: erstes abtriebsseitiges Brückenelement
- 192b: zweites abtriebsseitiges Brückenelement
- 192c: drittes abtriebsseitiges Brückenelement
- 192d: viertes abtriebsseitiges Brückenelement
- 192e: fünftes abtriebsseitiges Brückenelement
- 192f: sechstes abtriebsseitiges Brückenelement
- 194a: erstes antriebsseitiges Brückenelement
- 194b: zweites antriebsseitiges Brückenelement
- 194c: drittes antriebsseitiges Brückenelement
- 194d: viertes antriebsseitiges Brückenelement
- 194e: fünftes antriebsseitiges Brückenelement
- 194f: sechstes antriebsseitiges Brückenelement
- 196a: erstes Verbindungselement
- 196b: zweites Verbindungselement
- 196c: drittes Verbindungselement
- 196d: viertes Verbindungselement
- 196e: fünftes Verbindungselement
- 196f: sechstes Verbindungselement
- 198a: erster Durchlass
- 198b: zweiter Durchlass
- 198c: dritter Durchlass
- 198d: vierter Durchlass
- 198e: fünfter Durchlass
- 198f: sechster Durchlass
- 200: Längsnut
- 202: Einführschräge
- 204: Schränkkronenring
- 210: Radialabstützeinrichtung
- 210a: innere Radialabstützeinrichtung
- 210b: äußere Radialabstützeinrichtung
- 212: innere Hülse
- 214: äußere Hülse

## Patentansprüche

1. Drahtendenumformvorrichtung (14, 38) zur Verwendung bei einer Herstellung eines mit Spulen versehenen Bauteils einer elektrischen Maschine, zum Umformen von aus einem ringförmigen Gehäuse (18) des Bauteils vorstehenden Drahtenden (34, 34a-34d), die Drahtendenumformvorrichtung (14, 38) aufweisend eine Biegevorrichtung (54) zum Verbiegen von Drahtenden (34, 34a-34d) in einer Umfangsrichtung, eine Relativbewegungsvorrichtung (58) zum relativen Bewegen des Gehäuses (18) und der Biegevorrichtung (54) in einer axialen Richtung und eine Steuereinheit (62, 70), wobei die Biegevorrichtung (54) eine erste Aufnahme- und Dreheinrichtung (160a) mit einer ersten Aufnahme- und Dreheinheit (162a) zum Aufnehmen von ersten Drahtenden (34a) und zum Verdrehen der ersten Drahtenden (34a) zwecks Verbiegen in Umfangsrichtung und einem ersten Antriebselement (166a) zum Antreiben der ersten Aufnahme- und Dreheinheit (162a) und eine zweite Aufnahme- und Dreheinrichtung (160b) mit einer zweiten Aufnahme- und Dreheinheit (162b) zum Aufnehmen von zu den ersten Drahtenden (34a) radial versetzten zweiten Drahtenden (34b) und zum Verdrehen der zweiten Drahtenden (34b) zwecks Verbiegen in Umfangsrichtung und einem zweiten Antriebselement (166b) zum Antreiben der zweiten Aufnahme- und Dreheinheit (162b) aufweist, wobei die erste und zweite Aufnahme- und Dreheinheit (162a; 162b) relativ zueinander und zu dem Gehäuse (18) drehbar sind,
**dadurch gekennzeichnet, dass**
die erste und zweite Aufnahme- und Dreheinheit (162a; 162b) jedoch in axialer Richtung relativ zueinander stationär sind, und dass die Steuereinheit (62, 70) einen Computer aufweist, der ein Computerprogrammprodukt mit darin enthaltenen Programmanweisungen geladen hat, wobei das Computerprogrammprodukt ausgebildet ist, zum Biegen der Drahtenden (34a, 34b) die Relativbewegungsvorrichtung (58) zum Durchführen einer Relativbewegung zwischen Gehäuse (18) und der Biegevorrichtung (54) anzusteuern und währenddessen das erste Antriebselement (166a) sowie das zweite Antriebselement (166b) derart anzusteuern, dass das erste Antriebselement (166a) mit einem ersten Bewegungsprofil und das zweite Antriebselement (166b) mit einem zweiten Bewegungsprofil angetrieben werden, wobei das erste und das zweite Bewegungsprofil in Abhängigkeit von der Relativbewegung unterschiedlich ausgestaltet sind, so dass eine axiale Relativbewegung der jeweiligen sich drehenden Aufnahme- und Dreheinheit (162a, 162b) und darin eingreifender Endbereiche der Drahtenden (34a, 34b) vermieden wird.

2. Drahtendenumformvorrichtung (14, 38) nach Anspruch 1,
**dadurch gekennzeichnet,**
**dass** die unterschiedlichen Bewegungsprofile reine Drehbewegungsprofile sind.

3. Drahtendenumformvorrichtung (14, 38) nach Anspruch 2,
**dadurch gekennzeichnet,**
**dass** die Bewegungsprofile reine Drehbewegungen beinhalten, wobei als Bewegungsparameter einer oder mehrere der Parameter Drehrichtungen, Drehgeschwindigkeiten, Drehbeschleunigungen, Startpunkte, Zeiträume von Ruhe oder Bewegung, Endpunkte abhängig von der jeweiligen Biegesituation über der Zeit oder der axialen Relativstrecke unterschiedlich einstellbar sind.

4. Drahtendenumformvorrichtung (14, 38) nach einem der voranstehenden Ansprüche,
**dadurch gekennzeichnet,**
**dass** die erste Aufnahme- und Dreheinheit (162a) zum Aufnehmen und Verdrehen von länger hervorstehenden ersten Drahtenden (34a) und die zweite Aufnahme- und Dreheinheit (162b) zum Aufnehmen und Verdrehen von kürzer hervorstehenden zweiten Drahtenden (34b) ausgebildet ist und/oder dass das erste Bewegungsprofil einen früheren Start der Drehbewegung als das zweite Bewegungsprofil beinhaltet.

5. Drahtendenumformvorrichtung (14, 38) nach einem der voranstehenden Ansprüche,
**dadurch gekennzeichnet,**
**dass** die Biegevorrichtung (54) eine dritte Aufnahme- und Dreheinrichtung (160c) mit einer dritten Aufnahme- und Dreheinheit (162c) zum Aufnehmen von dritten relativ zu den ersten und zweiten Drahtenden (34a, 34b) radial versetzten dritten Drahtenden (34c) und zum Verdrehen der dritten Drahtenden (34c) zwecks Verbiegen in Umfangsrichtung und ein drittes Antriebselement (166c) zum Antreiben der dritten Aufnahme- und Dreheinheit (162c) aufweist, wobei die Steuereinheit (62, 70) ausgebildet ist, das dritte Antriebselement (166c) mit einem gegenüber dem ersten und zweiten Bewegungsprofil unterschiedlichen dritten Bewegungsprofil in Abhängigkeit von der Relativbewegung zwischen der Biegevorrichtung (54) und dem Gehäuse (18) anzutreiben.

6. Drahtendenumformvorrichtung (14, 38) nach Anspruch 5,
**dadurch gekennzeichnet,**
**dass** die Biegevorrichtung (54) eine vierte Aufnahme- und Dreheinrichtung (160a) mit einer vierten Aufnahme- und Dreheinheit (162a) zum Aufnehmen von vierten relativ zu den ersten bis dritten Drahtenden (34a, 34b, 34c) radial versetzten vierten Drahtenden (34d) und zum Verdrehen der vierten Drahtenden (34d) zwecks Verbiegen in Umfangsrichtung und ein viertes Antriebselement (166d) zum Antreiben der vierten Aufnahme- und Dreheinheit (162d) aufweist, wobei die Steuereinheit (62, 70) ausgebildet ist, das vierte Antriebselement (166d) mit einem gegenüber dem ersten bis dritten Bewegungsprofil unterschiedlichen vierten Bewegungsprofil in Abhängigkeit von der Relativbewegung zwischen der Biegevorrichtung (54) und dem Gehäuse (18) anzutreiben.

7. Drahtendenumformvorrichtung (14, 38) nach einem der voranstehenden Ansprüche,
**dadurch gekennzeichnet,**
**dass** die Steuereinheit (62, 70) ausgebildet ist, die Relativbewegungsvorrichtung (58) zum Durchführen der axialen Relativbewegung mit gleichmäßiger Geschwindigkeit anzusteuern und die Antriebselemente (166a-166f) derart anzusteuern, dass wenigstens eines, mehrere oder alle der Bewegungsprofile eine Drehbewegung mit sich verändernder Drehgeschwindigkeit bewirken.

8. Drahtendenumformvorrichtung (14, 38) nach einem der voranstehenden Ansprüche,
**dadurch gekennzeichnet,**
**dass** die Steuereinheit (62, 70) ausgebildet ist, die Relativbewegungsvorrichtung (58) zum Durchführen der axialen Relativbewegung mit gleichmäßiger Geschwindigkeit anzusteuern und die Antriebselemente (166a-166f) derart anzusteuern, dass wenigstens eines, mehrere oder alle der Bewegungsprofile eine Drehbewegung mit an unterschiedliche Längen der jeweils aufzunehmenden Drahtenden (34a-34d) angepassten Bewegungsparametern bewirken.

9. Drahtendenumformverfahren zum Umformen von aus einem ringförmigen Gehäuse (18) vorstehenden Drahtenden (34, 34a-34d) im Zuge einer Herstellung eines mit Spulen versehenen Bauteils einer elektrischen Maschine, das Drahtendenumformverfahren umfassend
a) Bereitstellen einer Biegevorrichtung (54), welche eine erste Aufnahme- und Dreheinrichtung (160a) sowie eine zweite Aufnahme- und Dreheinrichtung (160b) aufweist, wobei die erste Aufnahme- und Dreheinrichtung (160a) eine um eine Drehachse drehbare erste Aufnahme- und Dreheinheit (162a) zum Aufnehmen von ersten Drahtenden (34a) und ein erstes Antriebselement (166a) aufweist, wobei die zweite Aufnahme- und Dreheinrichtung (160b) eine um die Drehachse drehbare zweite Aufnahme- und Dreheinheit (162b) zum Aufnehmen von zu den ersten Drahtenden (34a) radial versetzten zweiten Drahtenden (34b) und ein zweites Antriebselement (166b) hat, wobei die Aufnahme- und Dreheinheiten (162a, 162b) relativ zueinander drehbar aber in axialer Richtung relativ zueinander stationär sind oder gehalten werden, und
b) Bereitstellen einer Steuereinheit (62, 70), die einen Computer aufweist, der ein Computerprogrammprodukt mit darin enthaltenen Programmanweisungen geladen hat,
c) Bereitstellen einer Relativbewegungsvorrichtung (58) und
d) relatives Bewegen des Gehäuses (18) und der Biegevorrichtung (54), um die ersten Drahtenden (34a) in die erste Aufnahme- und Dreheinheit (162a) und die zweiten Drahtenden (34b) in die zweite Aufnahme- und Dreheinheit (162b) einzuführen und um eine axiale Längenänderung von Drahtenden (34a, 34b) bei einer Verbiegung auszugleichen, wobei das relative Bewegen des Gehäuses (18) und der Biegevorrichtung (54) mittels der Relativbewegungsvorrichtung (58) erfolgt, die durch die Steuereinheit (62, 70) enthaltend den Computer mit dem Computerprogrammprodukt mit darin enthaltenen Programmanweisungen angesteuert wird,
während der Ausführung von d):
e) Drehen der ersten Aufnahme- und Dreheinheit (162a) relativ zu dem Gehäuse (18) zum Verbiegen der ersten Drahtenden (34a), nachdem Endbereiche der ersten Drahtenden (34a) in die erste Aufnahme- und Dreheinheit (162a) eingeführt worden sind, und Drehen der zweiten Aufnahme- und Dreheinheit (162b) relativ zu dem Gehäuse (18) zum Verbiegen der zweiten Drahtenden (34b), nachdem Endbereiche der zweiten Drahtenden (34b) in die zweite Aufnahme- und Dreheinheit (162b) eingeführt worden sind, wobei das Drehen der ersten und zweiten Aufnahme- und Dreheinheiten (162a, 162b) mittels Ansteuern des ersten Antriebselements (166a) sowie des zweiten Antriebselements (166b) durch die Steuereinheit (62, 70) enthaltend den Computer mit dem Computerprogrammprodukt mit darin enthaltenen Programmanweisungen mit unterschiedlichen Bewegungsprofilen abhängig von der axialen Relativbewegung und der axialen Länge der Drahtenden (34a, 34b) derart erfolgt, dass eine axiale Relativbewegung zwischen den Endbereichen der Drahtenden (34a, 34b) und der jeweiligen Aufnahme- und Dreheinheit (162a, 162b) vermieden wird.

10. Drahtendenumformverfahren nach Anspruch 9,
**dadurch gekennzeichnet,**
**dass** die unterschiedlichen Bewegungsprofile reine Drehbewegungsprofile sind, die reine Drehbewegungen beinhalten, wobei als Bewegungsparameter eines oder mehrere der Parameter Drehrichtungen, Drehgeschwindigkeiten, Drehbeschleunigungen, Startpunkte, Zeiträume von Ruhe oder Bewegung, Endpunkte abhängig von der jeweiligen Biegesituation über der Zeit oder der axialen Relativstrecke unterschiedlich eingestellt werden.

11. Drahtendenumformverfahren nach Anspruch 9 oder 10,
**dadurch gekennzeichnet**,
11.1 dass die axiale Relativbewegung in Schritt d) mit gleichmäßiger Geschwindigkeit und das Drehen in Schritt e) jeweils mit sich verändernder Drehgeschwindigkeit erfolgt und/oder
11.2 dass in Schritt a) die Biegevorrichtung (54) mit einer dritten Aufnahme- und Dreheinrichtung (160c) mit einer dritten Aufnahme- und Dreheinheit (162c) zum Aufnehmen von relativ zu den ersten und zweiten Drahtenden (34a, 34b) radial versetzten dritten Drahtenden (34c) und zum Verdrehen der dritten Drahtenden (34c) zwecks Verbiegen in Umfangsrichtung bereitgestellt wird, wobei die dritte Aufnahme- und Dreheinheit (162c) relativ zu der ersten und zweiten Aufnahme- und Dreheinheit (162a, 162b) um die Drehachse drehbar aber axial stationär ist oder gehalten wird und in Schritt e) nach dem Einführen von Endbereichen der dritten Drahtenden (34c) derart gedreht wird, dass eine Relativbewegung der Endbereiche in der dritten Aufnahme- und Dreheinheit (162c) vermieden wird; und - fakultativ -
11.3 dass in Schritt a) die Biegevorrichtung (54) mit einer vierten Aufnahme- und Dreheinrichtung (160d) mit einer vierten Aufnahme- und Dreheinheit (162d) zum Aufnehmen von relativ zu den ersten bis dritten Drahtenden (34a, 34b, 34c) radial versetzten vierten Drahtenden (34d) und zum Verdrehen der vierten Drahtenden (34d) zwecks Verbiegen in Umfangsrichtung bereitgestellt wird, wobei die vierte Aufnahme- und Dreheinheit (162d) relativ zu der ersten bis dritten Aufnahme- und Dreheinheit (162a-162c) um die Drehachse drehbar aber axial stationär ist oder gehalten wird und in Schritt e) nach dem Einführen von Endbereichen der vierten Drahtenden (34d) derart gedreht wird, dass eine Relativbewegung der Endbereiche in der vierten Aufnahme- und Dreheinheit (162d) vermieden wird.

12. Drahtendenumformverfahren nach Anspruch 11,
**dadurch gekennzeichnet,**
**dass** die Drehbewegungen der einzelnen Aufnahme- und Dreheinheiten (162a-162f) entsprechend bei einer unterschiedlichen Länge der jeweils zu verbiegenden Drahtenden (34a-34d) zu entsprechend unterschiedlichen Zeitpunkten gestartet werden und/oder
**dass** die Drehbewegungen aller Aufnahme- und Dreheinheiten (162a-162f) und die Relativbewegung zwischen Gehäuse (18) und Biegevorrichtung (54) zur gleichen Zeit beendet werden.

13. Drahtendenumformverfahren nach einem der Ansprüche 9 bis 12,
**gekennzeichnet durch**
e1) Festklemmen der Drahtenden (34a-34d) mittels einer zwischen dem Gehäuse (18) und der Biegevorrichtung (54) angeordneten Klemmvorrichtung (50) während des Umbiegens.

14. Drahtendenumformverfahren nach einem der Ansprüche 9 bis 13, **dadurch gekennzeichnet, dass** Schritt e) umfasst:
e2) radiales Abstützen wenigstens einiger der Drahtenden (34) auf einer radial inneren Seite und/oder auf einer radial äußeren Seite während des Verbiegens.

15. Computerprogrammprodukt mit Programmanweisungen, die, wenn sie in einen Computer der Steuereinheit (62, 70) der Drahtendenumformvorrichtung (14, 38) nach einem der Ansprüche 1 bis 8 geladen werden, die Drahtendenumformvorrichtung (14, 38) zum Durchführen des Drahtendenumformverfahrens gemäß einem der Ansprüche 9 bis 14 ansteuern.

## Claims

1. Wire end shaping device (14, 38) for use during production of a component, which is equipped with coils, of an electric machine, for shaping wire ends (34, 34a-34d) which protrude from an annular housing (18) of the component, the wire end shaping device (14, 38) comprising a bending device (54) for bending wire ends (34, 34a-34d) in a circumferential direction, a relative movement device (58) for moving the housing (18) and the bending device (54) in a relative manner in an axial direction, and a control unit (62, 70), wherein the bending device (54) has a first receiving and rotating means (160a) with a first receiving and rotating unit (162a) for receiving first wire ends (34a) and for turning the first wire ends (34a) for the purposes of bending in a circumferential direction and with a first drive element (166a) for driving the first receiving and rotating unit (162a), and a second receiving and rotating means (160b) with a second receiving and rotating unit (162b) for receiving second wire ends (34b), which are radially offset with respect to the first wire ends (34a), and for turning the second wire ends (34b) for the purpose of bending in the circumferential direction and with a second drive element (166b) for driving the second receiving and rotating unit (162b), wherein the first and second receiving and rotating unit (162a; 162b) are rotatable relative to one another and relative to the housing (18),
**characterized in that**
the first and second receiving and rotating unit (162a; 162b) are however stationary with respect to each other and that the control unit (62, 70) comprises a computer having a computer program product with program instructions loaded therein, wherein the computer program product is adapted, for bending the wire ends (34a, 34b), to control the relative movement device (58) for carrying out a relative movement between the housing (18) and the bending device (54) and during this time to control the first drive element (166a) and the second drive element (166b) in such a way that the first drive element (166a) is driven with a first movement profile and the second drive element (166b) is driven with a second movement profile, wherein the first and the second movement profile are configured to differ in a manner dependent on the relative movement such that an axial relative movement of the respective rotating receiving and rotating unit (162a, 162b) and end regions, engaging therein, of the wire ends (34a, 34b) is prevented.

2. Wire end shaping device (14, 38) according to claim 1,
**characterized**
**in that** the different movement profiles are pure rotational movement profiles.

3. Wire end shaping device (14, 38) according to claim 2,
**characterized**
**in that** the movement profiles contain pure rotational movements, wherein one or more of the parameters: rotational directions, rotational speeds, rotational accelerations, starting points, periods of rest or movement, end points as movement parameters can be set differently depending on the respective bending situation over time or the axial relative distance.

4. Wire end shaping device (14, 38) according to any one of the preceding claims,
**characterized**
**in that** the first receiving and rotating unit (162a) is designed for receiving and turning of longer protruding first wire ends (34a) and the second receiving and rotating unit (162b) is designed for receiving and turning of shorter protruding second wire ends (34b) and/or that the first movement profile involves an earlier start of the rotational movement than the second movement profile.

5. Wire end shaping device (14, 38) according to any one of the preceding claims,
**characterized**
**in that** the bending device (54) has a third receiving and rotating means (160c), with a third receiving and rotating unit (162c) for receiving third wire ends (34c), which are radially offset with respect to the first and second wire ends (34a, 34b), and for turning the third wire ends (34c) for the purpose of bending in the circumferential direction, and a third drive element (166c) for driving the third receiving and rotating unit (162c), wherein the control unit (62, 70) is designed to drive the third drive element (166c) with a third movement profile, which differs from the first and second movement profile, in a manner dependent on the relative movement between the bending device (54) and the housing (18).

6. Wire end shaping device (14, 38) according to claim 5,
**characterized**
**in that** the bending device (54) has a fourth receiving and rotating means (160a), with a fourth receiving and rotating unit (162a) for receiving fourth wire ends (34d), which are radially offset with respect to the first to third wire ends (34a, 34b, 34c), and for turning the fourth wire ends (34d) for the purpose of bending in the circumferential direction, and a fourth drive element (166d) for driving the fourth receiving and rotating unit (162d), wherein the control unit (62, 70) is designed to drive the fourth drive element (166d) with a fourth movement profile, which differs from the first to third movement profile, in a manner dependent on the relative movement between the bending device (54) and the housing (18).

7. Wire end shaping device (14, 38) according to any one of the preceding claims,
**characterized**
**in that** the control unit (62, 70) is adapted to control the relative movement device (58) for carrying out the axial relative movement with uniform speed and to control the drive elements (166a-166f) in such a way that at least one, several or all of the movement profiles cause a rotational movement with changing rotational speed.

8. Wire end shaping device (14, 38) according to any one of the preceding claims,
**characterized**
**in that** the control unit (62, 70) is adapted to control the relative movement device (58) for carrying out the axial relative movement with uniform speed and to control the drive elements (166a-166f) in such a way that at least one, several or all of the movement profiles cause a rotational movement with movement parameters adapted to different lengths of the wire ends (34a-34d) to be received in each case.

9. Wire end shaping method for shaping wire ends (34, 34a-34d) protruding from an annular housing (18) in the course of manufacturing a component, which is provided with a coil, of an electrical machine, the wire end shaping method comprising:
a) providing a bending device (54) which has a first receiving and rotating means (160a) and a second receiving and rotating means (160b), wherein the first receiving and rotating means (160a) has a first receiving and rotating unit (162a) rotatable about an axis of rotation for receiving first wire ends (34a) and a first drive element (166a), wherein the second receiving and rotating means (160b) has a second receiving and rotating unit (162b) rotatable about the axis of rotation for receiving second wire ends (34b) radially offset relative to the first wire ends and a second drive element (166b), wherein the receiving and rotating units (162a, 162b) are rotatable relative to each other, but a are stationary or kept stationary with respect to each other in the axial direction, and
b) providing a control unit (62, 70) including a computer having loaded therein a computer program product containing program instructions,
c) providing a relative movement device (58) and
d) moving the housing (18) and the bending device (54) in a relative manner in order to introduce the first wire ends (34a) into the first receiving and rotating unit (162a) and the second wire ends (34b) into the second receiving and rotating unit (162b) and in order to compensate an axial change in length of wire ends (34a, 34b) during a bending operation, wherein the relative movement of the housing (18) and the bending device (54) is carried out by means of the relative movement device (58) which is controlled by the control unit (62, 70) comprising the computer having the computer program product with the program instructions contained therein,
while executing d):
e) rotating the first receiving and rotating unit (162a) relative to the housing (18) in order to bend the first wire ends (34a) after end regions of the first wire ends (34a) have been introduced into the first receiving and rotating unit (162a), and rotating the second receiving and rotating unit (162b) relative to the housing (18) in order to bend the second wire ends (34b) after end regions of the second wire ends (34b) have been introduced into the second receiving and rotating unit (162b), wherein the rotation of the first and second receiving and rotating units (162a, 162b) is performed by controlling the first drive element (166a) and the second drive element (166b) through the control unit (62, 70) comprising the computer having the computer program product containing program instructions with different movement profiles in a manner dependent on the axial relative movement and on the axial length of the wire ends (34a, 34b) such that an axial relative movement between the end regions of the wire ends (34a, 34b) and the respective receiving and rotating unit (162a, 162b) is prevented.

10. Wire end shaping method according to claim 9,
**characterized**
**in that** the different movement profiles are pure rotational movement profiles involving pure rotational movements, wherein one or more of the parameters: rotational directions, rotational speeds, rotational accelerations, starting points, periods of rest or movement, end points as movement parameters are set differently depending on the respective bending situation over time or the axial relative distance.

11. Wire end shaping method according to claim 9 or 10,
characterized
11.1 in that the axial relative movement in step d) is performed with a uniform speed and the rotation in step e) is performed in each case with a varying rotational speed, and/or
11.2 in that, in step a), the bending device (54) with a third receiving and rotating unit (162c) for receiving third wire ends (34c), which are radially offset relative to the first and second wire ends (34a, 34b), and for turning the third wire ends (34c) for the purpose of bending in the circumferential direction is provided, wherein the third receiving and rotating unit (162c) is rotatable relative to the first and second receiving and rotating unit (162a, 162b) about the axis of rotation, but is or is kept axially stationary and, in step e), after the introduction of end regions of the third wire ends (34c), is rotated such that a relative movement of the end regions in the third receiving and rotating unit (162c) is prevented; and/or - optionally -
11.3 in that, in step a), the bending device (54) with a fourth receiving and rotating means (160d) with a fourth receiving and rotating unit (162d) for receiving fourth wire ends (34d), which are radially offset relative to the first to third wire ends (34a, 34b, 34c), and for turning the fourth wire ends (34d) for the purpose of bending in the circumferential direction is provided, wherein the fourth receiving and rotating unit (162d) is rotatable relative to the first to third receiving and rotating unit (162a-162c) about the axis of rotation, but is or is kept axially stationary and, in step c), after the introduction of end regions of the fourth wire ends (34d), is rotated such that a relative movement of the end regions in the fourth receiving and rotating unit (162d) is prevented.

12. Wire end shaping method according to claim 11,
**characterized**
**in that** the rotational movements of the individual receiving and rotating units (162a-162f) are correspondingly started at correspondingly different points in time in the case of different lengths of the wire ends (34a-34d) to be bent in each case, and/or
**in that** the rotational movements of all receiving and rotating units (162a-162f) and the relative movement between housing (18) and bending device (54) are finished at the same time.

13. Wire end shaping method according to any one of claims 9 to 12, **characterized by**
e1) fixedly clamping the wire ends (34a-34d) by means of a clamping device arranged between the housing (18) and the bending device (54) during the bending process.

14. Wire end shaping method according to any one of claims 9 to 13, **characterized in that** step e) comprises:
e2) radially supporting at least some of the wire ends (34) on a radially inner side and/or on a radially outer side during the bending process.

15. Computer program product with program instructions which when loaded to a computer of the control unit (62, 70) of the wire end shaping device (14, 38) according to any one of claims 1 to 8 control the wire end shaping device (14, 38) for carrying out the wire end shaping method according to any one of claims 9 to 14.

## Revendications

1. Dispositif pour modifier la forme des extrémités de fil (14, 38) à utiliser pendant la production d'un composant équipé de bobines d'une machine électrique, pour modifier la forme des extrémités de fils (34, 34a-34d) qui dépassent d'un boîtier annulaire (18) du composant, le dispositif pour modifier la forme des extrémités de fils (14, 38) comprenant un dispositif de pliage (54) pour plier les extrémités de fils (34, 34a-34d) dans une direction circonférentielle, un dispositif de mouvement relatif (58) pour déplacer le boîtier (18) et le dispositif de pliage (54) de manière relative dans une direction axiale, et une unité de commande (62, 70), dans lequel le dispositif de pliage (54) comporte un premier moyen de réception et de rotation (160a) avec une première unité de réception et de rotation (162a) pour recevoir les premières extrémités de fil (34a) et pour tourner les premières extrémités de fil (34a) dans le but de les plier dans une direction circonférentielle et avec un premier élément d'entraînement (166a) pour entraîner la première unité de réception et de rotation (162a), et un deuxième moyen de réception et de rotation (160b) avec une deuxième unité de réception et de rotation (162b) pour recevoir les deuxièmes extrémités de fil (34b), qui sont radialement décalées par rapport aux premières extrémités de fil (34a), et pour tourner les deuxièmes extrémités de fil (34b) dans le but de les plier dans la direction circonférentielle et avec un deuxième élément d'entraînement (166b) pour entraîner la deuxième unité de réception et de rotation (162b), dans lequel la première et la deuxième unité de réception et de rotation (162a; 162b) peuvent tourner l'une par rapport à l'autre et par rapport au boîtier (18),
**caractérisé en ce que**
la première et la deuxième unité de réception et de rotation (162a; 162b) sont cependant fixes l'une par rapport à l'autre et que l'unité de commande (62, 70) comprend un ordinateur ayant un produit de programme informatique contenant des instructions de programme, dans lequel le produit de programme informatique est adapté, pour plier les extrémités du fil (34a, 34b), à commander le dispositif de mouvement relatif (58) pour effectuer un mouvement relatif entre le boîtier (18) et le dispositif de pliage (54) et, pendant ce temps, à commander le premier élément d'entraînement (166a) et le second élément d'entraînement (166b) de manière à ce que le premier élément d'entraînement (166a) soit entraîné avec un premier profil de mouvement et que le second élément d'entraînement (166b) soit entraîné avec un second profil de mouvement, le premier et le second profil de mouvement étant configurés pour différer d'une manière qui dépend du mouvement relatif, de sorte qu'un mouvement relatif axial de l'unité de réception et de rotation respective tournante (162a, 162b) et des régions d'extrémité s'y engageant des extrémités de fil (34a, 34b) est empêché.

2. Dispositif pour modifier la forme des extrémités de fil (14, 38) selon la revendication 1,
**caractérisé**
**en ce que** les différents profils de mouvement sont des profils de mouvement de rotation purs.

3. Dispositif pour modifier la forme des extrémités de fil (14, 38) selon la revendication 2,
**caractérisé**
**en ce que** les profils de mouvement contiennent des mouvements de rotation purs, dans lesquels un ou plusieurs des paramètres: directions de rotation,
vitesses de rotation, accélérations de rotation, points de départ, périodes de repos ou de mouvement, points de fin en tant que paramètres de mouvement peuvent être réglés différemment en fonction de la situation de pliage respective dans le temps ou de la distance relative axiale.

4. Dispositif pour modifier la forme des extrémités de fil (14, 38) selon l'une quelconque des revendications précédentes,
**caractérisé**
**en ce que** la première unité de réception et de rotation (162a) est conçue pour recevoir et tourner les premières extrémités de fil (34a) plus longues et la deuxième unité de réception et de rotation (162b) est conçue pour recevoir et tourner les deuxièmes extrémités de fil (34b) plus courtes et/ou en ce que le premier profil de mouvement implique un début de mouvement de rotation plus précoce que le deuxième profil de mouvement.

5. Dispositif pour modifier la forme des extrémités de fil (14, 38) selon l'une quelconque des revendications précédentes,
**caractérisé**
**en ce que** le dispositif de pliage (54) comporte un troisième moyen de réception et de rotation (160c), avec une troisième unité de réception et de rotation (162c) pour recevoir les troisièmes extrémités de fil (34c), qui sont décalées radialement par rapport aux première et deuxième extrémités de fil (34a, 34b), et pour tourner les troisièmes extrémités de fil (34c) dans le but de les plier dans la direction circonférentielle, et un troisième élément d'entraînement (166c) pour entraîner la troisième unité de réception et de rotation (162c), dans lequel l'unité de commande (62, 70) est conçue pour entraîner le troisième élément d'entraînement (166c) avec un troisième profil de mouvement, qui diffère du premier et du deuxième profil de mouvement, d'une manière qui dépend du mouvement relatif entre le dispositif de pliage (54) et le boîtier (18).

6. Dispositif pour modifier la forme des extrémités de fils (14, 38) selon la revendication 5,
**caractérisé**
**en ce que** le dispositif de pliage (54) comporte un quatrième moyen de réception et de rotation (160a), avec une quatrième unité de réception et de rotation (162a) pour recevoir les quatrièmes extrémités de fil (34d), qui sont décalées radialement par rapport aux premières à troisièmes extrémités de fil (34a, 34b, 34c), et pour tourner les quatrièmes extrémités de fil (34d) dans le but de les plier dans la direction circonférentielle, et un quatrième élément d'entraînement (166d) pour entraîner la quatrième unité de réception et de rotation (162d), dans lequel l'unité de commande (62, 70) est conçue pour entraîner le quatrième élément d'entraînement (166d) avec un quatrième profil de mouvement, qui diffère du premier au troisième profil de mouvement, d'une manière qui dépend du mouvement relatif entre le dispositif de pliage (54) et le boîtier (18).

7. Dispositif pour modifier la forme des extrémités de fil (14, 38) selon l'une quelconque des revendications précédentes,
**caractérisé**
**en ce que** l'unité de commande (62, 70) est adaptée pour commander le dispositif de mouvement relatif (58) afin d'effectuer le mouvement relatif axial avec une vitesse uniforme et pour commander les éléments d'entraînement (166a-166f) de manière à ce qu'au moins un, plusieurs ou tous les profils de mouvement provoquent un mouvement de rotation avec une vitesse de rotation variable.

8. Dispositif de mise en forme de l'extrémité du fil (14, 38) selon l'une quelconque des revendications précédentes,
**caractérisé**
**en ce que** l'unité de commande (62, 70) est conçu pour modifier la forme des extrémités de fils pour commander le dispositif de mouvement relatif (58) pour effectuer le mouvement relatif axial avec une vitesse uniforme et pour commander les éléments d'entraînement (166a-166f) de telle sorte qu'au moins un, plusieurs ou tous les profils de mouvement provoquent un mouvement de rotation avec des paramètres de mouvement adaptés aux différentes longueurs des extrémités de fil (34a-34d) à recevoir dans chaque cas.

9. Procédé pour modifier la forme des extrémités de fil (34, 34a-34d) qui dépassent d'un boîtier annulaire (18) au cours de la fabrication d'un composant pourvu d'une bobine d'une machine électrique, le procédé pour modifier la forme des d'extrémités de fils comprenant:
a) fournir un dispositif de pliage (54) qui a un premier moyen de réception et de rotation (160a) et un second moyen de réception et de rotation (160b), dans lequel le premier moyen de réception et de rotation (160a) a une première unité de réception et de rotation (162a) rotative autour d'un axe de rotation pour recevoir les premières extrémités de fil (34a) et un premier élément d'entraînement (166a), dans lequel le second moyen de réception et de rotation (160b) a une seconde unité de réception et de rotation (162b) rotative autour de l'axe de rotation pour recevoir les secondes extrémités de fil (34b) décalées radialement par rapport aux premières extrémités de fil et un second élément d'entraînement (166b), dans lequel les unités de réception et de rotation (162a, 162b) sont rotatives l'une par rapport à l'autre, mais sont stationnaires ou maintenues stationnaires l'une par rapport à l'autre dans la direction axiale, et
b) fournir une unité de commande (62, 70) comprenant un ordinateur dans lequel est chargé un produit de programme informatique contenant des instructions de programme,
c) fournir un dispositif de mouvement relatif (58) et
d) déplacer le boîtier (18) et le dispositif de pliage (54) de manière relative afin d'introduire les premières extrémités de fil (34a) dans la première unité de réception et de rotation (162a) et les secondes extrémités de fil (34b) dans la seconde unité de réception et de rotation (162b) et afin de compenser un changement axial de longueur des extrémités de fil (34a, 34b) au cours d'une opération de pliage, le mouvement relatif du boîtier (18) et du dispositif de pliage (54) étant effectué au moyen du dispositif de mouvement relatif (58) qui est commandé par l'unité de commande (62, 70) comprenant l'ordinateur ayant le produit de programme d'ordinateur avec les instructions de programme qu'il contient,
pendant l'exécution de d):
e) faire tourner la première unité de réception et de rotation (162a) par rapport au boîtier (18) afin de plier les premières extrémités de fil (34a) après que les zones d'extrémité des premières extrémités de fil (34a) ont été introduites dans la première unité de réception et de rotation (162a), et faire tourner la deuxième unité de réception et de rotation (162b) par rapport au boîtier (18) afin de plier les deuxièmes extrémités de fil (34b) après que les zones d'extrémité des deuxièmes extrémités de fil (34b) ont été introduites dans la deuxième unité de réception et de rotation (162b), la rotation des premières et deuxièmes unités de réception et de rotation (162a, 162b) étant effectuée au moyen d'une commande du premier élément d'entraînement (166a) et du second élément d'entraînement (166b) par l'unité de commande (62, 70) comprenant l'ordinateur ayant le produit de programme informatique contenant des instructions de programme avec différents profils de mouvement d'une manière dépendant du mouvement relatif axial et de la longueur axiale des extrémités de fil (34a, 34b) de sorte qu'un mouvement relatif axial entre les zones d'extrémité des extrémités de fil (34a, 34b) et l'unité de réception et de rotation respective (162a, 162b) est empêché.

10. Procédé pour modifier la forme des extrémités de fil selon la revendication 9,
**caractérisé**
**en ce que** les différents profils de mouvement sont des profils de mouvement de rotation pure impliquant des mouvements de rotation pure, dans lesquels un ou plusieurs des paramètres : directions de rotation, vitesses de rotation, accélérations de rotation, points de départ, périodes de repos ou de mouvement, points de fin en tant que paramètres de mouvement sont réglés différemment en fonction de la situation de flexion respective dans le temps ou de la distance relative axiale.

11. Procédé pour modifier la forme des extrémités de fil selon la revendication 9 ou 10,
caractérisé
11.1 en ce que le mouvement relatif axial à l'étape d) est effectué à une vitesse uniforme et que la rotation à l'étape e) est effectuée dans chaque cas avec une vitesse de rotation variable, et/ou
11. 2 en ce que, à l'étape a), le dispositif de pliage (54) est doté d'une troisième unité de réception et de rotation (162c) pour recevoir les troisièmes extrémités de fil (34c), qui sont décalées radialement par rapport aux première et deuxième extrémités de fil (34a, 34b), et pour tourner les troisièmes extrémités de fil (34c) à des fins de pliage dans la direction circonférentielle, dans lequel la troisième unité de réception et de rotation (162c) peut tourner autour de l'axe de rotation par rapport aux première et deuxième unités de réception et de rotation (162a, 162b), mais est ou est maintenue axialement stationnaire et, à l'étape e), après l'introduction des zones d'extrémité des troisièmes extrémités de fil (34c), est tournée de manière à empêcher un mouvement relatif des zones d'extrémité dans la troisième unité de réception et de rotation (162c); et/ou - optionnellement -
11.3 en ce que, à l'étape a), il est fourni le dispositif de pliage (54) comporte un quatrième moyen de réception et de rotation (160d) avec une quatrième unité de réception et de rotation (162d) pour recevoir les quatrièmes extrémités de fil (34d), qui sont décalées radialement par rapport aux première à troisième extrémités de fil (34a, 34b, 34c), et pour tourner les quatrièmes extrémités de fil (34d) à des fins de pliage dans la direction circonférentielle, dans lequel la quatrième unité de réception et de rotation (162d) peut tourner autour de l'axe de rotation par rapport à la première à la troisième unité de réception et de rotation (162a-162c), mais est ou est maintenue axialement stationnaire et, à l'étape c), après l'introduction des zones d'extrémité des quatrièmes extrémités de fil (34d), est tournée de manière à empêcher un mouvement relatif des zones d'extrémité dans la quatrième unité de réception et de rotation (162d).

12. Procédé pour modifier la forme des extrémités de fil selon la revendication 11,
**caractérisé**
**en ce que** les mouvements de rotation des différentes unités de réception et de rotation (162a-162f) sont démarrés de manière correspondante à des moments différents en cas de longueurs différentes des extrémités de fil (34a-34d) à plier dans chaque cas, et/ou
**en ce que** les mouvements de rotation de toutes les unités de réception et de rotation (162a-162f) et le mouvement relatif entre le boîtier (18) et le dispositif de pliage (54) sont terminés en même temps.

13. Procédé pour modifier la forme des extrémités de fil selon l'une quelconque des revendications 9 à 12,
**caractérisé par**
e1) le serrage fixe des extrémités de fil (34a-34d) au moyen d'un dispositif de serrage disposé entre le boîtier (18) et le dispositif de pliage (54) pendant le processus de pliage.

14. Procédé pour modifier la forme des extrémités de fil selon l'une quelconque des revendications 9 à 13, **caractérisé en ce que** l'étape e) comprend:
e2) soutenir radialement au moins certaines des extrémités de fil (34) sur un côté radialement intérieur et/ou sur un côté radialement extérieur pendant le processus de pliage.

15. Produit de programme d'ordinateur avec des instructions de programme qui, lorsqu'elles sont chargées dans un ordinateur de l'unité de commande (62, 70) du dispositif pour modifier la forme des extrémités de fil (14, 38) selon l'une quelconque des revendications 1 à 8, commandent le dispositif pour modifier la forme des extrémités de fil (14, 38) pour exécuter le procédé pour modifier la forme des extrémités de fil selon l'une quelconque des revendications 9 à 14.
